# EUROPEAN PATENT APPLICATION

(11) **EP 4 776 691 A1**
(43) Date of publication of application: **15.07.2026**
(21) Application number: 24861606.2
(22) Date of filing: 21.06.2024
(51) Int. Cl.: H04W 36/08

(54) **CELL MANAGEMENT METHOD, APPARATUS, AND DEVICE**

(30) Priority: 06.09.2023 CN 202311145581
(71) Applicant: Datang Mobile Communications Equipment Co., Ltd., Beijing 100085 (CN)
(72) Inventor: XU, Meng, Beijing 100085 (CN); ZHANG, Bufang, Beijing 100085 (CN); LIANG, Jing, Beijing 100085 (CN)
(74) Representative: Studio Torta S.p.A.
(86) International application number: PCT/CN2024/100516
(87) International publication number: WO 2025/050760

(57) **Abstract**

This disclosure provides a cell management method, apparatus, and device. The cell management method includes: obtaining at least one execution condition; evaluating whether there is at least one target candidate cell that fulfills the at least one execution condition; and in a case that there is the at least one target candidate cell that fulfills the at least one execution condition, determining a target cell, and/or determining a target beam of the target cell; wherein the at least one execution condition is at least one beam-level execution condition configured based on layer 1 measurements.

## Description

### CROSS-REFERENCE TO RELATED APPLICATION

This application claims priority to Chinese Patent Application No. 202311145581.3, filed on September 6, 2023, entitled "Cell Management Method, Apparatus, and Device", disclosure of which is incorporated herein by reference in its entirety.

### TECHNICAL FIELD

This disclosure relates to the field of communication technology, and in particular to a cell management method, apparatus and device.

### BACKGROUND

Mobility Enhancement Project of Release 18 (R18) studied the Layer 1 (L1)/ Layer 2 (L2)-Triggered Mobility (L1L2 Mob, or LTM for short) mechanism. That is, the base station notifies, by sending an L1/L2 command, the user equipment (UE) to perform a serving cell change, and makes decision on cell change or timing advance (TA) acquisition based on the L1 measurement results reported by the UE. However, R18 does not specify how to implement UE-triggered LTM, and how the UE makes cell management decisions (such as cell changes) is still unclear.

As stated above, the mobile enhancement project of R18 supports an LTM mechanism based on network decision, but does not specify an LTM mechanism based on UE decision, thus failing to support a scheme that allows the UE to determine whether to perform cell management.

### SUMMARY

The purpose of this disclosure is to provide a cell management method, apparatus, and device to solve the problem that related technologies cannot support a solution that enables a UE to determine whether to perform cell management.

To address the aforementioned technical problems, this disclosure provides a cell management method performed by a terminal, including:
obtaining at least one execution condition;
evaluating whether there is at least one target candidate cell that fulfills the at least one execution condition; and
in a case that there is the at least one target candidate cell that fulfills the at least one execution condition, determining a target cell, and/or determining a target beam of the target cell;
wherein the at least one execution condition is at least one beam-level execution condition configured based on layer 1 measurements.

In some embodiments, the evaluating whether there is at least one target candidate cell that fulfills the at least one execution condition includes:
determining that a candidate cell is the target candidate cell that fulfills the execution condition in a case that a first evaluation condition is fulfilled;
wherein the first evaluation condition includes at least one of the following:
   beam signal quality of a serving cell is less than a first preset threshold and a first preset condition is fulfilled; or, the beam signal quality of the serving cell is less than or equal to the first preset threshold and the first preset condition is fulfilled;
   beam signal quality of a candidate cell is greater than a second preset threshold and a second preset condition is fulfilled; or, the beam signal quality of the candidate cell is greater than or equal to the second preset threshold and the second preset condition is fulfilled;
   the beam signal quality of the candidate cell is better than the beam signal quality of the serving cell and a difference between the beam signal quality of the candidate cell and the beam signal quality of the serving cell is at least greater than a third preset threshold and a third preset condition is fulfilled; or, the beam signal quality of the candidate cell is better than the beam signal quality of the serving cell and the difference between the beam signal quality of the candidate cell and the beam signal quality of the serving cell is at least greater than or equal to the third preset threshold and the third preset condition is fulfilled;
   the beam signal quality of the serving cell is greater than a fourth preset threshold and a fourth preset condition is fulfilled; or, the beam signal quality of the serving cell is greater than or equal to the fourth preset threshold and the fourth preset condition is fulfilled; or
   the beam signal quality of the candidate cell is less than a fifth preset threshold and a fifth preset condition is fulfilled; or, the beam signal quality of the candidate cell is less than or equal to the fifth preset threshold and the fifth preset condition is fulfilled.

In some embodiments, the evaluating whether there is at least one target candidate cell that fulfills the at least one execution condition includes:
determining that a candidate cell does not fulfill the execution condition in a case that a second evaluation condition is fulfilled;
wherein the second evaluation condition includes at least one of the following:
   beam signal quality of a serving cell is greater than a sixth preset threshold and a sixth preset condition is fulfilled;
   beam signal quality of a candidate cell is less than a seventh preset threshold and a seventh preset condition is fulfilled;
   the beam signal quality of the candidate cell is better than the beam signal quality of the serving cell and a difference between the beam signal quality of the candidate cell and the beam signal quality of the serving cell is at least less than an eighth preset threshold and an eighth preset condition is fulfilled;
   the beam signal quality of the serving cell is less than a ninth preset threshold and a ninth preset condition is fulfilled; or
   the beam signal quality of the candidate cell is greater than a tenth preset threshold and a tenth preset condition is fulfilled.

In some embodiments, the method further includes:
obtaining configuration information;
wherein the configuration information includes at least one of the following:
   preset time duration;
   preset offset value;
   preset threshold;
   preset number of beams;
   preset count;
   preset probability;
   count of statistics; or
   cell measurement configuration information.

In some embodiments, beam signal quality of a cell is the beam signal quality of the serving cell or the beam signal quality of the candidate cell;
the beam signal quality of the cell includes at least one of the following:
a signal quality of a beam with the best signal quality within a cell;
a beam signal quality resulting from filtering signal qualities of n beams of the cell according to a first preset rule; the n beams are the highest-ranked n beams in signal quality;
a beam signal quality resulting from filtering, according to a second preset rule, signal qualities of beams of the cell that are higher than an eleventh preset threshold;
a beam signal quality resulting from filtering signal qualities of a first number of first beams of the cell according to a third preset rule; the first number is less than or equal to m, and the first beam has a signal quality higher than a twelfth preset threshold;
a signal quality of any beam of the cell;
a beam signal quality resulting from filtering, according to a seventh preset rule, signal qualities of all beams of the cell that are measured by the terminal; or
a signal quality of a beam with the worst signal quality among second beams of the cell; the second beam has a signal quality higher than a thirteenth preset threshold.

In some embodiments, the determining the target cell includes:
determining the target cell from the at least one target candidate cell according to a first manner;
wherein the first manner includes at least one of the following:
   selecting the target cell up to the terminal implementation;
   selecting a cell where a beam with the highest signal quality is located as the target cell;
   selecting a cell with the most beams that fulfill the at least one execution condition as the target cell;
   selecting a cell with the highest signal quality resulting from filtering beam signal qualities according to a fourth preset rule as the target cell;
   selecting at least one of the target candidate cells as the target cell; or
   selecting a cell with the best cell-level measurement result based on Layer 3 measurement as the target cell.

In some embodiments, the determining the target beam of the target cell includes:
determining the target beam of the target cell according to a second manner;
wherein the second manner includes at least one of the following:
   selecting a beam with the best signal quality of the target cell as the target beam;
   selecting, among beams of the target cell, a beam with the best signal quality as the target beam, wherein a signal quality of a beam is obtained by filtering, according to a fifth preset rule, signal qualities of the beam within a first preset time duration;
   selecting, among beams of the target cell, a beam with the best signal quality as the target beam, wherein a signal quality of a beam is obtained by filtering, according to a sixth preset rule, signal qualities of the beam of a first preset count;
   selecting, among beams of the target cell, a beam that fulfills the at least one execution condition and is the first to arrive at the terminal as the target beam;
   selecting, among beams of the target cell, a target beam up to the terminal implementation;
   selecting, among beams of the target cell, a beam that fulfills the at least one execution condition and is associated with a pre-configured uplink resource as the target beam;
   selecting, among beams of the target cell, a beam that fulfills the at least one execution condition, is associated with a pre-configured uplink resource and is the first to arrive at the terminal as the target beam; or
   selecting, among beams of the target cell, at least one beam that fulfills the at least one execution condition as the target beam.

In some embodiments, the method further includes:
managing the target cell in a third manner;
wherein the third manner includes at least one of the following:
   triggering a random access procedure to the target cell;
   transmitting uplink data on a pre-configured uplink resource;
   monitoring a physical downlink control channel (PDCCH) in the target cell;
   transmitting uplink data on a pre-configured uplink resource in case of a valid timing advance (TA) value of the target cell is obtained;
   monitoring a PDCCH according to a target transmission configuration indicator (TCI) or a target beam index in case of a valid TA value of the target cell is obtained;
   triggering a random access procedure to the target cell in case of a valid TA value of the target cell is not obtained;
   sending first indication to a network device before accessing the target cell, the first indication being used for indicating information of the target cell and/or target beam;
   sending second indication to a network device before accessing the target cell in case of a valid TA value of the target cell is obtained, the second indication being used for indicating information of the target cell and/or target beam; or
   determining to obtain a TA value of the target cell.

In some embodiments, the at least one execution condition is configured per cell, or is configured for all cells, or is configured per cell group.

In some embodiments, the evaluating whether there is at least one target candidate cell that fulfills the at least one execution condition includes:
determining at least one to-be-evaluated candidate cell;
determining whether there is at least one target candidate cell that fulfills the at least one execution condition in the at least one to-be-evaluated candidate cell;
wherein the to-be-evaluated candidate cell includes at least one of the following:
   candidate cell for which a valid TA value is obtained by the terminal;
   candidate cell configured with a pre-configured uplink resource for the terminal to transmit first uplink data;
   candidate cell to be evaluated indicated by the network configuration indication;
   all candidate cells configured by network; or
   all candidate cells associated with the at least one execution condition.

In some embodiments, the evaluating whether there is at least one target candidate cell that fulfills the at least one execution condition includes:
evaluating whether there is at least one target candidate cell that fulfills the execution condition according to a fourth manner;
wherein the fourth manner includes at least one of the following:
   media access control (MAC) entity of the terminal performs the evaluation based on information reported by physical layer of the terminal;
   the physical layer of the terminal performs the evaluation; or
   radio resource control (RRC) layer of the terminal performs the evaluation based on information reported by lower layer of the terminal.

This disclosure also provides a cell management method, performed by a network device, including:
sending at least one execution condition;
wherein the at least one execution condition is at least one beam-level execution condition configured based on layer 1 measurements.

In some embodiments, the method further includes:
transmitting a first evaluation condition to a terminal; wherein the first evaluation condition is used by the terminal to determine at least one target candidate cell that fulfills the execution condition;
wherein the first evaluation condition includes at least one of the following:
   beam signal quality of a serving cell is less than a first preset threshold and a first preset condition is fulfilled; or, the beam signal quality of the serving cell is less than or equal to the first preset threshold and the first preset condition is fulfilled;
   beam signal quality of a candidate cell is greater than a second preset threshold and a second preset condition is fulfilled; or, the beam signal quality of the candidate cell is greater than or equal to the second preset threshold and the second preset condition is fulfilled;
   the beam signal quality of the candidate cell is better than the beam signal quality of the serving cell and a difference between the beam signal quality of the candidate cell and the beam signal quality of the serving cell is at least greater than a third preset threshold and a third preset condition is fulfilled; or, the beam signal quality of the candidate cell is better than the beam signal quality of the serving cell and the difference between the beam signal quality of the candidate cell and the beam signal quality of the serving cell is at least greater than or equal to the third preset threshold and the third preset condition is fulfilled;
   the beam signal quality of the serving cell is greater than a fourth preset threshold and a fourth preset condition is fulfilled; or, the beam signal quality of the serving cell is greater than or equal to the fourth preset threshold and the fourth preset condition is fulfilled; or
   the beam signal quality of the candidate cell is less than a fifth preset threshold and a fifth preset condition is fulfilled; or, the beam signal quality of the candidate cell is less than or equal to the fifth preset threshold and the fifth preset condition is fulfilled.

In some embodiments, the method further includes:
transmitting a second evaluation condition to a terminal; wherein the second evaluation condition is used by the terminal to determine at least one target candidate cell that does not fulfill the execution condition;
wherein the second evaluation condition includes at least one of the following:
   beam signal quality of a serving cell is greater than a sixth preset threshold and a sixth preset condition is fulfilled;
   beam signal quality of a candidate cell is less than a seventh preset threshold and a seventh preset condition is fulfilled;
   the beam signal quality of the candidate cell is better than the beam signal quality of the serving cell and a difference between the beam signal quality of the candidate cell and the beam signal quality of the serving cell is at least less than an eighth preset threshold and an eighth preset condition is fulfilled;
   the beam signal quality of the serving cell is less than a ninth preset threshold and a ninth preset condition is fulfilled; or
   the beam signal quality of the candidate cell is greater than a tenth preset threshold and a tenth preset condition is fulfilled.

In some embodiments, the method further includes:
transmitting configuration information;
wherein the configuration information includes at least one of the following:
   preset time duration;
   preset offset value;
   preset threshold;
   preset number of beams;
   preset count;
   preset probability;
   count of statistics; or
   cell measurement configuration information.

In some embodiments, beam signal quality of a cell is the beam signal quality of the serving cell or the beam signal quality of the candidate cell;
the beam signal quality of the cell includes at least one of the following:
a signal quality of a beam with the best signal quality within a cell;
a beam signal quality resulting from filtering signal qualities of n beams of the cell according to a first preset rule; the n beams are the highest-ranked n beams in signal quality;
a beam signal quality resulting from filtering, according to a second preset rule, signal qualities of beams of the cell that are higher than an eleventh preset threshold;
a beam signal quality resulting from filtering signal qualities of a first number of first beams of the cell according to a third preset rule; the first number is less than or equal to m, and the first beam has a signal quality higher than a twelfth preset threshold;
a signal quality of any beam of the cell;
a beam signal quality resulting from filtering, according to a seventh preset rule, signal qualities of all beams of the cell that are measured by the terminal; or
a signal quality of a beam with the worst signal quality among second beams of the cell; the second beam has a signal quality higher than a thirteenth preset threshold.

In some embodiments, the method further includes at least one of the following:
receiving first indication transmitted by a terminal before accessing a target cell, the first indication being used for indicating information of the target cell and/or target beam; or
receiving second indication transmitted by a terminal before accessing a target cell in case of a valid TA value of the target cell is obtained by the terminal, the second indication being used for indicating information of the target cell and/or target beam.

In some embodiments, the at least one execution condition is configured per cell, or is configured for all cells, or is configured per cell group.

In some embodiments, the method further includes at least one of the following:
transmitting network configuration indication to a terminal, the network configuration indication being used for indicating a candidate cell needing to be evaluated;
configuring candidate cells for the terminal; or
transmitting a candidate cell configuration associated with the at least one execution condition to the terminal.

This disclosure also provides a cell management device, which is a terminal and includes a memory, a transceiver, and a processor;
the memory is used for storing a computer program; the transceiver is used for transmitting and receiving data under the control of the processor; and the processor is used for reading the computer program from the memory and performing the following steps:
obtaining at least one execution condition;
evaluating whether there is at least one target candidate cell that fulfills the at least one execution condition; and
in a case that there is the at least one target candidate cell that fulfills the at least one execution condition, determining a target cell, and/or determining a target beam of the target cell;
wherein the at least one execution condition is at least one beam-level execution condition configured based on layer 1 measurements.

In some embodiments, the evaluating whether there is at least one target candidate cell that fulfills the at least one execution condition includes:
determining that a candidate cell is the target candidate cell that fulfills the execution condition in a case that a first evaluation condition is fulfilled;
wherein the first evaluation condition includes at least one of the following:
   beam signal quality of a serving cell is less than a first preset threshold and a first preset condition is fulfilled; or, the beam signal quality of the serving cell is less than or equal to the first preset threshold and the first preset condition is fulfilled;
   beam signal quality of a candidate cell is greater than a second preset threshold and a second preset condition is fulfilled; or, the beam signal quality of the candidate cell is greater than or equal to the second preset threshold and the second preset condition is fulfilled;
   the beam signal quality of the candidate cell is better than the beam signal quality of the serving cell and a difference between the beam signal quality of the candidate cell and the beam signal quality of the serving cell is at least greater than a third preset threshold and a third preset condition is fulfilled; or, the beam signal quality of the candidate cell is better than the beam signal quality of the serving cell and the difference between the beam signal quality of the candidate cell and the beam signal quality of the serving cell is at least greater than or equal to the third preset threshold and the third preset condition is fulfilled;
   the beam signal quality of the serving cell is greater than a fourth preset threshold and a fourth preset condition is fulfilled; or, the beam signal quality of the serving cell is greater than or equal to the fourth preset threshold and the fourth preset condition is fulfilled; or
   the beam signal quality of the candidate cell is less than a fifth preset threshold and a fifth preset condition is fulfilled; or, the beam signal quality of the candidate cell is less than or equal to the fifth preset threshold and the fifth preset condition is fulfilled.

In some embodiments, the evaluating whether there is at least one target candidate cell that fulfills the at least one execution condition includes:
determining that a candidate cell does not fulfill the execution condition in a case that a second evaluation condition is fulfilled;
wherein the second evaluation condition includes at least one of the following:
   beam signal quality of a serving cell is greater than a sixth preset threshold and a sixth preset condition is fulfilled;
   beam signal quality of a candidate cell is less than a seventh preset threshold and a seventh preset condition is fulfilled;
   the beam signal quality of the candidate cell is better than the beam signal quality of the serving cell and a difference between the beam signal quality of the candidate cell and the beam signal quality of the serving cell is at least less than an eighth preset threshold and an eighth preset condition is fulfilled;
   the beam signal quality of the serving cell is less than a ninth preset threshold and a ninth preset condition is fulfilled; or
   the beam signal quality of the candidate cell is greater than a tenth preset threshold and a tenth preset condition is fulfilled.

In some embodiments, the steps further include:
obtaining configuration information;
wherein the configuration information includes at least one of the following:
   preset time duration;
   preset offset value;
   preset threshold;
   preset number of beams;
   preset count;
   preset probability;
   count of statistics; or
   cell measurement configuration information.

In some embodiments, beam signal quality of a cell is the beam signal quality of the serving cell or the beam signal quality of the candidate cell; the beam signal quality of the cell includes at least one of the following:
a signal quality of a beam with the best signal quality within a cell;
a beam signal quality resulting from filtering signal qualities of n beams of the cell according to a first preset rule; the n beams are the highest-ranked n beams in signal quality;
a beam signal quality resulting from filtering, according to a second preset rule, signal qualities of beams of the cell that are higher than an eleventh preset threshold;
a beam signal quality resulting from filtering signal qualities of a first number of first beams of the cell according to a third preset rule; the first number is less than or equal to m, and the first beam has a signal quality higher than a twelfth preset threshold;
a signal quality of any beam of the cell;
a beam signal quality resulting from filtering, according to a seventh preset rule, signal qualities of all beams of the cell that are measured by the terminal; or
a signal quality of a beam with the worst signal quality among second beams of the cell; the second beam has a signal quality higher than a thirteenth preset threshold.

In some embodiments, the determining the target cell includes:
determining the target cell from the at least one target candidate cell according to a first manner;
wherein the first manner includes at least one of the following:
   selecting the target cell up to the terminal implementation;
   selecting a cell where a beam with the highest signal quality is located as the target cell;
   selecting a cell with the most beams that fulfill the at least one execution condition as the target cell;
   selecting a cell with the highest signal quality resulting from filtering beam signal qualities according to a fourth preset rule as the target cell;
   selecting at least one of the target candidate cells as the target cell; or
   selecting a cell with the best cell-level measurement result based on Layer 3 measurement as the target cell.

In some embodiments, the determining the target beam of the target cell includes:
determining the target beam of the target cell according to a second manner;
wherein the second manner includes at least one of the following:
   selecting a beam with the best signal quality of the target cell as the target beam;
   selecting, among beams of the target cell, a beam with the best signal quality as the target beam, wherein a signal quality of a beam is obtained by filtering, according to a fifth preset rule, signal qualities of the beam within a first preset time duration;
   selecting, among beams of the target cell, a beam with the best signal quality as the target beam, wherein a signal quality of a beam is obtained by filtering, according to a sixth preset rule, signal qualities of the beam of a first preset count;
   selecting, among beams of the target cell, a beam that fulfills the at least one execution condition and is the first to arrive at the terminal as the target beam;
   selecting, among beams of the target cell, a target beam up to the terminal implementation;
   selecting, among beams of the target cell, a beam that fulfills the at least one execution condition and is associated with a pre-configured uplink resource as the target beam;
   selecting, among beams of the target cell, a beam that fulfills the at least one execution condition, is associated with a pre-configured uplink resource and is the first to arrive at the terminal as the target beam; or
   selecting, among beams of the target cell, at least one beam that fulfills the at least one execution condition as the target beam.

In some embodiments, the steps further include:
managing the target cell in a third manner;
wherein the third manner includes at least one of the following:
   triggering a random access procedure to the target cell;
   transmitting uplink data on a pre-configured uplink resource via the transceiver;
   monitoring a physical downlink control channel (PDCCH) in the target cell;
   transmitting uplink data on a pre-configured uplink resource via the transceiver in case of a valid timing advance (TA) value of the target cell is obtained;
   monitoring a PDCCH according to a target transmission configuration indicator (TCI) or a target beam index in case of a valid TA value of the target cell is obtained;
   triggering a random access procedure to the target cell in case of a valid TA value of the target cell is not obtained;
   sending first indication to a network device via the transceiver before accessing the target cell, the first indication being used for indicating information of the target cell and/or target beam;
   sending second indication to a network device via the transceiver before accessing the target cell in case of a valid TA value of the target cell is obtained, the second indication being used for indicating information of the target cell and/or target beam; or
   determining to obtain a TA value of the target cell.

In some embodiments, the at least one execution condition is configured per cell, or is configured for all cells, or is configured per cell group.

In some embodiments, the evaluating whether there is at least one target candidate cell that fulfills the at least one execution condition includes:
determining at least one to-be-evaluated candidate cell;
determining whether there is at least one target candidate cell that fulfills the at least one execution condition in the at least one to-be-evaluated candidate cell;
wherein the to-be-evaluated candidate cell includes at least one of the following:
   candidate cell for which a valid TA value is obtained by the terminal;
   candidate cell configured with a pre-configured uplink resource for the terminal to transmit first uplink data;
   candidate cell to be evaluated indicated by the network configuration indication;
   all candidate cells configured by network; or
   all candidate cells associated with the at least one execution condition.

In some embodiments, the evaluating whether there is at least one target candidate cell that fulfills the at least one execution condition includes:
evaluating whether there is at least one target candidate cell that fulfills the execution condition according to a fourth manner;
wherein the fourth manner includes at least one of the following:
   media access control (MAC) entity of the terminal performs the evaluation based on information reported by physical layer of the terminal;
   the physical layer of the terminal performs the evaluation; or
   radio resource control (RRC) layer of the terminal performs the evaluation based on information reported by lower layer of the terminal.

This disclosure also provides a cell management device, which is a network device and includes a memory, a transceiver, and a processor;
the memory is used for storing a computer program; the transceiver is used for transmitting and receiving data under the control of the processor; and the processor is used for reading the computer program from the memory and performing the following step:
sending at least one execution condition via the transceiver;
wherein the at least one execution condition is at least one beam-level execution condition configured based on layer 1 measurements.

In some embodiments, the step further includes:
transmitting a first evaluation condition to a terminal via the transceiver; wherein the first evaluation condition is used by the terminal to determine at least one target candidate cell that fulfills the execution condition;
wherein the first evaluation condition includes at least one of the following:
   beam signal quality of a serving cell is less than a first preset threshold and a first preset condition is fulfilled; or, the beam signal quality of the serving cell is less than or equal to the first preset threshold and the first preset condition is fulfilled;
   beam signal quality of a candidate cell is greater than a second preset threshold and a second preset condition is fulfilled; or, the beam signal quality of the candidate cell is greater than or equal to the second preset threshold and the second preset condition is fulfilled;
   the beam signal quality of the candidate cell is better than the beam signal quality of the serving cell and a difference between the beam signal quality of the candidate cell and the beam signal quality of the serving cell is at least greater than a third preset threshold and a third preset condition is fulfilled; or, the beam signal quality of the candidate cell is better than the beam signal quality of the serving cell and the difference between the beam signal quality of the candidate cell and the beam signal quality of the serving cell is at least greater than or equal to the third preset threshold and the third preset condition is fulfilled;
   the beam signal quality of the serving cell is greater than a fourth preset threshold and a fourth preset condition is fulfilled; or, the beam signal quality of the serving cell is greater than or equal to the fourth preset threshold and the fourth preset condition is fulfilled; or
   the beam signal quality of the candidate cell is less than a fifth preset threshold and a fifth preset condition is fulfilled; or, the beam signal quality of the candidate cell is less than or equal to the fifth preset threshold and the fifth preset condition is fulfilled.

In some embodiments, the step further includes:
transmitting a second evaluation condition to a terminal via the transceiver; wherein the second evaluation condition is used by the terminal to determine at least one target candidate cell that does not fulfill the execution condition;
wherein the second evaluation condition includes at least one of the following:
   beam signal quality of a serving cell is greater than a sixth preset threshold and a sixth preset condition is fulfilled;
   beam signal quality of a candidate cell is less than a seventh preset threshold and a seventh preset condition is fulfilled;
   the beam signal quality of the candidate cell is better than the beam signal quality of the serving cell and a difference between the beam signal quality of the candidate cell and the beam signal quality of the serving cell is at least less than an eighth preset threshold and an eighth preset condition is fulfilled;
   the beam signal quality of the serving cell is less than a ninth preset threshold and a ninth preset condition is fulfilled; or
   the beam signal quality of the candidate cell is greater than a tenth preset threshold and a tenth preset condition is fulfilled.

In some embodiments, the step further includes:
transmitting configuration information via the transceiver;
wherein the configuration information includes at least one of the following:
   preset time duration;
   preset offset value;
   preset threshold;
   preset number of beams;
   preset count;
   preset probability;
   count of statistics; or
   cell measurement configuration information.

In some embodiments, beam signal quality of a cell is the beam signal quality of the serving cell or the beam signal quality of the candidate cell;
the beam signal quality of the cell includes at least one of the following:
a signal quality of a beam with the best signal quality within a cell;
a beam signal quality resulting from filtering signal qualities of n beams of the cell according to a first preset rule; the n beams are the highest-ranked n beams in signal quality;
a beam signal quality resulting from filtering, according to a second preset rule, signal qualities of beams of the cell that are higher than an eleventh preset threshold;
a beam signal quality resulting from filtering signal qualities of a first number of first beams of the cell according to a third preset rule; the first number is less than or equal to m, and the first beam has a signal quality higher than a twelfth preset threshold;
a signal quality of any beam of the cell;
a beam signal quality resulting from filtering, according to a seventh preset rule, signal qualities of all beams of the cell that are measured by the terminal; or
a signal quality of a beam with the worst signal quality among second beams of the cell; the second beam has a signal quality higher than a thirteenth preset threshold.

In some embodiments, the step further includes at least one of the following:
receiving, via the transceiver, first indication transmitted by a terminal before accessing a target cell, the first indication being used for indicating information of the target cell and/or target beam; or
receiving, via the transceiver, second indication transmitted by a terminal before accessing a target cell in case of a valid TA value of the target cell is obtained by the terminal, the second indication being used for indicating target cell and/or target beam cell and/or target beam information.

In some embodiments, the at least one execution condition is configured per cell, or is configured for all cells, or is configured per cell group.

In some embodiments, the step further includes at least one of the following:
transmitting network configuration indication to a terminal via the transceiver, the network configuration indication being used for indicating a candidate cell needing to be evaluated;
configuring candidate cells for the terminal via the transceiver; or
transmitting a candidate cell configuration associated with the at least one execution condition to the terminal via the transceiver.

This disclosure also provides a cell management apparatus applied to a terminal, including:
a first obtaining unit, configured to obtain at least one execution condition;
a first processing unit, configured to evaluate whether there is at least one target candidate cell that fulfills the at least one execution condition;
a first determining unit, configured to, in a case that there is the at least one target candidate cell that fulfills the at least one execution condition, determine a target cell, and/or determine a target beam of the target cell;
wherein the at least one execution condition is at least one beam-level execution condition configured based on layer 1 measurements.

In some embodiments, the evaluating whether there is at least one target candidate cell that fulfills the at least one execution condition includes:
determining that a candidate cell is the target candidate cell that fulfills the execution condition in a case that a first evaluation condition is fulfilled;
wherein the first evaluation condition includes at least one of the following:
   beam signal quality of a serving cell is less than a first preset threshold and a first preset condition is fulfilled; or, the beam signal quality of the serving cell is less than or equal to the first preset threshold and the first preset condition is fulfilled;
   beam signal quality of a candidate cell is greater than a second preset threshold and a second preset condition is fulfilled; or, the beam signal quality of the candidate cell is greater than or equal to the second preset threshold and the second preset condition is fulfilled;
   the beam signal quality of the candidate cell is better than the beam signal quality of the serving cell and a difference between the beam signal quality of the candidate cell and the beam signal quality of the serving cell is at least greater than a third preset threshold and a third preset condition is fulfilled; or, the beam signal quality of the candidate cell is better than the beam signal quality of the serving cell and the difference between the beam signal quality of the candidate cell and the beam signal quality of the serving cell is at least greater than or equal to the third preset threshold and the third preset condition is fulfilled;
   the beam signal quality of the serving cell is greater than a fourth preset threshold and a fourth preset condition is fulfilled; or, the beam signal quality of the serving cell is greater than or equal to the fourth preset threshold and the fourth preset condition is fulfilled; or
   the beam signal quality of the candidate cell is less than a fifth preset threshold and a fifth preset condition is fulfilled; or, the beam signal quality of the candidate cell is less than or equal to the fifth preset threshold and the fifth preset condition is fulfilled.

In some embodiments, the evaluating whether there is at least one target candidate cell that fulfills the at least one execution condition includes:
determining that a candidate cell does not fulfill the execution condition in a case that a second evaluation condition is fulfilled;
wherein the second evaluation condition includes at least one of the following:
   beam signal quality of a serving cell is greater than a sixth preset threshold and a sixth preset condition is fulfilled;
   beam signal quality of a candidate cell is less than a seventh preset threshold and a seventh preset condition is fulfilled;
   the beam signal quality of the candidate cell is better than the beam signal quality of the serving cell and a difference between the beam signal quality of the candidate cell and the beam signal quality of the serving cell is at least less than an eighth preset threshold and an eighth preset condition is fulfilled;
   the beam signal quality of the serving cell is less than a ninth preset threshold and a ninth preset condition is fulfilled; or
   the beam signal quality of the candidate cell is greater than a tenth preset threshold and a tenth preset condition is fulfilled.

In some embodiments, the apparatus further includes:
a second obtaining unit, configured to obtain configuration information;
wherein the configuration information includes at least one of the following:
   preset time duration;
   preset offset value;
   preset threshold;
   preset number of beams;
   preset count;
   preset probability;
   count of statistics; or
   cell measurement configuration information.

In some embodiments, beam signal quality of a cell is the beam signal quality of the serving cell or the beam signal quality of the candidate cell;
the beam signal quality of the cell includes at least one of the following:
a signal quality of a beam with the best signal quality within a cell;
a beam signal quality resulting from filtering signal qualities of n beams of the cell according to a first preset rule; the n beams are the highest-ranked n beams in signal quality;
a beam signal quality resulting from filtering, according to a second preset rule, signal qualities of beams of the cell that are higher than an eleventh preset threshold;
a beam signal quality resulting from filtering signal qualities of a first number of first beams of the cell according to a third preset rule; the first number is less than or equal to m, and the first beam has a signal quality higher than a twelfth preset threshold;
a signal quality of any beam of the cell;
a beam signal quality resulting from filtering, according to a seventh preset rule, signal qualities of all beams of the cell that are measured by the terminal; or
a signal quality of a beam with the worst signal quality among second beams of the cell; the second beam has a signal quality higher than a thirteenth preset threshold.

In some embodiments, the determining the target cell includes:
determining the target cell from the at least one target candidate cell according to a first manner;
wherein the first manner includes at least one of the following:
   selecting the target cell up to the terminal implementation;
   selecting a cell where a beam with the highest signal quality is located as the target cell;
   selecting a cell with the most beams that fulfill the at least one execution condition as the target cell;
   selecting a cell with the highest signal quality resulting from filtering beam signal qualities according to a fourth preset rule as the target cell;
   selecting at least one of the target candidate cells as the target cell; or
   selecting a cell with the best cell-level measurement result based on Layer 3 measurement as the target cell.

In some embodiments, the determining the target beam of the target cell includes:
determining the target beam of the target cell according to a second manner;
wherein the second manner includes at least one of the following:
   selecting a beam with the best signal quality of the target cell as the target beam;
   selecting, among beams of the target cell, a beam with the best signal quality as the target beam, wherein a signal quality of a beam is obtained by filtering, according to a fifth preset rule, signal qualities of the beam within a first preset time duration;
   selecting, among beams of the target cell, a beam with the best signal quality as the target beam, wherein a signal quality of a beam is obtained by filtering, according to a sixth preset rule, signal qualities of the beam of a first preset count;
   selecting, among beams of the target cell, a beam that fulfills the at least one execution condition and is the first to arrive at the terminal as the target beam;
   selecting, among beams of the target cell, a target beam up to the terminal implementation;
   selecting, among beams of the target cell, a beam that fulfills the at least one execution condition and is associated with a pre-configured uplink resource as the target beam;
   selecting, among beams of the target cell, a beam that fulfills the at least one execution condition, is associated with a pre-configured uplink resource and is the first to arrive at the terminal as the target beam; or
   selecting, among beams of the target cell, at least one beam that fulfills the at least one execution condition as the target beam.

In some embodiments, the apparatus further includes:
a second processing unit, configured to manage the target cell in a third manner;
wherein the third manner includes at least one of the following:
   triggering a random access procedure to the target cell;
   transmitting uplink data on a pre-configured uplink resource;
   monitoring a physical downlink control channel (PDCCH) in the target cell;
   transmitting uplink data on a pre-configured uplink resource in case of a valid timing advance (TA) value of the target cell is obtained;
   monitoring a PDCCH according to a target transmission configuration indicator (TCI) or a target beam index in case of a valid TA value of the target cell is obtained;
   triggering a random access procedure to the target cell in case of a valid TA value of the target cell is not obtained;
   sending first indication to a network device before accessing the target cell, the first indication being used for indicating information of the target cell and/or target beam;
   sending second indication to a network device before accessing the target cell in case of a valid TA value of the target cell is obtained, the second indication being used for indicating information of the target cell and/or target beam; or
   determining to obtain a TA value of the target cell.

In some embodiments, the at least one execution condition is configured per cell, or is configured for all cells, or is configured per cell group.

In some embodiments, the evaluating whether there is at least one target candidate cell that fulfills the at least one execution condition includes:
determining at least one to-be-evaluated candidate cell;
determining whether there is at least one target candidate cell that fulfills the at least one execution condition in the at least one to-be-evaluated candidate cell;
wherein the to-be-evaluated candidate cell includes at least one of the following:
   candidate cell for which a valid TA value is obtained by the terminal;
   candidate cell configured with a pre-configured uplink resource for the terminal to transmit first uplink data;
   candidate cell to be evaluated indicated by the network configuration indication;
   all candidate cells configured by network; or
   all candidate cells associated with the at least one execution condition.

In some embodiments, the evaluating whether there is at least one target candidate cell that fulfills the at least one execution condition includes:
evaluating whether there is at least one target candidate cell that fulfills the execution condition according to a fourth manner;
wherein the fourth manner includes at least one of the following:
   media access control (MAC) entity of the terminal performs the evaluation based on information reported by physical layer of the terminal;
   the physical layer of the terminal performs the evaluation; or
   radio resource control (RRC) layer of the terminal performs the evaluation based on information reported by lower layer of the terminal.

This disclosure also provides a cell management apparatus, applied to a network device, including:
a first transmitting unit, configured to send at least one execution condition;
wherein the at least one execution condition is at least one beam-level execution condition configured based on layer 1 measurements.

In some embodiments, the apparatus further includes:
a second transmitting unit, configured to transmit a first evaluation condition to the terminal; wherein the first evaluation condition is used by the terminal to determine at least one target candidate cell that fulfills the execution condition;
wherein the first evaluation condition includes at least one of the following:
   beam signal quality of a serving cell is less than a first preset threshold and a first preset condition is fulfilled; or, the beam signal quality of the serving cell is less than or equal to the first preset threshold and the first preset condition is fulfilled;
   beam signal quality of a candidate cell is greater than a second preset threshold and a second preset condition is fulfilled; or, the beam signal quality of the candidate cell is greater than or equal to the second preset threshold and the second preset condition is fulfilled;
   the beam signal quality of the candidate cell is better than the beam signal quality of the serving cell and a difference between the beam signal quality of the candidate cell and the beam signal quality of the serving cell is at least greater than a third preset threshold and a third preset condition is fulfilled; or, the beam signal quality of the candidate cell is better than the beam signal quality of the serving cell and the difference between the beam signal quality of the candidate cell and the beam signal quality of the serving cell is at least greater than or equal to the third preset threshold and the third preset condition is fulfilled;
   the beam signal quality of the serving cell is greater than a fourth preset threshold and a fourth preset condition is fulfilled; or, the beam signal quality of the serving cell is greater than or equal to the fourth preset threshold and the fourth preset condition is fulfilled; or
   the beam signal quality of the candidate cell is less than a fifth preset threshold and a fifth preset condition is fulfilled; or, the beam signal quality of the candidate cell is less than or equal to the fifth preset threshold and the fifth preset condition is fulfilled.

In some embodiments, the apparatus further includes:
a third transmitting unit, configured to transmit a second evaluation condition to the terminal; wherein the second evaluation condition is used by the terminal to determine at least one target candidate cell that does not fulfill the execution condition;
wherein the second evaluation condition includes at least one of the following:
   beam signal quality of a serving cell is greater than a sixth preset threshold and a sixth preset condition is fulfilled;
   beam signal quality of a candidate cell is less than a seventh preset threshold and a seventh preset condition is fulfilled;
   the beam signal quality of the candidate cell is better than the beam signal quality of the serving cell and a difference between the beam signal quality of the candidate cell and the beam signal quality of the serving cell is at least less than an eighth preset threshold and an eighth preset condition is fulfilled;
   the beam signal quality of the serving cell is less than a ninth preset threshold and a ninth preset condition is fulfilled; or
   the beam signal quality of the candidate cell is greater than a tenth preset threshold and a tenth preset condition is fulfilled.

In some embodiments, the apparatus further includes:
a fourth transmitting unit, configured to transmit configuration information;
wherein the configuration information includes at least one of the following:
   preset time duration;
   preset offset value;
   preset threshold;
   preset number of beams;
   preset count;
   preset probability;
   count of statistics; or
   cell measurement configuration information.

In some embodiments, beam signal quality of a cell is the beam signal quality of the serving cell or the beam signal quality of the candidate cell;
the beam signal quality of the cell includes at least one of the following:
a signal quality of a beam with the best signal quality within a cell;
a beam signal quality resulting from filtering signal qualities of n beams of the cell according to a first preset rule; the n beams are the highest-ranked n beams in signal quality;
a beam signal quality resulting from filtering, according to a second preset rule, signal qualities of beams of the cell that are higher than an eleventh preset threshold;
a beam signal quality resulting from filtering signal qualities of a first number of first beams of the cell according to a third preset rule; the first number is less than or equal to m, and the first beam has a signal quality higher than a twelfth preset threshold;
a signal quality of any beam of the cell;
a beam signal quality resulting from filtering, according to a seventh preset rule, signal qualities of all beams of the cell that are measured by the terminal; or
a signal quality of a beam with the worst signal quality among second beams of the cell; the second beam has a signal quality higher than a thirteenth preset threshold.

In some embodiments, the apparatus further includes a first receiving unit, configured to perform at least one of the following:
receiving first indication transmitted by a terminal before accessing a target cell, the first indication being used for indicating information of the target cell and/or target beam; or
receiving second indication transmitted by a terminal before accessing a target cell in case of a valid TA value of the target cell is obtained by the terminal, the second indication being used for indicating information of the target cell and/or target beam.

In some embodiments, the at least one execution condition is configured per cell, or is configured for all cells, or is configured per cell group.

In some embodiments, the apparatus further includes a fifth transmitting unit, configured to perform at least one of the following:
transmitting network configuration indication to a terminal, the network configuration indication being used for indicating a candidate cell needing to be evaluated;
configuring candidate cells for the terminal; or
transmitting a candidate cell configuration associated with the at least one execution condition to the terminal.

This disclosure also provides a non-transitory readable storage medium storing a computer program for causing a processor to execute the methods described above on the terminal side or network device side.

The beneficial effects of the above-mentioned technical solution of this disclosure are as follows.

In the above scheme, by obtaining at least one execution condition; evaluating whether there is at least one target candidate cell that fulfills the at least one execution condition; in a case that there is the at least one target candidate cell that fulfills the at least one execution condition, determining the target cell and/or determining the target beam of the target cell, wherein the at least one execution condition is at least one beam-level execution condition configured based on layer 1 measurements, the cell management method can support the UE to clearly identify the target cell and/or target beam (that fulfills the at least one execution condition), and then determine whether to perform cell change, or determine whether the target cell's TA can be obtained or determine through which beam the target cell's TA can be obtained, thereby supporting a scheme that enables the UE to decide whether to perform cell management.

### BRIEF DESCRIPTION OF THE DRAWINGS

Fig. 1 is a schematic diagram of the wireless communication system architecture according to an embodiment of this disclosure;
Fig. 2 is a schematic diagram of a cell management method according to an embodiment of this disclosure;
Fig. 3 is another schematic diagram of a cell management method according to an embodiment of this disclosure;
Fig. 4 is a schematic structural diagram of a cell management device according to an embodiment of this disclosure;
Fig. 5 is another schematic structural diagram of a cell management device according to an embodiment of this disclosure;
Fig. 6 is a schematic structural diagram of a cell management apparatus according to an embodiment of this disclosure;
Fig. 7 is another schematic structural diagram of a cell management apparatus according to an embodiment of this disclosure.

### DETAILED DESCRIPTION

The technical solutions of the embodiments of this disclosure will be clearly and thoroughly described below with reference to the accompanying drawings. Obviously, the described embodiments are only some embodiments of this disclosure, and not all embodiments. Based on the embodiments of this disclosure, all other embodiments obtained by those of ordinary skill in the art without creative effort are within the scope of protection of this disclosure.

In this disclosure, the term "and/or" describes the relationship between related objects, indicating that three relationships can exist. For example, A and/or B can represent three cases: A alone, A and B simultaneously, and B alone. The character "/" generally indicates that the preceding and following related objects have an "or" relationship.

In this disclosure, the term "multiple" refers to two or more, and other quantifiers are similar.

It should be noted that the technical solutions provided in this disclosure are applicable to a variety of systems, especially 5th Generation (5G) systems. For example, applicable systems may include Global System for Mobile Communication (GSM), Code Division Multiple Access (CDMA), Wideband Code Division Multiple Access (WCDMA), General Packet Radio Service (GPRS), Long Term Evolution (LTE), LTE Frequency Division Duplex (FDD), LTE Time Division Duplex (TDD), Long Term Evolution Advanced (LTE-A), Universal Mobile Telecommunications System (UMTS), Worldwide Interoperability for Microwave Access (WiMAX), and 5G New Radio (NR). All of these systems include a terminal device and a network device. The system may also include a core network component, such as an evolved packet system (EPS) or a 5G system (5GS).

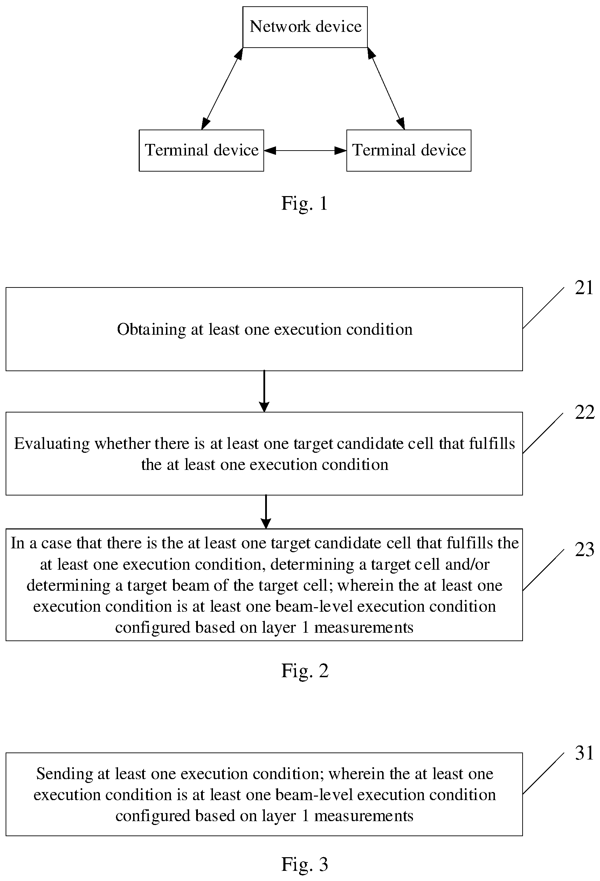

Fig. 1 shows a block diagram of a wireless communication system to which embodiments of this disclosure are applicable. The wireless communication system includes a terminal device (also referred to simply as a terminal) and a network device.

The terminal devices involved in the embodiments of this disclosure can be devices that provide voice and/or data connectivity to users, handheld devices with wireless connectivity, or other processing devices connected to a wireless modem. The names of the terminal devices may differ in different systems; for example, in a 5G system, a terminal device can be called User equipment (UE). Wireless terminal devices can communicate with one or more core networks (CNs) via a Radio Access Network (RAN). Wireless terminal devices can be mobile terminal devices, such as mobile phones (or "cellular" phones) and computers with mobile terminal devices, for example, portable, pocket-sized, handheld, computer-embedded, or vehicle-mounted mobile devices that exchange voice and/or data with the RAN. Examples include Personal Communication Service (PCS) phones, cordless phones, Session Initiated Protocol (SIP) phones, Wireless Local Loop (WLL) stations, and Personal Digital Assistants (PDAs). Wireless terminal device can also be referred to as a system, subscriber unit, subscriber station, mobile station, mobile, remote station, access point, remote terminal, access terminal, user terminal, user agent, or user device, but this is not limited to these terms in the embodiments disclosed herein.

The network device involved in this disclosure can be a base station, which may include multiple cells providing services to terminals. Depending on the specific application, the base station may also be called an access point, or a device in the access network that communicates with the wireless terminal device through one or more sectors on the air interface, or other names. The network device can be used to exchange received air frames with Internet Protocol (IP) packets, acting as a router between the wireless terminal device and the rest of the access network, where the rest of the access network may include an Internet Protocol (IP) communication network. The network device can also coordinate the attribute management of the air interface. For example, the network device involved in this disclosure can be a base transceiver station (BTS) in a Global System for Mobile communications (GSM) or Code Division Multiple Access (CDMA) system, a NodeB in a Wide-band Code Division Multiple Access (WCDMA) system, an evolved Node B (eNB or e-NodeB) in a long-term evolution (LTE) system, a 5G base station (gNB) in a next-generation 5G network architecture, a Home evolved Node B (HeNB), a relay node, a femto, a pico, etc., and is not limited in this disclosure. In some network structures, the network device may include a centralized unit (CU) node and a distributed unit (DU) node, and the centralized unit and distributed unit may be geographically separated.

Network devices and terminal devices can each use one or more antennas for Multiple Input Multiple Output (MIMO) transmission. MIMO transmission can be Single User MIMO (SU-MIMO) or Multiple User MIMO (MU-MIMO). Depending on the configuration and number of antenna combinations, MIMO transmission can be 2D MIMO, 3D MIMO, Full Dimension MIMO (FD-MIMO), or Massive MIMO, or it can be diversity transmission, pre-coded transmission, or beamforming transmission, etc.

The following is an introduction of contents related to the solutions according to an embodiment of this disclosure.

### 1. Regarding the handover or primary SCG Cell (PSCell) change;

In New Radio (NR) systems, UE performs cell handover or PSCell change based on Layer 3 (L3) commands. Taking handover as an example, when the network side decides that the UE should perform a handover, the source cell initiates a handover preparation procedure to the target cell to obtain a handover command, which includes the target cell's configuration information. This handover command is Radio Resource Control (RRC) configuration information. The source cell directly transmits the handover command obtained from the target cell to the UE. After receiving the handover command, the UE synchronizes with the target cell according to the configuration information in the handover command, initiates a random access procedure, accesses the target cell, and completes the handover process.

Furthermore, in R16, conditional handover (CHO) and conditional PSCell change (CPC) are introduced to NR system. CHO and CPC operate on similar principles: the network pre-configures at least one pre-configured target cell and related execution conditions to the UE via RRC signaling; after receiving the CHO and/or CPC configuration information, the UE performs measurement and evaluation according to the execution condition configured by the network; when the UE finds a cell that fulfills the configured execution conditions, the UE identifies that cell as the target cell, accesses the target cell, and completes the handover or PSCell change process. After the UE completes the handover or PSCell change, the UE releases the stored CHO and/or CPC configurations. The execution conditions of the current CHO and/or CPC configurations are based on L3 measurement results.

### 2. Regarding Special Cell (SpCell) and Secondary Cell (SCell);

The network can configure dual connectivity and carrier aggregation (CA) for the UE to increase the UE's transmission bandwidth and improve throughput. If the network configures dual connectivity for the UE, the network needs to configure a master cell group (MCG) and a secondary cell group (SCG) for the UE. MCG and SCG can each contain at least one serving cell, and the at least one serving cell contains at least one SpCell. Specifically, the SpCell in the MCG is called the primary cell (PCell); the SpCell in the SCG is called the primary SCG cell (PSCell), and all the remaining cells are secondary cells (SCells). The UE needs to perform radio link monitoring and the like on the SpCell.

### 3. Regarding R18 L1L2 Mob (i.e., LTM);

The cell change mechanism triggered by L1/L2 commands in R18 includes: the network transmits configuration information of candidate cells to the UE through pre-configuration, and simultaneously configures the relevant candidate cell measurement reference signal information to the UE; the UE performs L1 measurements of neighboring cells based on the configured candidate cell measurement reference signals, and reports the measurement results to the network side. The source cell makes a cell change decision based on the L1 measurement results of the candidate cells reported by the UE; and notifies the UE to perform the cell change by transmitting an MAC CE (specifically, an LTM MAC CE) to trigger the UE to perform the cell change. After receiving this LTM MAC CE, the UE applies the configuration information of the candidate cells specified in the MAC CE to access the target cell. Here, MAC CE represents a Medium Access Control (MAC) Control Element. Before transmitting the LTM MAC CE command, the source cell can also trigger a Physical Downlink Control Channel (PDCCH) order based on, for example, L1 measurement results, to notify the UE to obtain the TA value of the candidate cell, which is not limited here.

Based on the above, embodiments of this disclosure provide a cell management method, apparatus, and device to address the problem that related technologies cannot support a solution that enables a UE to determine whether to perform cell management. The method, apparatus, and device are based on the same creative concept. Since the principles underlying the problems solved by the method, apparatus, and device are similar, for the implementation of one of the method, apparatus, and device, references can made to another of the method, apparatus, and device, and repeated details will not be elaborated further.

A cell management method according to an embodiment of this disclosure is performed by a terminal, as shown in Fig. 2, and includes:
Step 21: obtaining at least one execution condition;
Step 22: evaluating whether there is at least one target candidate cell that fulfills the at least one execution condition; and
Step 23: in a case that there is the at least one target candidate cell that fulfills the at least one execution condition, determining a target cell and/or determining a target beam of the target cell; wherein the at least one execution condition is at least one beam-level execution condition configured based on layer 1 measurements.

The obtaining the execution condition may include, but is not limited to, receiving an execution condition transmitted by a network device. Regarding the "beam-level execution condition configured based on layer 1 measurements", in scenarios configured with multiple beams, the beam-level execution condition configured based on layer 1 measurements can be used to evaluate beam measurement results based on L1 measurements; in scenarios configured with only one beam or where multiple beams are not supported, the beam-level execution condition configured based on layer 1 measurements can be used to evaluate single-beam measurement results based on Layer 1 measurements or cell measurement results based on Layer 1 measurements, which is not limited here.

"Determining the target cell" may include: determining configuration information of the target cell, or identification information of the target cell (such as: cell identifier, cell frequency and/or cell PCI), or candidate cell identification information, etc., to identify the target cell, which is not limited here. One possible implementation of determining the target cell is to determine a target PCell, or a target PSCell, or a target SpCell, which is not limited here.

By obtaining the execution condition; evaluating whether there is at least one target candidate cell that fulfills the at least one execution condition; in a case that there is the at least one target candidate cell that fulfills the at least one execution condition, determining the target cell, and/or determining the target beam of the target cell, wherein the at least one execution condition is at least one beam-level execution condition configured based on layer 1 measurements; the cell management method provided in this disclosure can support the UE to clearly identify the target cell and/or target beam (that fulfills the at least one execution condition), and thus determine whether to perform cell change, or determine whether the target cell's TA can be obtained or through which beam the target cell's TA can be obtained, thereby supporting a scheme enabling the UE to decide whether to perform cell management. Cell management may include operations such as cell change, or target cell TA management (e.g., determining that the target cell's TA can be obtained, thereby triggering the target cell's TA calculation, or requesting the network side to trigger the target cell TA acquisition process).

The evaluation of whether there is at least one target candidate cell that fulfills the at least one execution condition includes: determining a candidate cell as a target candidate cell that fulfills the at least one execution condition if a first evaluation condition is fulfilled; wherein the first evaluation condition includes at least one of the following: (1) the beam signal quality of the serving cell is less than a first preset threshold and the first preset condition is fulfilled; or, the beam signal quality of the serving cell is less than or equal to the first preset threshold and the first preset condition is fulfilled; (2) the beam signal quality of the candidate cell is greater than a second preset threshold and the second preset condition is fulfilled; or, the beam signal quality of the candidate cell is greater than or equal to the second preset threshold and the second preset condition is fulfilled; (3) the beam signal quality of the candidate cell is better than the beam signal quality of the serving cell and a difference between the beam signal quality of the candidate cell and the beam signal quality of the serving cell is at least greater than a third preset threshold (corresponding to the first preset offset value below) and a third preset condition is fulfilled; or, the beam signal quality of the candidate cell is better than the beam signal quality of the serving cell and the difference between the beam signal quality of the candidate cell and the beam signal quality of the serving cell is at least greater than or equal to the third preset threshold and the third preset condition is fulfilled; (4) the beam signal quality of the serving cell is greater than the fourth preset threshold and the fourth preset condition is fulfilled; or, the beam signal quality of the serving cell is greater than or equal to the fourth preset threshold and the fourth preset condition is fulfilled; (5) the beam signal quality of the candidate cell is less than the fifth preset threshold and the fifth preset condition is fulfilled; or, the beam signal quality of the candidate cell is less than or equal to the fifth preset threshold and the fifth preset condition is fulfilled.

This allows for the accurate identification of candidate cells that fulfill the at least one execution condition. Combining the above items (1) - (5), the first evaluation condition may specifically include at least one of the following:
1) the first condition is fulfilled for the first preset time duration;
2) the count of consecutive fulfilment of the second condition is greater than the first preset count; or, the count of consecutive fulfilment of the second condition is greater than or equal to the first preset count;
3) for the second preset time duration, the count of fulfilment of the third condition is greater than the second preset count; or, for the second preset time duration, the count of fulfilment of the third condition is greater than or equal to the second preset count;
4) for the third preset time duration, the probability of fulfilling the fourth condition is greater than the first preset probability; or, for the third preset time duration, the probability of fulfilling the fourth condition is greater than or equal to the first preset probability;
5) within the first count of statistics, the count of fulfilment of the fifth condition is greater than the third preset count; or, within the first count of statistics, the count of fulfilment of the fifth condition is greater than or equal to the third preset count;
6) within the second count of statistics, the probability of fulfilling the sixth condition is greater than the second preset probability; or, within the second count of statistics, the probability of fulfilling the sixth condition is greater than or equal to the second preset probability;
7) the seventh condition is fulfilled;
8) for the fourth preset time duration, the count of fulfilment of the eighth condition is less than the fourth preset count; or, for the fourth preset time duration, the count of fulfilment of the eighth condition is less than or equal to the fourth preset number;
9) for the fifth preset time duration, the probability of fulfilling the ninth condition is less than the third preset probability; or, for the fifth preset time duration, the probability of fulfilling the ninth condition is less than or equal to the third preset probability;
10) within the third count of statistics, the count of fulfilment of the tenth condition is less than the fifth preset count; or, within the third count of statistics, the count of fulfilment of the tenth condition is less than or equal to the fifth preset count;
11) within the fourth count of statistics, the probability of fulfilling the eleventh condition is less than the fourth preset probability; or, within the fourth count of statistics, the probability of fulfilling the eleventh condition is less than or equal to the fourth preset probability;
   wherein, the first target condition is the first condition, the second condition, the third condition, the fourth condition, the fifth condition, the sixth condition, the seventh condition, the eighth condition, the ninth condition, the tenth condition, or the eleventh condition, and the first target condition includes at least one of the following:
12) first sub-condition: beam signal quality of serving cell + X1 < beam signal quality of candidate cell - first preset offset value + Y1, or beam signal quality of serving cell + X1 ≤ beam signal quality of candidate cell - first preset offset value + Y1; where X1 is equal to 0, or is a first variable; Y1 is equal to 0, or is a second variable;
13) the number of beams that fulfill the first sub-condition is greater than the first preset number of beams, or the number of beams that fulfill the first sub-condition is greater than or equal to the first preset number of beams;
14) second sub-condition: beam signal quality of serving cell + X2 < first preset threshold + Y2, or beam signal quality of serving cell + X2 ≤ first preset threshold + Y2; where X2 is equal to 0 or is a third variable; Y2 is equal to 0 or is a fourth variable;
15) the number of beams fulfilling the second sub-condition is greater than the second preset number of beams, or the number of beams fulfilling the second sub-condition is greater than or equal to the second preset number of beams;
16) third sub-condition: beam signal quality of candidate cell + X3 > second preset threshold + Y3, or beam signal quality of candidate cell + X3 ≥ second preset threshold + Y3; where X3 is equal to 0, or is the fifth variable; Y3 is equal to 0, or is the sixth variable.
17) the number of beams fulfilling the third sub-condition is greater than the third preset number of beams, or the number of beams fulfilling the third sub-condition is greater than or equal to the third preset number of beams;
18) fourth sub-condition: serving cell beam signal quality + X4 > fourth preset threshold + Y4, or serving cell beam signal quality + X4 ≥ fourth preset threshold + Y4; where X4 is equal to 0, or is the seventh variable; Y4 is equal to 0, or is the eighth variable;
19) the number of beams fulfilling the fourth sub-condition is less than the fourth preset number of beams, or the number of beams fulfilling the fourth sub-condition is less than or equal to the fourth preset number of beams;
20) fifth sub-condition: beam signal quality of candidate cell + X5 < fifth preset threshold + Y5, or beam signal quality of candidate cell + X5 ≤ fifth preset threshold + Y5; X5 is equal to 0, or is the ninth variable; Y5 is equal to 0, or is the tenth variable;
21) the number of beams fulfilling the fifth sub-condition is less than the fifth preset number of beams, or the number of beams fulfilling the fifth sub-condition is less than or equal to the fifth preset number of beams.

Specifically, the item (1) above can correspond to a case that the first target condition includes the second sub-condition and at least one of item 1) to item 7) and item 15) above is fulfilled. For example, item (1) above corresponds to the case that the first target condition includes the second sub-condition and item 1) above is fulfilled. In this case, the first preset condition can be used for indicating that the first sub-condition is fulfilled for a first preset time duration, that is, the beam signal quality of the serving cell is less than the first preset threshold and the first preset condition is fulfilled, or, the beam signal quality of the serving cell is less than or equal to the first preset threshold and the first preset condition is fulfilled. One possible implementation is that for the first preset time duration, the beam signal quality of the serving cell + X2 < the first preset threshold + Y2 or the beam signal quality of the serving cell + X2 ≤ the first preset threshold + Y2. These will not be elaborated here.

The item (2) above can correspond to a case that the first target condition includes the third sub-condition and at least one of item 1) to item 7) and item 17) above is fulfilled; the item (3) above can correspond to a case that the first target condition includes the first sub-condition and at least one of item 1) to item 7) and item 13) above is fulfilled; the item (4) above can correspond to a case that the first target condition includes the fourth sub-condition and at least one of item 7) to item 11) and item 19) above is fulfilled; the item (5) above can correspond to a case that the first target condition includes the fifth sub-condition and at least one of item 7) to item 11) and item 21) above is fulfilled; but this disclosure is not limited thereto. It is noted here that the preset information mentioned above (such as the first preset time duration and the second preset time duration) can be the same or different, the variables (such as X1 and X2) can be the same or different, the conditions (such as the first condition and the second condition) can be the same or different, the candidate cells in the above items can be the same or different, and the candidate cell and the serving cell can be the same or different, which are not limited here.

In the embodiment of this disclosure, the evaluation of whether there is at least one target candidate cell that fulfills the at least one execution condition includes: determining that the candidate cell does not fulfill the at least one execution condition if the second evaluation condition is fulfilled; wherein the second evaluation condition includes at least one of the following: (1) beam signal quality of serving cell is greater than a sixth preset threshold and the sixth preset condition is fulfilled; (2) the beam signal quality of the candidate cell is less than a seventh preset threshold and the seventh preset condition is fulfilled; (3) the beam signal quality of the candidate cell is better than the beam signal quality of the serving cell and the difference between the beam signal quality of the candidate cell and the beam signal quality of the serving cell is at least less than an eighth preset threshold (corresponding to the second preset offset value below) and the eighth preset condition is fulfilled; (4) the beam signal quality of the serving cell is less than a ninth preset threshold and the ninth preset condition is fulfilled; (5) the beam signal quality of the candidate cell is greater than a tenth preset threshold and the tenth preset condition is fulfilled.

This allows for the accurate identification of candidate cells that do not fulfill the at least one execution condition. Combining items (1)-(5) above, the second evaluation condition may specifically include at least one of the following:
1) for the sixth preset time duration, the twelfth condition is fulfilled consecutively;
2) the count of consecutive fulfilment of the thirteenth condition is greater than the sixth preset count; or, the count of consecutive fulfilment of the thirteenth condition is greater than or equal to the sixth preset count;
3) for the seventh preset time duration, the count of fulfilment of the fourteenth condition is greater than the seventh preset count; or, for the seventh preset time duration, the count of fulfilment of the fourteenth condition is greater than or equal to the seventh preset count;
4) for the eighth preset time duration, the probability of fulfilling the fifteenth condition is greater than the fifth preset probability; or, for the eighth preset time duration, the probability of fulfilling the fifteenth condition is greater than or equal to the fifth preset probability;
5) within the fifth preset count of statistics, the probability of fulfilling the sixteenth condition is greater than the sixth preset probability; or, within the fifth preset count of statistics, the probability of fulfilling the sixteenth condition is greater than or equal to the sixth preset probability;
6) within the sixth preset count of statistics, the count of fulfilment of the seventeenth condition is greater than the eighth preset count; or, within the sixth preset count of statistics, the count of fulfilment of the seventeenth condition is greater than or equal to the eighth preset count;
7) the eighteenth condition is fulfilled;
8) for the ninth preset time duration, the count of fulfilment of the nineteenth condition is less than the ninth preset count; or, for the ninth preset time duration, the count of fulfilment of the nineteenth condition is less than or equal to the ninth preset number;
9) for the tenth preset time duration, the probability of fulfilling the twentieth condition is less than the seventh preset probability; or, for the tenth preset time duration, the probability of fulfilling the twentieth condition is less than or equal to the seventh preset probability;
10) within the seventh preset count of statistics, the probability of fulfilling the twenty-first condition is less than the eighth preset probability; or, within the seventh preset count of statistics, the probability of fulfilling the twenty-first condition is less than or equal to the eighth preset probability;
11) within the eighth preset count of statistics, the count of fulfilment of the twenty-second condition is less than the tenth preset count; or, within the eighth preset count of statistics, the count of fulfilment of the twenty-second condition is less than or equal to the tenth preset count;
   the second target condition is the twelfth, thirteenth, fourteenth, fifteenth, sixteenth, seventeenth, eighteenth, nineteenth, twentieth, twenty-first, or twenty-second condition, the second target condition includes at least one of the following:
12) sixth sub-condition: beam signal quality of serving cell + X6 > beam signal quality of candidate cell - second preset offset value + Y6; X6 is equal to 0, or is the eleventh variable; Y6 is equal to 0, or is the twelfth variable;
13) the number of beams fulfilling the sixth sub-condition is greater than the sixth preset number of beams; or, the number of beams fulfilling the sixth sub-condition is greater than or equal to the sixth preset number of beams;
14) seventh sub-condition: beam signal quality of serving cell + X7 > sixth preset threshold + Y7; X7 is equal to 0, or is the thirteenth variable; Y7 is equal to 0, or is the fourteenth variable;
15) the number of beams fulfilling the seventh sub-condition is greater than the seventh preset number of beams; or, the number of beams fulfilling the seventh sub-condition is greater than or equal to the seventh preset number of beams;
16) eighth sub-condition: candidate cell beam signal quality + X8 < seventh preset threshold + Y8; X8 is equal to 0, or is the fifteenth variable; Y8 is equal to 0, or is the sixteenth variable;
17) the number of beams fulfilling the eighth sub-condition is greater than the eighth preset number of beams; or, the number of beams fulfilling the eighth sub-condition is greater than or equal to the eighth preset number of beams;
18) ninth sub-condition: beam signal quality of serving cell + X9 < ninth preset threshold + Y9; wherein X9 is equal to 0, or is the seventeenth variable; Y9 is equal to 0, or is the eighteenth variable;
19) the number of beams fulfilling the ninth sub-condition is less than the ninth preset number of beams; or, the number of beams fulfilling the ninth sub-condition is less than or equal to the ninth preset number of beams;
20) tenth sub-condition: beam signal quality of candidate cell + X10 > tenth preset threshold + Y10; X10 is equal to 0, or is the nineteenth variable; Y10 is equal to 0, or is the twentieth variable;
21) the number of beams fulfilling the tenth sub-condition is less than the tenth preset number of beams; or, the number of beams fulfilling the tenth sub-condition is less than or equal to the tenth preset number of beams.

Specifically, the item (1) above can correspond to a case that the second target condition above includes the seventh sub-condition, and at least one of item 1) to item 7) and item 15) above is fulfilled. For example, item (1) above corresponds to the case that the second target condition above includes the seventh sub-condition, and item 2) above is fulfilled. In this case, the first preset condition can be used for indicating that the count of consecutive fulfilment of the seventh sub-condition is greater than the sixth preset count; or, the count of consecutive fulfilment of the seventh sub-condition is greater than or equal to the sixth preset count; that is, the beam signal quality of the serving cell is greater than the sixth preset threshold and the sixth preset condition is fulfilled. One possible implementation is that the count of consecutive fulfilment of the beam signal quality of the serving cell + X7 > the sixth preset threshold + Y7 is greater than the sixth preset number, or, the count of consecutive fulfilment of the beam signal quality of the serving cell + X7 > the sixth preset threshold + Y7 is greater than or equal to the sixth preset count; these will not be elaborated here.

The item (2) above may correspond to a case that the second target condition above includes the eighth sub-condition, and at least one of item 1) to item 7) and item 15) above is fulfilled; the item (3) above may correspond to a case that the second target condition above includes the sixth sub-condition, and at least one of item 1) to item 7) and item 13) above is fulfilled; the item (4) above may correspond to a case that the second target condition above includes the ninth sub-condition, and at least one of item 7) to item 11) and item 19) above is fulfilled; the item (5) above may correspond to a case that the second target condition above includes the tenth sub-condition, and at least one of item 7) to item 11) and item 21) above is fulfilled; but this disclosure is not limited thereto. It should be noted that the preset information mentioned above (such as the sixth preset time duration and the seventh preset time duration) may be the same or different, the variables (such as X6 and X7) may be the same or different, the conditions (such as the twelfth condition and the thirteenth condition) may be the same or different, the candidate cells in the above items may be the same or different, and the candidate cell and the serving cell may be the same or different. In addition, the condition involved in the second evaluation condition (such as the second condition) and the condition involved in the first evaluation condition (such as the thirteenth condition) may be the same or different. The preset parameters of the second evaluation condition and the first evaluation condition (such as the first preset time duration and the sixth preset time duration) may also be the same or different, which are not limited here.

Furthermore, the aforementioned cell management method further includes: obtaining configuration information; wherein the configuration information includes at least one of the following: preset time duration; preset offset value; preset threshold; preset number of beams; preset count; preset probability; count of statistics; or cell measurement configuration information.

This allows for accurate acquisition of configuration information, enabling the terminal to accurately determine the aforementioned conditions. For example, the preset time duration may include the aforementioned first preset time duration, the preset threshold may include the aforementioned first preset threshold, and other parameters are similar. The cell measurement configuration information may include at least one of the following: measurement cell configuration; measurement frequency; measurement physical cell identifier (PCI); synchronization signal block (SSB) configuration information, etc. Obtaining the configuration information may include receiving configuration information transmitted by the network device, but is not limited thereto.

A beam signal quality of cell is the beam signal quality of the serving cell or the beam signal quality of the candidate cell; wherein, the beam signal quality of the cell includes at least one of the following: (1) a signal quality of a beam with the best signal quality within a cell; (2) a beam signal quality resulting from filtering signal qualities of n beams of the cell according to a first preset rule; the n beams are the highest-ranked n beams in signal quality; (3) a beam signal quality resulting from filtering, according to a second preset rule, signal qualities of beams of the cell that are higher than an eleventh preset threshold; (4) a beam signal quality resulting from filtering signal qualities of a first number of first beams of the cell according to a third preset rule; the first number is less than or equal to m, and the first beam has a signal quality higher than a twelfth preset threshold; (5) a signal quality of any beam of the cell; (6) a beam signal quality resulting from filtering, according to a seventh preset rule, signal qualities of all beams of the cell that are measured by the terminal; (7) a signal quality of a beam with the worst signal quality among second beams of the cell; the second beam has a signal quality higher than a thirteenth preset threshold.

This allows for multiple ways to represent beam signal quality of cell. Here, n can be an integer greater than or equal to 1, and m can be an integer greater than or equal to 1. n is configured by network or is specified in a technical specification, and m is configured by network or is specified in a technical specification. The beam signal quality of cell is an L1 measurement, specifically L1 Reference Signal Received Power (RSRP), L1 Reference Signal Received Quality (RSRQ), or L1 Signal-to-Interference Plus Noise Ratio (SINR), etc. The specific measurement can be configured by network or is specified in a technical specification, and is not limited here.

In the embodiment of this disclosure, determining the target cell includes: determining the target cell from the at least one target candidate cell according to a first manner; wherein the first manner includes at least one of the following: selecting the target cell based on implementation of the terminal; selecting a cell where a beam with the highest signal quality is located as the target cell; selecting a cell with the most beams that fulfill the at least one execution condition as the target cell; selecting a cell with the highest signal quality resulting from filtering beam signal qualities according to a fourth preset rule as the target cell; selecting at least one of the target candidate cells as the target cell; or selecting the cell with the best cell-level measurement result based on layer 3 measurement as the target cell.

This allows for the determination of the target cell. The "cell with the best cell-level measurement result" can include the cell with the best measurement result among measurements such as Reference Signal Received Power (RSRP), Reference Signal Received Quality (RSRQ), and Signal-to-Interference Plus Noise Ratio (SINR). Specifically, determination of cell measurement result can be based on a protocol-defined measurement (e.g., RSRP) or network configuration (e.g., measurement based on network configuration, such as RSRQ), but is not limited to these. If there is only one target candidate cell, the UE can determine that target candidate cell as the target cell. "Selecting at least one of the target candidate cells as the target cell" can include: using all target candidate cells that fulfill the at least one execution condition as the target cell (this can be used in TA scenarios, but is not limited thereto).

Determination of the target beam of the target cell includes determining the target beam of the target cell according to a second manner; wherein the second manner includes at least one of the following: selecting a beam with the best signal quality of the target cell as the target beam; selecting, among beams of the target cell, a beam with the best signal quality as the target beam, wherein a signal quality of a beam is obtained by filtering, according to a fifth preset rule, signal qualities of the beam within a first preset time duration; selecting, among beams of the target cell, a beam with the best signal quality as the target beam, wherein a signal quality of a beam is obtained by filtering, according to a sixth preset rule, signal qualities of the beam within a first preset count; selecting, among beams of the target cell, a beam that fulfills the at least one execution condition and is the first to arrive at the terminal as the target beam; selecting, among beams of the target cell, a target beam based on implementation of the terminal; selecting, among beams of the target cell, a beam that fulfills the at least one execution condition and is associated with a pre-configured uplink resource as the target beam (the pre-configured uplink resources can be used by the terminal to transmit the first uplink data); selecting, among beams of the target cell, a beam that fulfills the at least one execution condition, is associated with a pre-configured uplink resource and is the first to arrive at the terminal as the target beam (the pre-configured uplink resources can be used by the terminal to transmit the first uplink data); or selecting, among beams of the target cell, at least one beam that fulfills the at least one execution condition as the target beam.

This allows the target beam of the target cell to be determined. "Best signal quality" can specifically include the best measurement result among Layer 1 measurements such as RSRP, RSRQ, and SINR. Signal quality can be determined based on a protocol-defined measurement (e.g., RSRP) or network configuration (e.g., measurement based on network configuration, such as RSRQ), but is not limited thereto. If the target cell has only one beam, or only one beam fulfills the at least one execution condition (e.g., exceeding a preset threshold for a preset time duration), the UE can determine the beam as the target beam.

Furthermore, the cell management method further includes: managing the target cell using a third manner; wherein the third manner includes at least one of the following: triggering a random access procedure to the target cell; transmitting uplink data on a pre-configured uplink resource; monitoring the Physical Downlink Control Channel (PDCCH) in the target cell; transmitting uplink data on a pre-configured uplink resource if a valid timing advance (TA) value of the target cell is obtained; monitoring the PDCCH according to the Target Transmission Configuration Indicator (TCI) or the Target Beam Index if a valid TA value of the target cell is obtained; triggering a random access procedure to the target cell if a valid TA value of the target cell is not obtained; sending first indication to the network device before accessing the target cell, the first indication being used for indicating information of the target cell and/or target beam; sending second indication to the network device before accessing the target cell if a valid TA value of the target cell is obtained, the second indication being used for indicating information of the target cell and/or target beam; or determining to obtain the TA value of the target cell.

This allows for the management of the target cell. "Determining to obtain the TA value of the target cell" can be understood as: determining that the TA value of the target cell or its target beam needs to be obtained, i.e., determining that the relevant operations for obtaining the TA value of the target cell or its target beam need to be performed. For example, determining that the TA value of the target cell can be obtained, thereby triggering the TA calculation of the target cell, or requesting the network side to trigger the TA acquisition process of the target cell, but this disclosure is not limited thereto. The target beam information is used for indicating the target beam. One possible implementation is: indicating the reference signal information (e.g., SSB index, or Channel State Information - reference signal (CSI-RS) index information) associated with the target beam, or indicating the target transmission configuration indicator (TCI). The target TCI may be a joint TCI (used to simultaneously indicate uplink and downlink transmission, or it may only indicate downlink TCI, or only indicate uplink TCI), or the target TCI may contain both uplink TCI and downlink TCI, or the target TCI may indicate the TCIs of different channels respectively; this disclosure is not limited thereto. One implementation of the above specific behaviors (the operations involved in the third manner) is as follows: the UE performs the operation on the target beam of the target cell (i.e., the operation is associated with the target beam), such as "transmitting uplink data on a pre-configured uplink resource". One implementation is that the pre-configured uplink resource is the uplink resource associated with the target beam of the target cell; for another example, one implementation of "monitoring the physical downlink control channel (PDCCH) in the target cell" is to monitor the PDCCH associated with the target beam of the target cell, but this disclosure is not limited thereto.

The execution condition is configured separately for each cell, or is configured for all cells, or is configured per cell group.

This allows for diverse configurations. Specifically, these can include: configuring all parameters separately for different cells; configuring common parameters for all cells; configuring all parameters separately for different cell groups, with cells within each group sharing same configuration; configuring some parameters separately for different cells and other parameters are common for all cells (e.g., a preset threshold is configured separately for each cell, meaning each cell has its own preset threshold, while a preset time duration is configured for all cells, meaning a single preset time duration applies to all cells); or configuring some parameters separately for different cells, others parameters are configured per cell group, and still others parameter are configured for all cells. For example, a preset threshold is configured separately for each cell, meaning each cell has its own preset threshold, while a preset time duration applies to all cells, meaning a single preset time duration applies to all cells, preset probability 1 applies to cell group 1, and preset probability 2 applies to cell group 2, where cell group 1 contains at least one cell and cell group 2 contains at least one cell, this disclosure is not limited thereto.

In the embodiment of this disclosure, the evaluation of whether there is at least one target candidate cell that fulfills the at least one execution condition includes: determining at least one to-be-evaluated candidate cell; determining from the at least one to-be-evaluated candidate cell whether there is at least one target candidate cell that fulfills the at least one execution condition; wherein, the to-be-evaluated candidate cell includes at least one of the following: a candidate cell in which the terminal has obtained a valid TA; a candidate cell configured with a pre-configured uplink resource for the terminal to transmit first uplink data; a candidate cell to be evaluated indicated by the network configuration indication; all candidate cells configured by network; or all candidate cells associated with the at least one execution conditions.

This allows for accurate identification of target candidate cells. One possible implementation of "network configuration indication indicating to-be-evaluated candidate cells" includes: the network instructing the UE via signaling which candidate cells it can evaluate, or carrying indication to instruct the UE whether to perform evaluation of the candidate cell; this disclosure is not limited thereto.

In the embodiment of this disclosure, the evaluation of whether there is at least one target candidate cell that fulfills the at least one execution condition includes: evaluating whether there is at least one target candidate cell that fulfills the execution condition according to a fourth manner; wherein the fourth manner includes at least one of the following: the terminal's Media Access Control (MAC) entity performs the evaluation based on information reported by the terminal's physical layer; the terminal's physical layer performs the evaluation; and the terminal's Radio Resource Control (RRC) layer performs the evaluation based on information reported by the terminal's lower layer.

Specifically, (1) One possible implementation of the UE's evaluation of candidate cells is as follows: The MAC layer entity evaluates based on the information reported by the physical layer. Specifically, for example, the physical layer performs L1 measurement and determines whether the condition is fulfilled based on the configured preset threshold, such as whether the L1 measurement result of the candidate cell is greater than the preset threshold. When the condition is fulfilled, the physical layer reports the indication to the MAC layer, and/or when the condition is not met, the physical layer reports to the MAC layer. The MAC layer evaluates based on the indication of the physical layer; or, the physical layer reports the measurement result to the MAC layer, and the MAC layer evaluates based on the measurement result reported by the physical layer (for example, determining whether indication about fulfilling the condition is consecutively reported for a preset time duration). The MAC layer determines whether the candidate cell fulfills the at least one execution condition and makes a cell management decision, or notifies the RRC to make a cell management decision; or, the MAC layer evaluates based on the L1 measurement result, determines whether the candidate cell fulfills the at least one execution condition, and makes a cell management decision, or notifies the RRC to make a cell management decision. (2) Another way for a UE to evaluate candidate cells is: the physical layer evaluates the cells, that is, the physical layer judges whether the candidate cells fulfill the at least one execution condition based on the execution condition and makes a cell management decision, or notifies an upper layer such as MAC or RRC to make a cell management decision; (3) Another way for a UE to evaluate candidate cells is: the radio resource control (RRC) layer evaluates the cells based on the information reported by a lower layer. The RRC layer evaluates the cells based on the information reported by the lower layer and makes a cell management decision. Specifically: the RRC receives the measurement results of the candidate cells from the lower layer (such as the physical layer or MAC layer), or the indication of whether the candidate cells fulfill the condition, and then evaluates based thereon. Specifically, for example, the RRC layer judges whether indication about fulfilling the condition reported by the lower layer is consecutively received for a preset time duration. Based on this, the RRC layer determines whether the candidate cells fulfill the at least one execution condition and makes a cell management decision. The lower layer performs L1 measurement and judges whether the condition is fulfilled based on the configured preset threshold. For example, the lower layer judges whether the L1 measurement result of the candidate cell is greater than the preset threshold. When the condition is fulfilled, the lower layer reports the indication to the RRC layer. Or, the RRC layer evaluates based on the L1 measurement results, determines whether the candidate cells fulfill the at least one execution condition, and makes a cell management decision.

An embodiment of this disclosure also provides a cell management method performed by a network device, as shown in Fig. 3, including:
Step 31: sending at least one execution condition; wherein the at least one execution condition is at least one beam-level execution condition configured based on layer 1 measurements.

The transmitting the execution condition may include, but are not limited to, transmitting the execution condition to the terminal. Regarding the "beam-level execution condition configured based on layer 1 measurements," in scenarios configured with multiple beams, the beam-level execution condition configured based on layer 1 measurements can be used to evaluate beam measurement results based on L1 measurements; when only one beam is configured or multiple beams are not supported, the beam-level execution condition configured based on layer 1 measurements can be used to evaluate single-beam measurement results based on Layer 1 measurements or cell measurement results based on Layer 1 measurements, which is not limited here.

By transmitting the execution condition; wherein the at least one execution condition is at least one beam-level execution condition configured based on layer 1 measurements; the cell management method provided in this disclosure enables the UE to explicitly identify (if the execution condition is fulfilled) the target cell and/or target beam, thereby determining whether to perform cell change, or determining whether the target cell's TA can be obtained or through which beam the target cell's TA can be obtained, thus supporting a scheme enabling the UE to determine whether to perform cell management. Cell management may include operations such as cell change, or target cell TA management (e.g., determining that the target cell's TA can be obtained, thereby triggering the target cell's TA calculation, or requesting the network side to trigger the target cell TA acquisition process).

Furthermore, the cell management method further includes: transmitting a first evaluation condition to the terminal; wherein the first evaluation condition is used by the terminal to determine at least one target candidate cell that fulfills the execution condition; wherein, the first evaluation condition includes at least one of the following: (1) the beam signal quality of the serving cell is less than a first preset threshold and the first preset condition is fulfilled; or, the beam signal quality of the serving cell is less than or equal to the first preset threshold and the first preset condition is fulfilled; (2) the beam signal quality of the candidate cell is greater than a second preset threshold and the second preset condition is fulfilled; or, the beam signal quality of the candidate cell is greater than or equal to the second preset threshold and the second preset condition is fulfilled; (3) the beam signal quality of the candidate cell is better than the beam signal quality of the serving cell and a difference between the beam signal quality of the candidate cell and the beam signal quality of the serving cell is at least greater than the third preset threshold and the third preset condition is fulfilled; or, the beam signal quality of the candidate cell is better than the beam signal quality of the serving cell and the difference between the beam signal quality of the candidate cell and the beam signal quality of the serving cell is at least greater than or equal to the third preset threshold and the third preset condition is fulfilled; (4) the beam signal quality of the serving cell is greater than the fourth preset threshold and the fourth preset condition is fulfilled; or, the beam signal quality of the serving cell is greater than or equal to the fourth preset threshold and the fourth preset condition is fulfilled; (5) the beam signal quality of the candidate cell is less than the fifth preset threshold and the fifth preset condition is fulfilled; or, the beam signal quality of the candidate cell is less than or equal to the fifth preset threshold and the fifth preset condition is fulfilled.

This allows the terminal to accurately determine candidate cells that fulfill the at least one execution condition.

In the embodiment of this disclosure, the cell management method further includes: transmitting a second evaluation condition to the terminal; wherein the second evaluation condition is used by the terminal to determine at least one target candidate cell that does not fulfill the execution condition; wherein, the second evaluation condition includes at least one of the following: (1) the beam signal quality of the serving cell is greater than a sixth preset threshold and the sixth preset condition is fulfilled; (2) the beam signal quality of the candidate cell is less than a seventh preset threshold and the seventh preset condition is fulfilled; (3) the beam signal quality of the candidate cell is better than the beam signal quality of the serving cell and the difference between the beam signal quality of the candidate cell and the beam signal quality of the serving cell is at least less than an eighth preset threshold and the eighth preset condition is fulfilled; (4) the beam signal quality of the serving cell is less than a ninth preset threshold and the ninth preset condition is fulfilled; (5) the beam signal quality of the candidate cell is greater than a tenth preset threshold and the tenth preset condition is fulfilled.

This allows the terminal to accurately identify candidate cells that do not fulfill the at least one execution condition.

Furthermore, the cell management method further includes: transmitting configuration information; wherein the configuration information includes at least one of the following: preset time duration; preset offset value; preset threshold; preset number of beams; preset count; preset probability; count of statistics; or cell measurement configuration information.

This allows the terminal to accurately obtain configuration information and thus accurately determine the aforementioned conditions. For example, the preset time duration may include the aforementioned first preset time duration, the preset threshold may include the aforementioned first preset threshold, and other parameters are similar. The cell measurement configuration information may include at least one of the following: measurement cell configuration; measurement frequency; measurement physical cell identifier (PCI); and synchronization signal block (PBCH Block, SSB) configuration information. Transmitting configuration information may include, but is not limited to, transmitting configuration information to the terminal.

A beam signal quality of cell is the beam signal quality of the serving cell or the beam signal quality of the candidate cell; wherein, the beam signal quality of the cell includes at least one of the following: (1) a signal quality of a beam with the best signal quality within a cell; (2) a beam signal quality resulting from filtering signal qualities of n beams of the cell according to a first preset rule; the n beams are the highest-ranked n beams in signal quality; (3) a beam signal quality resulting from filtering, according to a second preset rule, signal qualities of beams of the cell that are higher than an eleventh preset threshold; (4) a beam signal quality resulting from filtering signal qualities of a first number of first beams of the cell according to a third preset rule; the first number is less than or equal to m, and the first beam has a signal quality higher than a twelfth preset threshold; (5) a signal quality of any beam of the cell; (6) a beam signal quality resulting from filtering, according to a seventh preset rule, signal qualities of all beams of the cell that are measured by the terminal; (7) a signal quality of a beam with the worst signal quality among second beams of the cell; the second beam has a signal quality higher than a thirteenth preset threshold.

This allows for multiple ways to represent cell beam signal quality. Here, n can be an integer greater than or equal to 1, and m can be an integer greater than or equal to 1. n is configured by network or is specified in a technical specification, and m is configured by network or is specified in a technical specification. The cell beam signal quality is an L1 measurement, specifically L1 Reference Signal Received Power (RSRP), L1 Reference Signal Received Quality (RSRQ), or L1 Signal-to-Interference Plus Noise Ratio (SINR), etc. The specific measurement can be configured by network or is specified in a technical specification, and is not limited here.

Furthermore, the cell management method further includes at least one of the following: receiving first indication transmitted by the terminal before accessing the target cell, the first indication being used for indicating information of the target cell and/or target beam; receiving second indication transmitted by the terminal before accessing the target cell after obtaining a valid TA value of the target cell, the second indication being used for indicating information of the target cell and/or target beam.

This allows the terminal to accurately manage the target cell. The target beam information is used for indicating the target beam. One possible implementation is to indicate the reference signal information (e.g., SSB index or CSI-RS index information) associated with the target beam, or to indicate the target TCI. The target TCI may be a joint TCI (used for indicating both uplink and downlink transmissions simultaneously, or it may only indicate the downlink TCI, or only the uplink TCI), or it may contain both uplink and downlink TCIs, or it may indicate the TCIs of different channels respectively. There are no restrictions on this.

The execution condition is configured per cell, or is configured for all cells, or is configured per cell group.

This allows for diverse configurations. Specifically, these can include: configuring all parameters separately for different cells; configuring common parameters for all cells; configuring all parameters separately for different cell groups, with cells within each group sharing same configuration; configuring some parameters separately for different cells and other parameters are common for all cells (e.g., a preset threshold is configured separately for each cell, meaning each cell has its own preset threshold, while a preset time duration is configured for all cells, meaning a single preset time duration applies to all cells); or configuring some parameters separately for different cells, others parameters are configured per cell group, and still others parameter are configured for all cells. For example, a preset threshold is configured separately for each cell, meaning each cell has its own preset threshold, while a preset time duration applies to all cells, meaning a single preset time duration applies to all cells, preset probability 1 applies to cell group 1, and preset probability 2 applies to cell group 2, where cell group 1 contains at least one cell and cell group 2 contains at least one cell, this disclosure is not limited thereto.

Furthermore, the cell management method further includes at least one of the following: transmitting network configuration indication to the terminal, the network configuration indication being used for indicating a candidate cell needing to be evaluated; configuring candidate cells to the terminal; and transmitting a candidate cell configuration associated with the at least one execution condition to the terminal.

This allows the terminal to accurately determine the target candidate cell. Specifically, one possible implementation of "transmitting network configuration indication to the terminal, the network configuration indication being used for indicating the to-be-evaluated candidate cells" includes: the network instructing the UE via signaling which candidate cells it can evaluate, or carrying indication to instruct the UE whether to perform evaluation of the candidate cell; this disclosure is not limited thereto.

It should be noted that the relevant content on the terminal side and network device side mentioned above can be referred to each other, and the repeated parts will not be repeated. In addition, the preset rules mentioned above (such as the first rule) may include: obtaining the average values and sorting to support filtering, or calculating and sorting according to a certain linear rule (preset linear rule) to support filtering, but are not limited thereto, any other rule that can support filtering is acceptable.

The following provides an example illustrating the cell management method according to an embodiment of this disclosure.

To address the aforementioned technical problems, this disclosure provides a cell management method, specifically a method for determining cell management. This solution mainly involves: the network side configures the beam-level execution condition based on L1 measurement, and the UE evaluates whether the execution condition is fulfilled to decide whether to perform cell management. Specifically, this solution may include the following:

### Part 1, UE side:

1) The UE receives the execution condition and associated candidate cell configuration configured by the network side. The UE evaluates whether the candidate cell fulfills the at least one execution condition (corresponding to the above-mentioned obtaining the execution condition, which may specifically include: receiving the execution condition transmitted by the network device; evaluating whether there is at least one target candidate cell that fulfills the at least one execution condition). The execution condition is beam-level execution condition based on L1 measurement configuration.

When at least one candidate cell fulfills the at least one execution condition, the UE determines the target cell and/or determines the target beam for accessing the target cell (target beam information such as beam index, or one Transmission Configuration Indicator (TCT; applied to downlink, or simultaneously applied to uplink and downlink, or DL/UL TCI, i.e., uplink and downlink are configured separately, or different channels are configured with different TCIs, which is not limited here); which corresponds to the above mentioned: if at least one target candidate cell exists, the UE determines the target cell and/or determines the target beam of the target cell.

First, it should be noted that the specific content of the first condition in each of the following execution conditions may be the same or different, and the preset information involved may also be the same or different (for example, the value of the first preset count involved in the following multiple items may be the same or different). The preset information involved in items 2) and 3) below may be the same or different (for example, the value of the first preset count and the second preset count mentioned below may be the same or different), which is not limited here.

2) Based on 1), the UE considers a candidate cell to fulfill the at least one execution condition when at least one of the following conditions is fulfilled:
- the first condition is fulfilled for the first preset time duration;
- the count of consecutive fulfilment of the first condition is greater than (or greater than or equal to, i.e., > or ≥) the first preset count, where "greater than or equal to" can also be expressed as greater than or equal to, and is not limited here; which corresponds to the above mentioned: the count of consecutive fulfilment of the second condition is greater than the first preset count; or, the count of consecutive fulfilment of the second condition is greater than or equal to the first preset count;
- for a first preset time duration, the count of fulfilment of the first condition is greater than (or greater than or equal to) the first preset count; which corresponds to the above mentioned: for a second preset time duration, the count of fulfilment of the third condition is greater than the second preset count; or, for a second preset time duration, the count of fulfilment of the third condition is greater than or equal to the second preset count;
- for a first preset time duration, the probability of fulfilling the first condition is greater than (or greater than or equal to) the first preset probability; which corresponds to the above mentioned: for a third preset time duration, the probability of fulfilling the fourth condition is greater than the first preset probability; or, for a third preset time duration, the probability of fulfilling the fourth condition is greater than or equal to the first preset probability;
- within the first preset count of statistics, the count of fulfilment of the first condition is greater than (or greater than or equal to) the first preset count of statistics; which corresponds to the above mentioned: within the first count of statistics, the count of fulfilment of the fifth condition is greater than the third preset count of statistics; or, within the first count of statistics, the count of fulfilment of the fifth condition is greater than or equal to the third preset count of statistics;
- within the first preset count of statistics, the probability of fulfilling the first condition is greater than (or greater than or equal to) the first preset probability; which corresponds to the above mentioned: within the second count of statistics, the probability of fulfilling the sixth condition is greater than the second preset probability; or, within the second count of statistics, the probability of fulfilling the sixth condition is greater than or equal to the second preset probability;
- the first condition is fulfilled; which corresponds to the above mentioned: the seventh condition is fulfilled;
- for the first preset time duration, the count of fulfilment of the first condition is less than (or less than or equal to, i.e., < or ≤) the first preset count; here, "less than or equal to" can also be expressed as less than or equal to, which is not limited here; which corresponds to the above mentioned: for the fourth preset time duration, the count of fulfilment of the eighth condition is less than the fourth preset count; or, for the fourth preset time duration, the count of fulfilment of the eighth condition is less than or equal to the fourth preset count;
- for the first preset time duration, the probability of fulfilling the first condition is less than (or less than or equal to) the first preset probability; which corresponds to the above mentioned: for the fifth preset time duration, the probability of fulfilling the ninth condition is less than the third preset probability; or, for the fifth preset time duration, the probability of fulfilling the ninth condition is less than or equal to the third preset probability;
- within the first preset count of statistics, the count of fulfilment of the first condition is less than (or less than or equal to) the first preset count; which corresponds to the above mentioned: within the third count of statistics, the count of fulfilment of the tenth condition is less than the fifth preset count; or, within the third count of statistics, the count of fulfilment of the tenth condition is less than or equal to the fifth preset count;
- within the first preset count of statistics, the probability of fulfilling the first condition is less than (or less than or equal to) the first preset probability; which corresponds to the above mentioned: within the fourth count of statistics, the probability of fulfilling the eleventh condition is less than the fourth preset probability; or, within the fourth count of statistics, the probability of fulfilling the eleventh condition is less than or equal to the fourth preset probability.

The first condition includes at least one of the following:
the beam signal quality of the serving cell + X < (or ≤) the beam signal quality of the neighboring cell (i.e., the candidate cell) - the first preset offset value + Y; which corresponds to the above mentioned first sub-condition, the first sub-condition is: serving cell beam signal quality + X1 < candidate cell beam signal quality - the first preset offset value + Y1, or, the first sub-condition is: serving cell beam signal quality + X1 ≤ candidate cell beam signal quality - the first preset offset value + Y1; where X1 is equal to 0, or is a first variable; where Y1 is equal to 0, or is a second variable;
the number of beams that fulfill (serving cell beam signal quality + X < (or ≤) neighboring cell beam signal quality - first preset offset value + Y) is greater than (or greater than or equal to) the first preset number of beams; which corresponds to the above mentioned: number of beams that fulfill the first sub-condition is greater than the first preset number of beams, or the number of beams that fulfill the first sub-condition is greater than or equal to the first preset number of beams;
the beam signal quality of the serving cell + X < (or ≤) the second preset threshold + Y; which corresponds to the above mentioned second sub-condition, the second sub-condition is: serving cell beam signal quality + X2 < the first preset threshold + Y2, or, the second sub-condition is: serving cell beam signal quality + X2 ≤ the first preset threshold + Y2; where X2 is equal to 0, or is a third variable; where Y2 is equal to 0, or is a fourth variable;
neighboring cell beam signal quality +X > (or ≥) the first preset threshold +Y; which corresponds to the above mentioned: the number of beams fulfilling the second sub-condition being greater than the second preset number of beams, or the number of beams fulfilling the second sub-condition being greater than or equal to the second preset number of beams;
the number of beams fulfilling (neighboring cell beam signal quality + X > (or ≥) equal to the first preset threshold + Y) is greater than (or greater than or equal to) the first preset number of beams; which corresponds to the above mentioned third sub-condition, the third sub-condition is: candidate cell beam signal quality + X3 > second preset threshold + Y3, or, the third sub-condition is: candidate cell beam signal quality + X3 ≥ second preset threshold + Y3; where X3 is equal to 0, or is the fifth variable; where Y3 is equal to 0, or is the sixth variable;
beams that fulfill (serving cell beam signal quality + X < (or ≤) equal to the second preset threshold + Y) is greater than (or greater than or equal to) the first preset number of beams; which corresponds to the above mentioned: the number of beams that fulfill the third sub-condition being greater than the third preset number of beams, or the number of beams that fulfill the third sub-condition being greater than or equal to the third preset number of beams;
serving cell beam signal quality +X > (or ≥) the second preset threshold +Y; which corresponds to the above mentioned fourth sub-condition, the fourth sub-condition is: serving cell beam signal quality +X4 > the fourth preset threshold +Y4, or, the fourth sub-condition is: serving cell beam signal quality +X4 ≥ the fourth preset threshold +Y4; where X4 is equal to 0, or is the seventh variable; where Y4 is equal to 0, or is the eighth variable;
the number of beams that fulfill (serving cell beam signal quality + X > (or ≥) the second preset threshold + Y) is less than (or less than or equal to) the first preset number of beams; which corresponds to the above mentioned: the number of beams that fulfill the fourth sub-condition being less than the fourth preset number of beams, or the number of beams that fulfill the fourth sub-condition being less than or equal to the fourth preset number of beams;
neighboring cell beam signal quality +X < (or ≤) first preset threshold +Y; which corresponds to the above mentioned fifth sub-condition, the fifth sub-condition is: candidate cell beam signal quality +X5 < fifth preset threshold +Y5, or, the fifth sub-condition is: candidate cell beam signal quality +X5 ≤ fifth preset threshold +Y5; where X5 is equal to 0, or is the ninth variable; where Y5 is equal to 0, or is the tenth variable;
the number of beams that fulfill (neighboring cell beam signal quality + X < (or ≤) first preset threshold + Y) is less than (or less than or equal to) the first preset number of beams; which corresponds to the above mentioned: the number of beams that fulfill the fifth sub-condition being less than the fifth preset number of beams, or the number of beams that fulfill the fifth sub-condition being less than or equal to the fifth preset number of beams.

It should be noted that X and Y can be equal to 0 or other variables, which are not limited here.

3) Based on 1), the UE considers the candidate cell not to fulfill the at least one execution condition when at least one of the following conditions is fulfilled:
- for the first preset time duration, the second condition is consecutively met; which corresponds to the above mentioned: the twelfth condition being consecutively met for the sixth preset time duration;
- the count of consecutive fulfilment of the second condition is greater than (or greater than or equal to) the first preset count; which corresponds to the above mentioned: the count of consecutive fulfilment of the thirteenth condition is greater than the sixth preset count; or, the count of consecutive fulfilment of the thirteenth condition is greater than or equal to the sixth preset count;
- for the first preset time duration, the count of fulfilment of the second condition is greater than (or greater than or equal to) the first preset count; which corresponds to the above mentioned: for the seventh preset time duration, the count of fulfilment of the fourteenth condition is greater than the seventh preset count; or, for the seventh preset time duration, the count of fulfilment of the fourteenth condition is greater than or equal to the seventh preset count;
- for the first preset time duration, the probability of fulfilling the second condition is greater than (or greater than or equal to) the first preset probability; which corresponds to the above mentioned: for the eighth preset time duration, the probability of fulfilling the fifteenth condition is greater than the fifth preset probability; or, for the eighth preset time duration, the probability of fulfilling the fifteenth condition is greater than or equal to the fifth preset probability;
- within the first preset count of statistics, the probability of fulfilling the second condition is greater than (or greater than or equal to) the first preset probability; which corresponds to the above mentioned: within the fifth preset count of statistics, the probability of fulfilling the sixteenth condition is greater than the sixth preset probability; or, within the fifth preset count of statistics, the probability of fulfilling the sixteenth condition is greater than or equal to the sixth preset probability;
- within the first preset count of statistics, the count of fulfilment of the second condition is greater than (or greater than or equal to) the first preset count; which corresponds to the above mentioned: within the sixth preset count of statistics, the count of fulfilment of the seventeenth condition is greater than the eighth preset count; or, within the sixth preset count of statistics, the count of fulfilment of the seventeenth condition is greater than or equal to the eighth preset count;
- the second condition is fulfilled; which corresponds to the above mentioned: the eighteenth condition is fulfilled;
- for the first preset time duration, the count of fulfilment of the second condition is less than (or less than or equal to) the first preset count; which corresponds to the above mentioned: for the ninth preset time duration, the count of fulfilment of the nineteenth condition is less than the ninth preset count; or, for the ninth preset time duration, the count of fulfilment of the nineteenth condition is less than or equal to the ninth preset count;
- for the first preset time duration, the probability of fulfilling the second condition is less than (or less than or equal to) the first preset probability; which corresponds to the above mentioned: for the tenth preset time duration, the probability of fulfilling the twentieth condition is less than the seventh preset probability; or, for the tenth preset time duration, the probability of fulfilling the twentieth condition is less than or equal to the seventh preset probability;
- within the first preset count of statistics, the probability of fulfilling the second condition is less than (or less than or equal to) the first preset probability; which corresponds to the above mentioned: within the seventh preset count of statistics, the probability of fulfilling the twenty-first condition is less than the eighth preset probability; or, within the seventh preset count of statistics, the probability of fulfilling the twenty-first condition is less than or equal to the eighth preset probability;
- within the first preset count of statistics, the count of fulfilment of the second condition is less than (or less than or equal to) the first preset count; which corresponds to the above mentioned: within the eighth preset count of statistics, the count of fulfilment of the twenty-second condition is less than the tenth preset count; or, within the eighth preset count of statistics, the count of fulfilment of the twenty-second condition is less than or equal to the tenth preset count.

The second condition includes at least one of the following:
serving cell beam signal quality +X > neighboring cell beam signal quality - first preset offset value +Y; which corresponds to the above mentioned sixth sub-condition, the sixth sub-condition is: serving cell beam signal quality +X6 > candidate cell beam signal quality - second preset offset value +Y6; where X6 is equal to 0, or is the eleventh variable; where Y6 is equal to 0, or is the twelfth variable;
the number of beams that fulfill (serving cell beam signal quality + X > neighboring cell beam signal quality - first preset offset value + Y) is greater than (or greater than or equal to) the first preset number of beams; which corresponds to the above mentioned: the number of beams that fulfill the sixth sub-condition being greater than the sixth preset number of beams; or, the number of beams that fulfill the sixth sub-condition being greater than or equal to the sixth preset number of beams;
serving cell beam signal quality +X > second preset threshold +Y; which corresponds to the above mentioned seventh sub-condition, the seventh sub-condition is: serving cell beam signal quality +X7 > sixth preset threshold +Y7; where X7 is equal to 0, or is the thirteenth variable; where Y7 is equal to 0, or is the fourteenth variable;
neighboring cell beam signal quality +X < first preset threshold +Y; which corresponds to the above mentioned: the number of beams fulfilling the seventh sub-condition being greater than the seventh preset number of beams; or, the number of beams fulfilling the seventh sub-condition being greater than or equal to the seventh preset number of beams;
the number of beams that fulfill (neighboring cell beam signal quality + X < first preset threshold + Y) is greater than (or greater than or equal to) the first preset number of beams; which corresponds to the above mentioned eighth sub-condition, the eighth sub-condition is: candidate cell beam signal quality + X8 < seventh preset threshold + Y8; X8 is equal to 0, or is the fifteenth variable; Y8 is equal to 0, or is the sixteenth variable;
the number of beams that fulfill (serving cell beam signal quality + X > second preset threshold + Y) is greater than (or greater than or equal to) the first preset number of beams; which corresponds to the above mentioned: the number of beams that fulfill the eighth sub-condition being greater than the eighth preset number of beams; or, the number of beams that fulfill the eighth sub-condition being greater than or equal to the eighth preset number of beams;
serving cell beam signal quality + X < second preset threshold + Y; which corresponds to the above mentioned ninth sub-condition, the ninth sub-condition is: serving cell beam signal quality + X9 < ninth preset threshold + Y9; where X9 is equal to 0, or is the seventeenth variable; where Y9 is equal to 0, or is the eighteenth variable;
the number of beams that fulfill (serving cell beam signal quality + X < second preset threshold + Y) is less than (or less than or equal to) the first preset number of beams; which corresponds to the above mentioned: the number of beams that fulfill the ninth sub-condition is less than the ninth preset number of beams; or, the number of beams that fulfill the ninth sub-condition is less than or equal to the ninth preset number of beams;
neighboring cell beam signal quality +X > first preset threshold +Y; which corresponds to the above mentioned tenth sub-condition, the tenth sub-condition is: candidate cell beam signal quality +X10 > tenth preset threshold +Y10; X10 is equal to 0, or is the nineteenth variable; Y10 is equal to 0, or is the twentieth variable;
the number of beams that fulfill (neighboring cell beam signal quality + X > first preset threshold + Y) is less than (or less than or equal to) the first preset number of beams; which corresponds to the above mentioned: the number of beams that fulfill the tenth sub-condition is less than the tenth preset number of beams; or, the number of beams that fulfill the tenth sub-condition is less than or equal to the tenth preset number of beams.

It should be noted that X and Y can be equal to 0 or other variables, which are not limited here.

4) Based on any one of 1) to 3), before evaluating whether the candidate cell fulfills the at least one execution condition, the solution further includes receiving at least one of the following configurations:
- a first time threshold, which can correspond to the preset time duration mentioned above, such as the first preset time duration;
- an L1 measurement threshold, which can correspond to the preset thresholds mentioned above, such as the first preset threshold and the second preset threshold;
- an L1 measurement threshold offset value, which can correspond to the preset offset value mentioned above, such as the first preset offset value;
- a first number of beams, which can correspond to the preset number of beams mentioned above, such as the first preset number of beams;
- a first count, which can correspond to the preset count mentioned above, such as the first preset count;
- a first probability, which can correspond to the preset probabilities mentioned above, such as the first preset probability;
- a first count of statistics, which can correspond to the preset count of statistics (or the count of statistics) mentioned above, such as the first preset count of statistics;
- measurement cell configuration (corresponding to the cell measurement configuration information mentioned above), such as pre-configured cell identifier (ID), measurement frequency, measurement physical cell identifier (PCI), or synchronization signal/PBCH block (SSB) configuration information (e.g., SSB measurement time window, or SSB burst bitmap).

5) Based on 2) or 3), the beam signal quality of the cell includes at least one of the following:
- a signal quality of a best beam of the cell, which corresponds to the above mentioned signal quality of the beam with the best signal quality of the cell;
- a beam signal quality resulting from filtering best n beams according to a preset rule; which corresponds to the beam signal quality resulting from filtering signal qualities of n beams of the cell according to a first preset rule; the n beams are the highest-ranked n beams in signal quality;
- a beam signal quality resulting from filtering beams with signal quality higher than a preset threshold according to a preset rule; which corresponds to the beam signal quality resulting from filtering, according to a second preset rule, signal qualities of beams of the cell that are higher than an eleventh preset threshold;
- a beam signal quality resulting from filtering signal qualities of the best n beams that are higher than a preset threshold according to a preset rule; which corresponds to the beam signal quality resulting from filtering signal qualities of a first number of first beams of the cell according to a third preset rule; the first number is less than or equal to m, and the first beam has a signal quality higher than a twelfth preset threshold;
- a signal quality of any one beam; which corresponds to the above mentioned signal quality of any beam of the cell;
- a beam signal quality resulting from filtering signal qualities of all beams of the cell that are measured by the UE according to a preset rule; which corresponds to the beam signal quality resulting from filtering, according to a seventh preset rule, signal qualities of all beams of the cell that are measured by the terminal;
- a signal quality of the worst beam within the cell that exceeds a preset threshold; which corresponds to the signal quality of the beam with the worst signal quality among the second beams contained within the cell; the signal quality of the second beam exceeds a thirteenth preset threshold.

6) Based on 1) or 2), when at least one candidate cell fulfills the at least one execution condition, the UE determines the target cell in at least one of the following ways (corresponding to the first manner including at least one of the following):
the UE selects a target cell based on implementation of the UE; which corresponds to the above-mentioned selection of a target cell based on the implementation of the terminal;
the UE selects the cell with the best beam signal quality as the target cell; which corresponds to selecting a cell where a beam with the highest signal quality is located as the target cell;
the UE selects the cell with the most beams that fulfill the first condition as the target cell; which corresponds to selecting the cell with the most beams that fulfill the at least one execution condition as the target cell;
the UE selects the cell with the highest signal quality resulting from filtering beam signal qualities according to a preset rule as the target cell; which corresponds to the selecting a cell with the highest signal quality resulting from filtering beam signal qualities according to a fourth preset rule as the target cell;
the UE determines at least one candidate cell that fulfills the at least one execution condition as the target cell; which corresponds to the selecting at least one of the target candidate cells as the target cell;
the UE selects the cell with the best cell-level measurement result as the target cell; which corresponds to selecting the cell with the best cell-level measurement result based on Layer 3 measurements as the target cell.

7) Based on 1) or 2), that the UE determines the target beam of the target cell includes at least one of the following (corresponding to the determination of the target beam of the target cell according to the second manner described above; wherein the second manner includes at least one of the following):
the beam with the best beam signal quality is the target beam; which corresponds to the above mentioned selecting a beam with the best signal quality of the target cell as the target beam;
the beam with the best quality resulting from filtering according to preset rules within a first preset time duration is the target beam; which corresponds to the above mentioned selecting, among beams of the target cell, a beam with the best signal quality as the target beam, wherein a signal quality of a beam is obtained by filtering, according to a fifth preset rule, signal qualities of the beam within a first preset time duration;
the beam with the best quality resulting from filtering according to a preset rule within a first preset count (such as the count sampling is performed or the count measurement is performed) is the target beam; which corresponds to the above mentioned selecting, among beams of the target cell, a beam with the best signal quality as the target beam, wherein a signal quality of a beam is obtained by filtering, according to a sixth preset rule, signal qualities of the beam within a first preset count;
the beam that fulfills the first condition and arrives first (the beam that the UE receives or detects first in time); which corresponds to the above mentioned selecting, among beams of the target cell, a beam that fulfills the at least one execution condition and is the first to arrive at the terminal as the target beam;
selecting based on implementation of the UE; which corresponds to the above mentioned selecting, among beams of the target cell, a target beam based on implementation of the terminal;
a beam that fulfills the first condition and is associated with pre-configured uplink resource; which corresponds to the above mentioned selecting, among beams of the target cell, a beam that fulfills the at least one execution condition and is associated with a pre-configured uplink resource as the target beam;
a beam that fulfills the first condition and is associated with pre-configured uplink resource and is the first beam to arrive; which corresponds to the above mentioned selecting, among beams of the target cell, a beam that fulfills the at least one execution condition, is associated with a pre-configured uplink resource and is the first to arrive at the terminal as the target beam;
a beam that fulfills the first condition; which corresponds to the above mentioned selecting, among beams of the target cell, at least one beam that fulfills the at least one execution condition as the target beam.

8) Based on 1), the way in which the UE manages the target cell (corresponding to the third manner above) includes at least one of the following:
- triggering a random access procedure to the target cell; which corresponds to the above-mentioned triggering of a random access procedure to the target cell;
- the UE transmits uplink data on a pre-configured uplink resource; which corresponds to the above-mentioned transmission of uplink data on a pre-configured uplink resource;
- monitoring a physical downlink control channel (PDCCH) in the target cell; which corresponds to the above-mentioned monitoring the Physical Downlink Control Channel (PDCCH) in the target cell;
- if the UE has a valid timing advance (TA) value of the target cell, the UE transmits uplink data on the pre-configured uplink resources; which corresponds to the above mentioned: the UE transmits uplink data on the pre-configured uplink resources when the valid timing advance (TA) value of the target cell is obtained;
- if the UE has a valid TA value of the target cell, the UE monitors the PDCCH at the target TCI/Beam index; which corresponds to the above mentioned: when a valid TA value of the target cell is obtained, the UE monitors the PDCCH according to the target TCI or the target beam index;
- if the UE does not have a valid TA value of the target cell, the UE triggers a random access procedure to the target cell; which corresponds to the above mentioned: when a valid TA value of the target cell is not obtained, triggering a random access procedure to the target cell;
- before accessing the target cell, the UE transmits indication to the source cell, indicating the target cell, and/or the target SSB index and/or the target TCI (uplink/downlink TCI or joint TCI) to the source cell; which corresponds to the above mentioned: before accessing the target cell, the UE transmits first indication to the network device, the first indication being used for indicating the target cell and/or the target beam information;
- if the UE has a valid TA value of the target cell, before accessing the target cell, the UE transmits indication to the source cell, indicating the target cell, and/or the target SSB index and/or the target TCI (uplink/downlink TCI or joint TCI) to the source cell; which corresponds to the above mentioned: when a valid TA value of the target cell is obtained, before accessing the target cell, the UE transmits second indication to the network device, the second indication being used for indicating the target cell and/or the target beam information;
determines to obtain the TA value of the target cell.

9) Based on any one of 1)-3), the above conditions can be configured per cell, such as the serving cell and each candidate cell are configured separately, or they can be configured commonly, i.e., without distinguishing between candidate cells; which corresponds to the above mentioned: the at least one execution condition is configured separately for each cell, or is configured for all cells, or is configured per cell group.

10) Based on 1), the candidate cells evaluated by the UE (corresponding to the to-be-evaluated candidate cells mentioned above) have at least one of the following characteristics:
the UE has obtained a valid TA value of the candidate cell; which corresponds to the candidate cell for which the terminal has obtained a valid TA;
the candidate cell has pre-configured uplink resources for the UE to transmit the first uplink data in the target cell (specific resources are prepared for the UE); which corresponds to the candidate cell that has been configured with pre-configured uplink resources for the terminal to transmit the first uplink data;
the network configuration indication instructs the UE to evaluate the candidate cell; which corresponds to the candidate cell to be evaluated indicated by the network configuration indication;
all candidate cells configured by the network; which corresponds to the above mentioned all candidate cells configured by the network;
all candidate cells associated with the at least one execution condition; which corresponds to the above mentioned all candidate cells associated with the at least one execution condition.

### Part Two, Network Side:

The network side transmits some information to the terminal to support the terminal in implementing the above scheme, such as transmitting at least one of the following: execution condition, first evaluation condition, etc. For details, please refer to the description about the UE-side, which will not be repeated here.

The following provides specific examples illustrating this solution.

### Example 1: Implementation process;

Step 1: Assuming the UE's current serving cell is cell0, the network transmits signaling to configure the configuration information of candidate cells cell1 and cell2 for the UE. This configuration information, taking cell1 as an example, includes the configuration information of cell1, but is not limited to configuration information of only cell1; for example, it can include the configuration information of the cell group with cell1 as the SpCell. Furthermore, candidate cells cell1 and/or cell2 can be a candidate primary cell (PCell), a primary SCG cell (PSCell), a special cell (SpCell), or a secondary cell (SCell), which is not limited here. The serving cell cell0 can be a PCell, PSCell, SpCell, or any serving cell. In addition, the signaling may also include the execution condition configured by the network for the candidate cells.

Step 2: The UE receives the candidate cells and execution condition configured by the network, and evaluates whether the candidate cells fulfill the at least one execution condition. The candidate cells to be evaluated include at least one of the following:
a) all candidate cells configured by network; or
b) all candidate cells associated with the at least one execution condition;
c) a candidate cell designated by the network, for example, the network notifies, with an identifier, the UE to evaluate cell1, but not to evaluate cell2;
d) a candidate cell whose valid TA value is obtained by the UE; the candidate cell whose valid TA value is obtained by the UE can be a candidate cell whose valid TA value is configured by the network to the UE via signaling, or a candidate cell whose valid TA value is obtained by the UE through its calculation; for example, if the network configures cell1 and cell2 and both of the cells are associated with the at least one execution condition, and the UE has obtained a valid TA value of cell1, but has not obtained a valid TA value of cell2, then the UE evaluates whether cell1 fulfills the at least one execution condition without evaluating cell2;
e) a candidate cell has a pre-configured uplink resource which is used by the UE to transmit the first uplink data in the target cell.

The candidate cell to be evaluated has one of the above features, for example, a candidate cell to be evaluated by UE is a candidate cell with feature b); or, the candidate cell to be evaluated can have a combination of some of the above features, for example, a candidate cell to be evaluated by UE can be an intersection of cells that simultaneously have features b), d), and e).

Step 3: If UE evaluates that at least one candidate cell fulfills the at least one execution condition,
the UE determines the target cell, e.g., cell1, or
the UE determines the target cell and the target beam.

Correspondingly, the process proceeds with steps 4-1 and/or 4-2.

Step 4-1: the UE accesses the target cell, where the access method (corresponding to the third manner above) includes any one of the following:
manner 1: the UE triggers a random access procedure to access the target cell; one possible implementation is that the UE triggers a random access procedure on the target beam of the target cell;
manner 2: the UE transmits uplink data on a pre-configured uplink resource, optionally, the selected uplink resource is an uplink resource associated with the target beam;
manner 3: monitor the PDCCH in the target cell; optionally, the monitoring the PDCCH is to monitor the PDCCH occasion associated with the target beam;
manner 4: determine if there is a valid TA value of the target cell; if there is a valid TA value of the target cell, the process proceeds according to manner 2 or manner 3; otherwise, the process proceeds according to manner 1.

In some embodiments, another implementation is that, before step 4-1, i.e., before the UE accesses the target cell, the UE performs step 4-0: transmitting indication to the source cell, which in this embodiment is cell0, to notify the source cell cell0 of information of the target cell that the UE is accessing, wherein the information is:
target cell (information), for example, cell1;
or, information of the target cell and/or target beam, where the target beam information is, for example, the SSB index associated with the target cell, or the used target TCI (uplink TCI and/or downlink TCI, or one TCI applied to downlink, or applied to both uplink and downlink).

In some embodiments, before performing step 4-0, the UE determines whether there is a valid TA value of the target cell. If there is a valid TA value of the target cell, then step 4-0 is performed, but this disclosure is not limited thereto.

Step 4-2: The UE determines that the TA value of the target cell needs to be obtained (corresponding to the third manner above). For example, if the UE determines that cell1 fulfills the at least one execution condition, then the UE determines that the TA value of cell1 needs to be obtained, and the relevant operations for obtaining the TA value of cell1 needs to be performed; or, if the UE determines that cell1 fulfills the at least one execution condition and determines the target beam (e.g., SSB1, where the beam can be distinguished by SSB), then the UE determines that the TA associated with cell1 SSB1 needs to be obtained, or determines that the TA value of cell1 needs to be obtained through cell1 SSB1, then performs the relevant operations for obtaining the TA value of cell1. The relevant operations may include: triggering the TA acquisition process, or requesting the network to trigger the TA acquisition process.

Steps 4-1 and 4-2 above are independent and parallel steps.

Example 2: Execution condition (including entry condition, execution condition entry condition, exit condition, and execution condition exit condition).

Example 2-1: Entry condition (corresponding to the first target condition mentioned above).

The UE evaluates a first condition, wherein the first condition may include at least one of the following.
1) Serving cell beam signal quality + X < (or ≤) neighboring cell beam signal quality - first preset offset value + Y.

That is, the beam signal quality of the serving cell is less than (or less than or equal to) the beam signal quality of the neighboring cell by a certain offset value (i.e., the beam signal quality of the serving cell is less than (or less than or equal to) the beam signal quality of the neighboring cell by a certain offset value). For example, the beam signal quality of cell 0 is Ms, the beam signal quality of cell 1 is Mn, and the first preset offset value is offset 1. One way to implement offset 1 is through network configuration. Then, if Ms + X < Mn - offset 1 + Y, then the first condition is considered to be fulfilled.

### 2) The number of beams fulfilling 1) is greater than (or greater than or equal to) the first preset number of beams.

That is, assuming the first preset number of beams being n, there are more than (or no less than) n beams in the neighboring cell that fulfill condition 1). One possible implementation is that the beam signal quality of the serving cell described in 1) is the beam signal quality M_{s-best} of the beam with the best signal quality in the serving cell. If there are more than n beams in the neighboring cell whose signal qualities are greater than M_{s-best} by a certain offset value, such as offset1, then condition 2 is fulfilled.

### 3) Serving cell beam signal quality +X < (or ≤) the second preset threshold +Y.

That is, the signal quality of the serving cell is lower than (or less than or equal to) a preset threshold. One way to implement this is that the preset threshold is configured by the network.

### 4) Neighboring cell beam signal quality +X > (or ≥) the first preset threshold +Y.

That is, the signal quality of the neighboring cell is higher than (or greater than or equal to) a preset threshold. One way to implement this is that the preset threshold is configured by the network.

### 5) The number of beams fulfilling 3) is greater than (or greater than or equal to) the first preset number of beams.

That is, assuming the first preset number of beams is n1, the serving cell has more than (or not less than) n1 beams that fulfill condition 3).

### 6) The number of beams fulfilling 4) is greater than (or greater than or equal to) the first preset number of beams.

That is, assuming the first preset number of beams is n1, there are more than (or not less than) n1 beams in the neighboring cell that fulfill condition 4).

### 7) Serving cell beam signal quality +X > (or ≥) the second preset threshold +Y.

That is, the signal quality of the serving cell is higher than (or greater than or equal to) a preset threshold. One way to implement this is that the preset threshold is configured by the network.

### 8) Neighboring cell beam signal quality +X < (or ≤) the first preset threshold +Y.

That is, the signal quality of the neighboring cell is lower than (or less than or equal to) a preset threshold. One way to implement this is that the preset threshold is configured by the network.

### 9) The number of beams fulfilling 7) is less than (or less than or equal to) the first preset number of beams.

That is, assuming the first preset number of beams is n1, the serving cell has less than (or no more than) n1 beams that fulfill condition 7).

### 10) The number of beams fulfilling 8) is less than (or less than or equal to) the first preset number of beams.

That is, assuming the first preset number of beams is n1, there are less than (or not more than) n1 beams in the neighboring cell that fulfill condition 8).

The above conditions can be configured independently for the UE, e.g., configuring only 1) as the first condition, or combining any two or more of them as the first condition, e.g., configuring 3) and 4) simultaneously as the first condition. When the above combination is used as the first condition, the parameters involved can be configured independently, e.g., when 5) and 6) are combined, where 5) and 6) are configured with their respective first preset numbers of beams, i.e., the first preset number of beam configured for 5) is n1, and the first preset number of beam configured for 6) is n2; or a common parameter can be configured for both 5) and 6), e.g., configuring single n as the first preset number of beam for both 5) and 6). In addition, when the execution condition is a combination of the above conditions (e.g., 3) and 4)), one implementation is that the UE determines that the candidate cell or a certain beam of the candidate cell fulfills the execution condition only when all of the conditions are fulfilled (i.e., both 3) and 4) are fulfilled); another implementation is that the UE determines that the candidate cell or a certain beam of the candidate cell fulfills the execution condition when any one of the conditions is fulfilled (i.e., 3) or 4) is fulfilled), but this disclosure is not limited thereto.

X and /or Y involved in the above inequalities may or may not exist. X and Y can be other parameters that affect the inequality, which are not limited here.

Example 2-2: The UE determines that the execution condition entry condition (corresponding to the first evaluation condition mentioned above) is fulfilled.

The UE evaluates the first condition according to Example 2-1, but the UE considers the execution condition entry condition to be fulfilled when the following condition is fulfilled.
a) The first condition is fulfilled for the first preset time duration.

Taking the first condition being 1) in Example 2-1 as an example, the first preset time duration is the time to trigger (TTT). If 1) in Example 2-1 is always met during the duration of TTT, then the execution condition entry condition is considered to be fulfilled.

b) For the first preset time duration, the count of fulfilment of the first condition is greater than (or greater than or equal to) the first preset count.

Taking the first condition being 1) in Example 2-1 as an example, the first preset time duration is TTT and the first preset count is n. During the duration of TTT, the count measurement is performed is, for example, m. If the count condition 1) in Example 2-1 is fulfilled is greater than (or greater than or equal to) n, then it is considered that the execution condition entry condition is fulfilled.

c) For the first preset time duration, the probability of fulfilling the first condition is greater than (or greater than or equal to) the first preset probability.

Taking the first condition being 1) in Example 2-1 as an example, the first preset time duration is TTT and the first preset probability is 90%. During the TTT duration, the count measurement is performed is, for example, m, where the count 1) in Example 2-1 is fulfilled is n. If n/m>90%, then the execution condition entry condition is considered to be fulfilled.

d) The count of consecutive fulfilment of the first condition is greater than (or greater than or equal to) the first preset count.

Taking the first condition being 1) in Example 2-1 as an example, the first preset count is n. If 1) in Example 2-1 is fulfilled for n consecutive measurements, then the execution condition entry condition is considered to be fulfilled.

e) Within the first preset count of statistics, the probability of fulfilling the first condition is greater than (or greater than or equal to) the first preset probability.

Taking the first condition being 1) in Example 2-1 as an example, the first preset count of statistics is m, and the first preset probability is 90%. In the m consecutive measurements, the count 1) in Example 2-1 is fulfilled is n. When n/m>90%, it is considered that the execution condition entry condition is fulfilled.

f) Within the first preset count of statistics, the count of fulfilment of the first condition is greater than (or greater than or equal to) the first preset count.

Taking the first condition being 1) in Example 2-1 as an example, the first preset count of statistics is m, and the first preset count is n. If the count 1) in Example 2-1 is fulfilled is greater than n in the m consecutive measurements, then it is considered that the execution condition entry condition is fulfilled.

g) The first condition is fulfilled.

Taking the first condition being 2) in Example 2-1 as an example, when this condition is fulfilled, it is considered that the execution condition entry condition is fulfilled.

h) For the first preset time duration, the count of fulfilment of the first condition is less than (or less than or equal to) the first preset count.

Taking 7) in Example 2-1 as an example, the first preset time duration is TTT and the first preset count is n. During the duration of TTT, the count measurement is performed is, for example, m. If the count 7) in Example 2-1 is fulfilled is less than (or less than or equal to) n, then it is considered that the execution condition entry condition is fulfilled.

i) For the first preset time duration, the probability of fulfilling the first condition is less than (or less than or equal to) the first preset probability.

Taking the first condition being 7) in Example 2-1 as an example, the first preset time duration is TTT and the first preset probability is 10%. During the TTT duration, the count measurement is performed is, for example, m, where the count 7) in Example 2-1 is fulfilled is n. If n/m < 10%, then the execution condition entry condition is considered to be fulfilled.

j) Within the first preset count of statistics, the probability of fulfilling the first condition is less than (or less than or equal to) the first preset probability.

Taking the first condition being 7) in Example 2-1 as an example, the first preset count of statistics is m, and the first preset probability is 10%. In the m consecutive measurements, the count 7) in Example 2-1 is fulfilled is n. When n/m < 10%, it is considered that the execution condition entry condition is fulfilled.

k) Within the first preset count of statistics, the count of fulfilment of the first condition is less than (or less than or equal to) the first preset count.

Taking the first condition being 7) in Example 2-1 as an example, the first preset count of statistics is m, and the first preset count is n. If the count 7) in Example 2-1 is fulfilled is less than n in the m consecutive measurements, it is considered that the execution condition entry condition is fulfilled.

The involved parameters can be configured independently. Taking a) as an example, when conditions 3) and 4) are combined, the first preset time duration can be configured separately for 3) and 4), that is, the first preset time duration configured for 3) is TTT1 and the first preset time duration configured for 4) is TTT2; or a common parameter can be configured for both 3) and 4), for example, configuring single TTT as the first preset time duration to be used for both 3) and 4).

Furthermore, when the execution condition is a combination of multiple conditions (e.g., c) and d)), one implementation is that the UE determines that the candidate cell or a certain beam of the candidate cell fulfills the execution condition only when all conditions are fulfilled (i.e., both c) and d) are fulfilled). Another implementation is that the UE determines that the candidate cell or a certain beam of the candidate cell fulfills the execution condition when any one of the conditions is fulfilled (i.e., c) or d) is fulfilled). However, this disclosure is not limited thereto. The first condition in c) and the first condition in d) can be the same or different.

Example 2-3: Exit condition (corresponding to the second target conditions mentioned above).

The UE evaluates a second condition, wherein the second condition may include at least one of the following.
1) Serving cell beam signal quality +X > neighboring cell beam signal quality - the first preset offset value +Y.

That is, the beam signal quality of the serving cell is greater than a difference resulting from subtracting the beam signal quality of the neighboring cell by a certain offset value. For example, the beam signal quality of cell0 is Ms, the beam signal quality of cell1 is Mn, and the first preset offset value is offset1. One way to implement offset1 is through network configuration. Then, if Ms+X>Mn-offset1+Y, then the second condition is considered to be fulfilled.

2) The number of beams fulfilling 1) is greater than the first preset number of beams.

That is, assuming the first preset number of beams is n, the serving cell has more than n beams fulfilling condition 1). One possible implementation is that the beam signal quality of the neighboring cell described in 1) is the beam signal quality M_{n-best} of the beam with the best signal quality of the neighboring cell. If the serving cell has more than n beams with signal quality greater than the difference obtained by subtracting M_{n-best} by a certain offset value (e.g., offset1), then condition 2 is considered met.

3) Serving cell beam signal quality +X > second preset threshold +Y.

That is, the signal quality of the serving cell is greater than a preset threshold. One way to achieve this is to configure the preset threshold by a network.

4) Neighboring cell beam signal quality +X < first preset threshold +Y.

That is, the signal quality of the neighboring cell is less than a preset threshold. One way to achieve this is to configure the preset threshold by a network.

5) The number of beams fulfilling 3) is greater than the first preset number of beams.

That is, assuming the first preset number of beams is n1, the serving cell has more than n1 beams that fulfill condition 3).

6) The number of beams fulfilling 4) is greater than the first preset number of beams.

That is, assuming the first preset number of beams is n1, there are more than n1 beams in the neighboring cell that fulfill condition 4).

7) serving cell beam signal quality +X < second preset threshold +Y.

That is, the signal quality of the serving cell is less than a preset threshold. One way to achieve this is to configure the preset threshold by a network.

8) Neighboring cell beam signal quality +X > first preset threshold +Y.

That is, the signal quality of the neighboring cell is greater than a preset threshold. One way to achieve this is to configure the preset threshold by a network.

9) The number of beams fulfilling 7) is less than the first preset number of beams.

That is, assuming the first preset number of beams is n1, the serving cell has less than n1 beams that fulfill condition 7).

10) The number of beams fulfilling 8) is less than the first preset number of beams.

That is, assuming the first preset number of beams is n1, there are more than n1 beams in the neighboring cell that fulfill condition 8).

The above conditions can be configured independently for the UE, e.g., configuring only 1) as the second condition, or combining any two or more of them as the second condition, e.g., configuring 3) and 4) simultaneously as the second condition. When the combination is used as the second condition, the parameters involved can be configured independently, e.g., when 5) and 6) are combined, 5) and 6) are configured with their respective first preset numbers of beams, i.e., the first preset number of beam configured for 5) is n1, and the first preset number of beam configured for 6) is n2; or a common parameter can be configured for both 5) and 6), e.g., configuring single n as the first preset number of beam for both 5) and 6). When the execution condition is a combination of the above (e.g., 3) and 4)), one implementation is that when all of the above condition is fulfilled (i.e., when both 3) and 4) are fulfilled), the UE determines that the candidate cell or a certain beam of the candidate cell does not fulfill the execution condition; another implementation is that when any one of the above conditions is fulfilled (i.e., when 3) or 4) is fulfilled), the UE determines that the candidate cell or a certain beam of the candidate cell does not fulfill the execution condition, but this disclosure is not limited thereto.

The X and Y involved in the above inequalities may or may not exist. X and/or Y can be other parameters that affect the inequality, which are not limited here.

The parameters involved in this embodiment may be the same as or different from the parameters configured for the first condition, and there is no limitation here; taking 1) in example 2-1 and 1) in example 2-3 as examples, the offset can be configured separately or a single offset value can be configured to evaluate both the first and second conditions.

Example 2-4: the UE determine if the execution condition exit condition (corresponding to the second evaluation condition mentioned above) is fulfilled.

The UE evaluates the second condition according to Example 2-3, but considers the execution condition exit condition to be fulfilled when the following condition is fulfilled.
a) The second condition is fulfilled for the first preset time duration.

Taking the second condition being 1) in Example 2-3 as an example, if the first preset time duration is TTT. If 1) in Example 2-3 is always met during the TTT duration, then it is considered that the execution condition exit condition is fulfilled.

b) For the first preset time duration, the count of fulfilment of the second condition is greater than (or greater than or equal to) the first preset count.

Taking the second condition being 1) in Example 2-3 as an example, the first preset time duration is TTT and the first preset count is n. During the duration of TTT, the count measurement is performed is, for example, m. If the count that fulfills 1) in Example 2-3 is greater than (or greater than or equal to) n, then it is considered that the execution condition exit condition is fulfilled.

c) For the first preset time duration, the probability of fulfilling the second condition is greater than (or greater than or equal to) the first preset probability.

Taking the second condition being 1) in Example 2-3 as an example, the first preset time duration is TTT and the first preset probability is 90%. During the TTT duration, the count measurement is performed is, for example, m, where the count 1) in Example 2-3 is fulfilled is n. If n/m>90%, then the execution condition exit condition is considered to be fulfilled.

d) The count of consecutive fulfilment of the second condition is greater than (or greater than or equal to) the first preset count.

Taking the second condition being 1) in Example 2-3 as an example, the first preset count is n. If the condition 1) in Example 2-3 is fulfilled for n measurements performed consecutively, then the execution condition exit condition is considered to be fulfilled.

e) Within the first preset count of statistics, the probability of fulfilling the second condition is greater than (or greater than or equal to) the first preset probability.

Taking the second condition being 1) in Example 2-3 as an example, the first preset count of statistics is m, the first preset probability is 90%. In the consecutive m measurements, the count 1) in Example 2-3 is fulfilled is n. When n/m>90%, it is considered that the execution condition exit condition is fulfilled.

f) Within the first preset count of statistics, the count of fulfilment of the second condition is greater than (or greater than or equal to) the first preset count.

Taking the second condition being 1) in Example 2-3 as an example, the first preset count of statistics is m and the first preset count is n. If the count 1) in Example 2-3 is fulfilled is greater than n in the m consecutive measurements, it is considered that the execution condition exit condition is fulfilled.

g) The second condition is fulfilled.

Taking the second condition being 2) in Example 2-3 as an example, when this condition is fulfilled, it is considered that the execution condition exit condition is fulfilled.

h) For the first preset time duration, the count of fulfilment of the second condition is less than (or less than or equal to) the first preset count.

Taking 7) in Example 2-3 as an example, the first preset time duration is TTT and the first preset count is n. During the duration of TTT, the count measurement is performed is, for example, m. If the count 7) in Example 2-3 is fulfilled is less than (or less than or equal to) n, then it is considered that the execution condition exit condition is fulfilled.

i) For the first preset time duration, the probability of fulfilling the second condition is less than (or less than or equal to) the first preset probability.

Taking the second condition being 7) in Example 2-3 as an example, the first preset time duration is TTT and the first preset probability is 10%. During the TTT duration, the count measurement is performed is, for example, m, where the count 7) in Example 2-3 is fulfilled is n. If n/m < 10%, then the execution condition exit condition is considered to be fulfilled.

j) Within the first preset count of statistics, the probability of fulfilling the second condition is less than (or less than or equal to) the first preset probability.

Taking the second condition being 7) in Example 2-3 as an example, the first preset count of statistics is m, the first preset probability is 10%. In the consecutive m measurements, the count 7) in Example 2-3 is fulfilled is n. When n/m<10%, it is considered that the execution condition exit condition is fulfilled.

k) Within the first preset count of statistics, the count of fulfilment of the second condition is less than (or less than or equal to) the first preset count.

Taking the second condition being 7) in Example 2-3 as an example, the first preset count of statistics is m and the first preset count is n. If the count 7) in Example 2-3 is fulfilled is less than n in the m consecutive measurements, then it is considered that the execution condition exit condition is fulfilled.

The parameters mentioned above can be configured independently. Taking a) as an example, when conditions 3) and 4) are combined, the first preset time durations can be configured separately for 3) and 4), that is, the first preset time duration configured for 3) is TTT1 and the first preset time duration configured for 4) is TTT2; or a common parameter can be configured to be used for both 3) and 4), for example, configuring single TTT as the first preset time duration to be used for both 3) and 4).

The parameters involved in this embodiment may be the same as or different from the parameters configured for the first condition, which is not limited here. Taking 1) in Embodiment 2-2 and 1) in Embodiment 2-4 as examples, the first preset time durations can be configured separately or a single value can be configured to evaluate both the first and second conditions.

Furthermore, when the execution condition is a combination of multiple conditions (e.g., c) and d)), one implementation is that the UE determines that the candidate cell or a certain beam of the candidate cell does not fulfill the execution condition only when all conditions are fulfilled (i.e., both c) and d) are fulfilled); another implementation is that the UE determines that the candidate cell or a certain beam of the candidate cell does not fulfill the execution condition when any one of the conditions is fulfilled (i.e., c) or d) is fulfilled), but this disclosure is not limited thereto. The second condition in c) and d) can be the same or different.

### Example 2-5: Cell beam signal quality.

Cell beam signal quality includes at least one of the following.
1) Signal quality of the best beam in the cell. For example, if the serving cell has 4 beams, the beam with the best signal quality among the 4 beams is selected for the evaluation of the execution condition.
2) Signal quality resulting from filtering the signal qualities of the preset best n beams according to a preset rule. The preset value n can be configured by a network, e.g., n=2. If the serving cell has 4 beams, 2 beams with the best signal quality among the 4 beams are selected and their signal qualities are filtered according to the preset rule for evaluation of the execution condition.
3) Signal quality resulting from filtering signal qualities of beams exceeding a preset threshold according to a preset rule. The preset threshold can be configured by a network. For example, if a serving cell has 4 beams and 2 of the 4 beams have signal quality exceeding the threshold, then the signal qualities of the two beams exceeding the threshold are selected and filtered according to the preset rule for evaluation of the execution condition.
4) Signal quality resulting from filtering signal qualities of the best n beams that exceed a preset threshold according to a preset rule. If the number m of the beams exceeding the threshold is less than n, then the m beams are filtered according to the preset rule. For example, if n=3 and the serving cell has 8 beams, and 2 out of the 8 beams have signal quality exceeding the threshold, then the signal qualities of the two beams exceeding the threshold are selected and filtered according to the preset rule for evaluating the execution condition; or, if 4 out of the 8 beams have signal quality exceeding the threshold, then the signal qualities of the top 3 beams exceeding the threshold are selected and filtered according to the preset rule for evaluating the execution condition.
5) Signal quality of any beam. For example, if the serving cell has 4 beams, all 4 beams can be selected for evaluation of the execution condition (i.e., the beam quality of each beam is used once for evaluation).
6) Beam signal quality resulting from filtering all beams of the cell that are measured by the UE according to the preset rule. For example, if the serving cell has 4 beams and the UE can measure the signal qualities of 3 beams, then the signal qualities of the 3 beams are selected and filtered according to the preset rule for evaluation.
7) Signal quality of the worst beam in the cell that exceeds a preset threshold. For example, if the serving cell has 8 beams and signal qualities of 3 out of the 8 beams exceed a preset threshold, the beam with the worst signal quality among the 3 beams is selected for evaluation of the execution condition.

The representations of the beam signal qualities of the serving cell and neighboring cell are not restricted to be the same or different. For example, taking 1) in Example 2-1 as an example, i.e., taking "1) beam signal quality of serving cell + X < (or ≤) beam signal quality of neighboring cell - first preset offset value + Y" as an example, the serving cell (beam signal quality) considered in the evaluation can be the best beam (signal quality) of the cell, and the neighboring cell (beam signal quality) considered in the evaluation can be any beam (signal quality); or, for both the serving cell and the neighboring cell, the average of the best n beams (signal qualities) exceeding a preset threshold is considered, where n can be the same or configured to be different; or, the serving cell (beam signal quality) is the best beam (signal quality) of the cell, and the neighboring cell (beam signal quality) is the worst beam (signal quality) exceeding a preset threshold in the cell, which is not limited here.

The beam signal quality mentioned may include at least one of the measurement results of parameters such as L1 SINR, L1 RSRP, and L1 RSRQ, and the specific implementation may be specified by the protocol or configured by the network.

The filtering according to a preset rule may include: filtering by averaging the signal qualities, or filtering by calculating according to a certain linear rule, which is not limited here.

### Example 2-6: Signaling Structure.

Before performing the evaluation, the UE receives at least one of the following configuration information from the network side.
- First time threshold (the time configuration for triggering execution, such as TTT, which can be equivalent to the first preset time duration in the above embodiments).
- L1 measurement threshold (e.g., L1 RSRP, L1 SINR, or L1 RSRQ, which can be equivalent to the first or second preset threshold above).
- L1 measurement threshold offset value (this offset value is based on RSRP, RSRQ or SINR, etc., measured by L1, and can be equivalent to the first preset offset value above).
- The first number of beams (e.g., the number of neighboring cell beams that fulfill the first offset value, which can be equivalent to the first preset number of beams mentioned above).
- First count (can be equivalent to the first preset count above).
- First probability (e.g., the percentage of a beam measurement result being higher than the threshold for a preset time duration, which can be equivalent to the above first preset probability).
- First count of statistics (i.e., total count of statistics, which can be equivalent to the first preset count of statistics).
- Measurement cell configuration, such as pre-configured cell ID, measurement frequency, measurement PCI or SSB configuration information (e.g., SSB measurement time window, or SSB burst bitmap).

It should be noted that, as described in the above embodiments, the above configurations can be configured separately for the serving cell and neighboring cell, or only a common value can be configured for both the serving cell and neighboring cell (for example, configuring only a first time threshold for both the serving cell and neighboring cell, but configuring L1 measurement thresholds separately for the serving cell and neighboring cell). Any parameter can be a common configuration for both the serving cell and neighboring cell or a common configuration for the cell groups, but it can also be configured separately for both the serving cell and neighboring cell; this is not limited here. Furthermore, the determination of whether the execution condition is fulfilled or not is not limited to separate configurations. For example, TTT can be configured separately to support the determination of whether the execution condition is fulfilled or not, i.e., TTT1 is used to determine whether the condition is fulfilled, and TTT2 is used to determine whether the exit condition is fulfilled; alternatively, only one TTT can be configured to determine both whether the execution condition is fulfilled and whether the exit condition is fulfilled.

In specific implementations, any or all of the above parameters are configured per candidate cell. For example, each candidate cell may be configured with a first time threshold, an L1 measurement threshold, and/or an L1 measurement threshold offset value. Alternatively, any or all of the above parameters may be configured as a common setting to be applied to all candidate cells (e.g., a common first time threshold is configured, and all candidate cells are evaluated using the same first time threshold) or a common setting may be applied to candidate cell groups (e.g., a first time threshold is configured, and candidate cells in candidate cell group 1 are evaluated using the same first time threshold; a second time threshold is configured, and candidate cells in candidate cell group 2 are evaluated using the same second time threshold, and each candidate cell group contains at least one candidate cell). Or, a common first time threshold is configured (all candidate cells are evaluated using the same first time threshold), but each candidate cell is configured with an L1 measurement threshold offset value, but this disclosure is not limited thereto.

It should be noted that any of the above parameters can be configured to different protocol layers, or to the same protocol layer, e.g., all parameters being configured to the RRC layer; or, some parameters are configured to the physical layer and some parameters are configured to the MAC layer (for example, the L1 measurement threshold is configured to the physical layer and the first count is configured to the MAC layer), this disclosure is not limited thereto.

### Example 3: Selection of target cell and target beam.

The configuration of the execution condition for this scheme can be implemented in a combination of at least two of the following:
(1) define one event that includes both the serving cell and neighboring cell, or one event that includes only neighboring cell;
(2) define multiple events, e.g., two events: event 1 includes the serving cell, and event 2 includes the neighboring cell configuration;
(3) The UE determines that the candidate cell can be selected as the target cell only if the above execution condition entry conditions are fulfilled simultaneously, or determines that the candidate cell can be selected as the target cell if any one of the execution condition entry condition is fulfilled; when the execution condition exit condition is fulfilled, the candidate cell cannot be selected as the target cell.

Specifically, the selection of the target cell and the target beam are as follows.

### 1. Target cell.

When at least one candidate cell fulfills the at least one execution condition, for example, both cell1 and cell2 fulfill the at least one execution condition, the UE can determine the target cell in the following ways:
1) the target cell is selected based on the UE implementation, and cell1 or cell2 is selected as the target cell based on the UE implementation;
2) the UE selects the cell with the best beam signal quality as the target cell, for example, if the signal quality of the best beam in cell1 is higher than the signal quality of the best beam in cell2, then cell1 is selected;
3) the UE selects the cell with the most beams that fulfill the first condition as the target cell; for example, if cell1 has 3 beams greater than the preset threshold and cell2 has 2 beams greater than the preset threshold, then cell1 is selected;
4) the UE selects the cell with the highest beam signal quality resulting from filtering beam signal qualities according to a preset rule as the target cell; for example, after filtering according to a preset rule according to any of the manners 2), 3) and 4) of the above example 2-5 to obtain the beam signal qualities, if the beam signal quality of cell1 is greater than that of cell2, then cell1 is selected as the target cell; the filtering according to the preset rule can be filtering by averaging the signal qualities or filtering by calculating according to a certain linear rule;
5) the UE selects all cells that fulfill the at least one execution condition as the target cell; for example, if both candidate cells cell1 and cell2 fulfill the at least one execution condition, the UE will use both cell1 and cell2 as target cells; one possible application scenario is to determine that cell1 and cell2 are both target cells for TA management, for example, to trigger the relevant operations of TA acquisition for cell1 and cell2;
6) the UE selects the cell with the best cell-level measurement result as the target cell; for example, the cell-level signal qualities of cell1 and cell2 based on L3 measurement are calculated, and the cell-level signal qualities are compared; for example, if the signal quality of cell1 is greater than that of cell2, then cell1 is selected as the target cell.

### 2. Target beam.

Methods for determining the target beam of a target cell include:
1) the beam with the best beam signal quality is the target beam; for example, if the target cell has 4 beams, select the beam with the best signal quality among the 4 beams for access;
2) the beam with the best quality after filtering according to the preset rule within the first preset time duration is the target beam; for example, if there are 4 beams in the target cell, the signal qualities of the 4 beams (or the beams that fulfill the first condition) are filtered according to the preset rule within the first preset time duration; the filtering according to the preset rule can be filtering by averaging the signal qualities or filtering by calculating according to a certain linear rule; the beam with the best quality after filtering is selected as the target beam;
3) the beam with the best quality after filtering according to the preset rule within the first preset count is the target beam; for example, if there are 4 beams in the target cell, the signal qualities of the 4 beams (or the beams that fulfill the first condition) are filtered according to the preset rule within the first preset count; the filtering according to the preset rule can be filtering by averaging the signal qualities or filtering by calculating according to a certain linear rule; the beam with the best quality after filtering is selected as the target beam;
4) the beam that fulfills the first condition and arrives first (is the target beam); for example, if the target cell has 4 beams, both beam 1 and beam 2 fulfill the first condition, but beam 1 arrives earlier than beam 2, then beam 1 is selected as the target beam;
5) selection based on UE implementation, for example, if the target cell has 4 beams, the UE can select any beam as the target beam, or if both beam 1 and beam 2 fulfill the first condition, the UE can select either beam 1 or beam 2 as the target beam;
6) selecting, among beams of the target cell, a beam that fulfills the at least one execution condition and is associated with a pre-configured uplink resource as the target beam; for example, if the target cell has 4 beams, and beams 1, 2, and 3 fulfill the at least one execution condition, but beam 1 is associated with a pre-configured uplink resource, then beam 1 is selected as the target beam;
7) selecting, among beams of the target cell, the beam that fulfills the at least one execution condition, is associated with a pre-configured uplink resource, and arrives at the terminal first as the target beam; for example, if the target cell has 4 beams, beams 1, 2, and 3 fulfill the at least one execution condition, but beams 1 and 2 are associated with the pre-configured uplink resource, and beam 1 arrives earlier than beam 2, then beam 1 is selected as the target beam;
8) the beam that fulfills the first condition; for example, if the target cell has 4 beams, and beam 1 fulfills the first condition, then beam 1 is selected as the target beam; or, if the target cell has 4 beams, and both beam 1 and beam 2 fulfill the first condition, then both beam 1 and beam 2 are selected as target beams.

If the number of target cells is greater than 1, then the above target beam selection is performed separately for the beams within each target cell.

### Example 4: Evaluation and Decision Protocol Layer.

Example 4-1: the physical layer performs measurement and reporting, and the MAC layer performs evaluation.

First, perform step 1a or step 1b.

Step 1a: The UE physical layer performs L1 measurement and reports the measurement results to the MAC layer, where the measurement results may include candidate cell and/or beam indication.

Step 1b: The UE physical layer performs L1 measurement, and evaluates and reports according to configuration information of the configured execution condition. For example, the UE physical layer determines whether to report indication to the MAC layer based on the configured measurement threshold, for example:
- if the measurement results of a candidate cell (e.g., cell1) fulfill the first condition of Example 2-1, the UE physical layer reports indication to the MAC layer; the indication indicates that cell1 fulfills the condition, or indicates that beam 1 of cell1 fulfills the condition; or,
- if the measurement results of a candidate cell (e.g., cell1) fulfill the second condition of Example 2-3, the UE physical layer reports indication to the MAC layer; the indication indicates that cell1 does not fulfill the condition, or indicates that beam 1 of cell1 does not fulfill the condition.

Step 2: The UE's MAC layer receives the indication from the physical layer and performs statistics and evaluation according to Examples 2-2 and 2-4. For example, the MAC layer determines whether the entry or exit condition of the execution condition is fulfilled based on the count indication indicating fulfilling the condition is received within a preset time duration. Alternatively, the MAC layer evaluates based on the measurement results reported by the physical layer according to Example 2. For example, the MAC layer determines whether the entry or exit condition of the execution condition is fulfilled based on whether the measurement results fulfill a preset threshold for a preset time duration.

Step 3: The UE's MAC layer determines that the candidate cell fulfills the entry condition of the execution condition, and then executes:
- MAC makes decision on cell management, or
- the MAC indicates to the RRC layer, the RRC layer makes decision on cell management. The MAC indication may include indication of the target cell and/or the target beam.

### Example 4-2: Physical layer performs measurement and evaluation;

Step 1: The UE physical layer performs L1 measurement, and evaluates according to the configuration information of the configured execution conditions. Following the above Example 2, candidate cells that fulfill the at least one execution condition are determined.

Step 3: The UE's physical layer determines that the candidate cell fulfills the at least one execution condition and then executes the following:
- the physical layer makes decision on cell management, or
- the physical layer indicates to the MAC layer and the RRC layer. The MAC layer or the RRC layer makes cell management decision. The physical layer indication may include indication of the target cell and/or the target beam.

### Example 4-3: the RRC layer performs evaluation based on the indication reported by a lower layer.

First, perform step 1a or step 1b.

Step 1a: the lower layer of the UE performs L1 measurement and reports the measurement results to the RRC layer, where the measurement results include candidate cell and/or beam indication.

Step 1b: the lower layer of the UE performs L1 measurement, and evaluates and reports according to the configuration information of the configured execution condition. For example, the lower layer determines whether to report indication to the RRC layer based on the configured measurement threshold, for example:
- if the measurement results of a candidate cell (e.g., cell1) fulfill the first condition of Example 2-1, the UE lower layer reports indication to the RRC layer, the indication indicates that cell1 fulfills the condition, or indicates that beam 1 of cell1 fulfills the condition;
- if the measurement results of a candidate cell (e.g., cell1) fulfill the second condition of Example 2-3, the UE lower layer reports indication to the RRC layer. The indication indicates that cell1 does not fulfill the condition, or indicates that beam 1 of cell1 does not fulfill the condition.

Step 2: The UE's RRC layer receives the measurement results or indication reported by the lower layer and evaluates according to Example 2. For example, the RRC layer determines whether the entry or exit condition of the execution condition is fulfilled based on the number of times the indication indicating fulfilling the condition is received within a preset time duration, or the RRC layer determines whether the entry or exit condition of the execution condition is fulfilled based on whether the measurement results fulfill a preset threshold for a preset time duration.

Step 3: The UE's RRC layer determines that the candidate cell fulfills the entry condition of the execution condition, then the RRC layer makes a cell management decision.

The lower layer can be the physical layer or the MAC layer, which is not limited here.

It should be noted that the relevant content of the above embodiments can be referred to each other, and the repeated parts will not be repeated.

Therefore, the solution provided by this disclosure can support: the UE evaluates according to the execution condition based on L1 measurement, to determine whether the candidate cell fulfills the at least one execution condition; when it is determined that the execution condition is fulfilled, the UE selects the target cell and the target beam for cell management. Based on this, this solution can achieve: in LTM based on UE's decision, the UE determines whether to perform cell management.

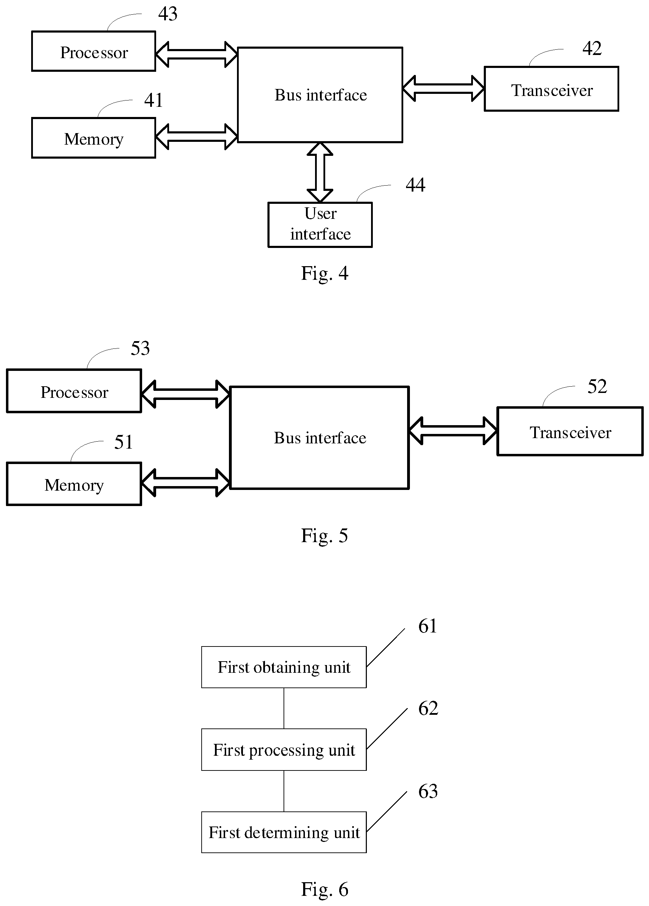

An embodiment of this disclosure further provides a cell management device, which is a terminal, and as shown in Fig. 4, includes a memory 41, a transceiver 42, and a processor 43.

Memory 41 is used to store a computer program; transceiver 42 is used to transmit and receive data under the control of processor 43; processor 43 is used to read the computer program in memory 41 and perform the following operations:
obtaining at least one execution condition;
evaluating whether there is at least one target candidate cell that fulfills the at least one execution condition; and
in a case that there is the at least one target candidate cell that fulfills the at least one execution condition, determining a target cell, and/or determining a target beam of the target cell;
wherein the at least one execution condition is at least one beam-level execution condition configured based on layer 1 measurements.

The cell management device provided in this embodiment obtains the execution condition; evaluates whether there is at least one target candidate cell that fulfills the at least one execution condition; in a case that there is the at least one target candidate cell that fulfills the at least one execution condition, determines the target cell and/or determines the target beam of the target cell; wherein the at least one execution condition is at least one beam-level execution condition configured based on layer 1 measurements; it can support the UE to clearly identify the target cell and/or target beam (that fulfills the at least one execution condition), and then determine whether to perform cell change, or determine whether the target cell's TA can be obtained or through which beam the target cell's TA can be obtained, thereby supporting the implementation of a scheme enabling the UE to decide whether to perform cell management.

Specifically, transceiver 42 is used to receive and transmit data under the control of processor 43.

In Fig. 4, the bus architecture can include any number of interconnected buses and bridges, specifically linking various circuits of one or more processors represented by processor 43 and memory represented by memory 41. The bus architecture can also link various other circuits such as peripheral devices, voltage regulators, and power management circuits, which are well known in the art and therefore will not be described further herein. The bus interface provides an interface. Transceiver 42 can be multiple elements, including a transmitter and a receiver, providing a unit for communicating with various other devices over a transmission medium, including wireless channels, wired channels, optical fibers, etc. For different user equipment, user interface 44 can also be an interface capable of connecting external or internal devices, including but not limited to keypads, displays, speakers, microphones, joysticks, etc.

The processor 43 is responsible for managing the bus architecture and general processing, and the memory 41 can store the data used by the processor 43 when performing operations.

In some embodiments, the processor 43 may be a central processing unit (CPU), an application-specific integrated circuit (ASIC), a field-programmable gate array (FPGA), or a complex programmable logic device (CPLD). The processor may also adopt a multi-core architecture.

The processor executes any of the methods described in the embodiments of this disclosure by invoking a computer program stored in memory, according to the obtained executable instructions. The processor and memory may also be physically separated.

The evaluation of whether there is at least one target candidate cell that fulfills the at least one execution condition includes: determining a candidate cell as a target candidate cell that fulfills the at least one execution condition if a first evaluation condition is fulfilled; wherein the first evaluation condition includes at least one of the following: (1) the beam signal quality of the serving cell is less than a first preset threshold and the first preset condition is fulfilled; or, the beam signal quality of the serving cell is less than or equal to the first preset threshold and the first preset condition is fulfilled; (2) the beam signal quality of the candidate cell is greater than a second preset threshold and the second preset condition is fulfilled; or, the beam signal quality of the candidate cell is greater than or equal to the second preset threshold and the second preset condition is fulfilled; (3) the beam signal quality of the candidate cell is better than the beam signal quality of the serving cell and a difference between the beam signal quality of the candidate cell and the beam signal quality of the serving cell is at least greater than the third preset threshold and the third preset condition is fulfilled; or, the beam signal quality of the candidate cell is better than the beam signal quality of the serving cell and the difference between the beam signal quality of the candidate cell and the beam signal quality of the serving cell is at least greater than or equal to the third preset threshold and the third preset condition is fulfilled; (4) the beam signal quality of the serving cell is greater than the fourth preset threshold and the fourth preset condition is fulfilled; or, the beam signal quality of the serving cell is greater than or equal to the fourth preset threshold and the fourth preset condition is fulfilled; (5) the beam signal quality of the candidate cell is less than the fifth preset threshold and the fifth preset condition is fulfilled; or, the beam signal quality of the candidate cell is less than or equal to the fifth preset threshold and the fifth preset condition is fulfilled.

In the embodiment of this disclosure, the evaluation of whether there is at least one target candidate cell that fulfills the at least one execution condition includes: determining that the candidate cell does not fulfill the at least one execution condition if the second evaluation condition is fulfilled; wherein the second evaluation condition includes at least one of the following: (1) the beam signal quality of the serving cell is greater than a sixth preset threshold and the sixth preset condition is fulfilled; (2) the beam signal quality of the candidate cell is less than a seventh preset threshold and the seventh preset condition is fulfilled; (3) the beam signal quality of the candidate cell is better than the beam signal quality of the serving cell and the difference between the beam signal quality of the candidate cell and the beam signal quality of the serving cell is at least less than an eighth preset threshold and the eighth preset condition is fulfilled; (4) the beam signal quality of the serving cell is less than a ninth preset threshold and the ninth preset condition is fulfilled; (5) the beam signal quality of the candidate cell is greater than a tenth preset threshold and the tenth preset condition is fulfilled.

Furthermore, the operation also includes: obtaining configuration information; wherein the configuration information includes at least one of the following: preset time duration; preset offset value; preset threshold; preset number of beams; preset count; preset probability; count of statistics; or cell measurement configuration information.

A beam signal quality of cell is the beam signal quality of the serving cell or the beam signal quality of the candidate cell; wherein, the beam signal quality of the cell includes at least one of the following: (1) a signal quality of a beam with the best signal quality within a cell; (2) a beam signal quality resulting from filtering signal qualities of n beams of the cell according to a first preset rule; the n beams are the highest-ranked n beams in signal quality; (3) a beam signal quality resulting from filtering, according to a second preset rule, signal qualities of beams of the cell that are higher than an eleventh preset threshold; (4) a beam signal quality resulting from filtering signal qualities of a first number of first beams of the cell according to a third preset rule; the first number is less than or equal to m, and the first beam has a signal quality higher than a twelfth preset threshold; (5) a signal quality of any beam of the cell; (6) a beam signal quality resulting from filtering, according to a seventh preset rule, signal qualities of all beams of the cell that are measured by the terminal; (7) a signal quality of a beam with the worst signal quality among second beams of the cell; the second beam has a signal quality higher than a thirteenth preset threshold.

In the embodiment of this disclosure, determining the target cell includes: determining the target cell from the at least one target candidate cell according to a first manner; wherein the first manner includes at least one of the following: selecting the target cell based on implementation of the terminal; selecting a cell where a beam with the highest signal quality is located as the target cell; selecting a cell with the most beams that fulfill the at least one execution condition as the target cell; selecting a cell with the highest signal quality resulting from filtering beam signal qualities according to a fourth preset rule as the target cell; selecting at least one of the target candidate cells as the target cell; or selecting the cell with the best cell-level measurement result based on layer 3 measurement as the target cell.

Determination of the target beam of the target cell includes determining the target beam of the target cell according to a second manner; wherein the second manner includes at least one of the following: selecting a beam with the best signal quality of the target cell as the target beam; selecting, among beams of the target cell, a beam with the best signal quality as the target beam, wherein a signal quality of a beam is obtained by filtering, according to a fifth preset rule, signal qualities of the beam within a first preset time duration; selecting, among beams of the target cell, a beam with the best signal quality as the target beam, wherein a signal quality of a beam is obtained by filtering, according to a sixth preset rule, signal qualities of the beam within a first preset count; selecting, among beams of the target cell, a beam that fulfills the at least one execution condition and is the first to arrive at the terminal as the target beam; selecting, among beams of the target cell, a target beam based on implementation of the terminal; selecting, among beams of the target cell, a beam that fulfills the at least one execution condition and is associated with a pre-configured uplink resource as the target beam; selecting, among beams of the target cell, a beam that fulfills the at least one execution condition, is associated with a pre-configured uplink resource and is the first to arrive at the terminal as the target beam; or selecting, among beams of the target cell, at least one beam that fulfills the at least one execution condition as the target beam.

Furthermore, the operation also includes: managing the target cell using a third manner; wherein the third manner includes at least one of the following: (1) triggering a random access procedure to the target cell; (2) transmitting uplink data on a pre-configured uplink resource through the transceiver; (3) monitoring the physical downlink control channel (PDCCH) in the target cell; (4) transmitting uplink data on a pre-configured uplink resource through the transceiver when a valid timing advance (TA) value of the target cell is obtained; (5) monitoring a PDCCH according to a target transmission configuration indicator (TCI) or a target beam index when a valid TA value of the target cell is obtained; (6) triggering a random access procedure to the target cell in case of a valid TA value of the target cell is not obtained; (7) sending first indication to a network device through the transceiver before accessing the target cell, the first indication being used for indicating information of the target cell and/or target beam; (8) sending second indication to a network device via the transceiver before accessing the target cell in case of a valid TA value of the target cell is obtained, the second indication being used for indicating information of the target cell and/or target beam; or (9) determining to obtain a TA value of the target cell.

The execution condition is configured separately for each cell, or is configured for all cells, or is configured per cell group.

In the embodiment of this disclosure, the evaluation of whether there is at least one target candidate cell that fulfills the at least one execution condition includes: determining at least one to-be-evaluated candidate cell; determining from the at least one to-be-evaluated candidate cell whether there is at least one target candidate cell that fulfills the at least one execution condition; wherein, the to-be-evaluated candidate cell includes at least one of the following: a candidate cell in which the terminal has obtained a valid TA; a candidate cell configured with a pre-configured uplink resource for the terminal to transmit first uplink data; a candidate cell to be evaluated indicated by the network configuration indication; all candidate cells configured by network; or all candidate cells associated with the at least one execution condition.

The evaluation of whether there is at least one target candidate cell that fulfills the at least one execution condition includes: evaluating whether there is at least one target candidate cell that fulfills the execution condition according to a fourth manner; wherein the fourth manner includes at least one of the following: the terminal's Media Access Control (MAC) entity performs the evaluation based on information reported by the terminal's physical layer; the terminal's physical layer performs the evaluation; the terminal's Radio Resource Control (RRC) layer performs the evaluation based on information reported by the terminal's lower layer.

It should be noted that the device provided in this embodiment can implement all the method steps implemented in the above terminal-side method embodiment and can achieve the same technical effect. Therefore, the parts and beneficial effects that are the same as those in the method embodiment will not be described in detail here.

An embodiment of this disclosure further provides a cell management device, which is a network device, and as shown in Fig. 5, includes a memory 51, a transceiver 52, and a processor 53.

Memory 51 is used to store a computer program; transceiver 52 is used to transmit and receive data under the control of processor 53; processor 53 is used to read the computer program in memory 51 and perform the following step:
sending at least one execution condition via the transceiver 52;
wherein the at least one execution condition is at least one beam-level execution condition configured based on layer 1 measurements.

The cell management device provided in the embodiment of this disclosure transmits the execution condition; wherein the at least one execution condition is at least one beam-level execution condition configured based on layer 1 measurements; it can support the UE to clearly identify the target cell and/or target beam (that fulfills the at least one execution condition), and then determine whether to perform cell change, or determine whether the target cell's TA can be obtained or through which beam the target cell's TA can be obtained, thereby supporting the implementation of a scheme enabling the UE to determine whether to perform cell management.

Specifically, transceiver 52 is used to receive and transmit data under the control of processor 53.

In Fig. 5, the bus architecture can include any number of interconnected buses and bridges, specifically linking various circuits of one or more processors represented by processor 53 and memory represented by memory 51. The bus architecture can also link various other circuits such as peripheral devices, voltage regulators, and power management circuits, which are well known in the art and therefore will not be described further herein. The bus interface provides an interface. The transceiver 52 can be multiple elements, including a transmitter and a receiver, providing a unit for communicating with various other devices over transmission media, including wireless channels, wired channels, optical fibers, etc. Processor 53 is responsible for managing the bus architecture and general processing, and memory 51 can store data used by processor 53 during operation.

The processor 53 can be a central processing unit (CPU), an application-specific integrated circuit (ASIC), a field-programmable gate array (FPGA), or a complex programmable logic device (CPLD). The processor can also adopt a multi-core architecture.

Furthermore, the step further includes: transmitting a first evaluation condition to the terminal via the transceiver; wherein the first evaluation condition is used by the terminal to determine at least one target candidate cell that fulfills the execution condition; wherein the first evaluation condition includes at least one of the following: (1) the beam signal quality of the serving cell is less than a first preset threshold and the first preset condition is fulfilled; or, the beam signal quality of the serving cell is less than or equal to the first preset threshold and the first preset condition is fulfilled; (2) the beam signal quality of the candidate cell is greater than a second preset threshold and the second preset condition is fulfilled; or, the beam signal quality of the candidate cell is greater than or equal to the second preset threshold and the second preset condition is fulfilled; (3) the beam signal quality of the candidate cell is better than the beam signal quality of the serving cell and a difference between the beam signal quality of the candidate cell and the beam signal quality of the serving cell is at least greater than the third preset threshold and the third preset condition is fulfilled; or, the beam signal quality of the candidate cell is better than the beam signal quality of the serving cell and the difference between the beam signal quality of the candidate cell and the beam signal quality of the serving cell is at least greater than or equal to the third preset threshold and the third preset condition is fulfilled; (4) the beam signal quality of the serving cell is greater than the fourth preset threshold and the fourth preset condition is fulfilled; or, the beam signal quality of the serving cell is greater than or equal to the fourth preset threshold and the fourth preset condition is fulfilled; (5) the beam signal quality of the candidate cell is less than the fifth preset threshold and the fifth preset condition is fulfilled; or, the beam signal quality of the candidate cell is less than or equal to the fifth preset threshold and the fifth preset condition is fulfilled.

In the embodiment of this disclosure, the step further includes: transmitting a second evaluation condition to the terminal through the transceiver; wherein the second evaluation condition is used by the terminal to determine at least one target candidate cell that does not fulfill the execution condition; wherein the second evaluation condition includes at least one of the following: (1) the beam signal quality of the serving cell is greater than a sixth preset threshold and the sixth preset condition is fulfilled; (2) the beam signal quality of the candidate cell is less than a seventh preset threshold and the seventh preset condition is fulfilled; (3) the beam signal quality of the candidate cell is better than the beam signal quality of the serving cell and the difference between the beam signal quality of the candidate cell and the beam signal quality of the serving cell is at least less than an eighth preset threshold and the eighth preset condition is fulfilled; (4) the beam signal quality of the serving cell is less than a ninth preset threshold and the ninth preset condition is fulfilled; (5) the beam signal quality of the candidate cell is greater than a tenth preset threshold and the tenth preset condition is fulfilled.

Furthermore, the step also includes: transmitting configuration information through the transceiver; wherein the configuration information includes at least one of the following: preset time duration; preset offset value; preset threshold; preset number of beams; preset count; preset probability; count of statistics; or cell measurement configuration information.

A cell beam signal quality is the beam signal quality of the serving cell or the beam signal quality of the candidate cell; wherein, the beam signal quality of the cell includes at least one of the following: (1) a signal quality of a beam with the best signal quality within a cell; (2) a beam signal quality resulting from filtering signal qualities of n beams of the cell according to a first preset rule; the n beams are the highest-ranked n beams in signal quality; (3) a beam signal quality resulting from filtering, according to a second preset rule, signal qualities of beams of the cell that are higher than an eleventh preset threshold; (4) a beam signal quality resulting from filtering signal qualities of a first number of first beams of the cell according to a third preset rule; the first number is less than or equal to m, and the first beam has a signal quality higher than a twelfth preset threshold; (5) a signal quality of any beam of the cell; (6) a beam signal quality resulting from filtering, according to a seventh preset rule, signal qualities of all beams of the cell that are measured by the terminal; (7) a signal quality of a beam with the worst signal quality among second beams of the cell; the second beam has a signal quality higher than a thirteenth preset threshold.

Furthermore, the step also includes at least one of the following: (1) receiving, via the transceiver, a first indication transmitted by the terminal before accessing the target cell, the first indication being used for indicating information of the target cell and/or target beam; (2) receiving, via the transceiver, a second indication transmitted by the terminal before accessing the target cell after obtaining a valid TA value of the target cell, the second indication being used for indicating information of the target cell and/or target beam.

The execution condition is configured separately for each cell, or is configured for all cells, or is configured per cell group.

Furthermore, the step also includes at least one of the following: (1) transmitting network configuration indication to the terminal through the transceiver, the network configuration indication being used for indicating a candidate cell needing to be evaluated; (2) configuring candidate cells to the terminal through the transceiver; (3) transmitting a candidate cell configuration associated with the at least one execution condition to the terminal through the transceiver.

It should be noted that the device provided in this embodiment can implement all the method steps implemented in the above network device side method embodiment and can achieve the same technical effect. Therefore, the parts and beneficial effects that are the same as those in the method embodiment will not be described in detail here.

An embodiment of this disclosure further provides a cell management apparatus applied to a terminal, as shown in Fig. 6, including:
a first obtaining unit 61, configured to obtain at least one execution condition;
a first processing unit 62, configured to evaluate whether there is at least one target candidate cell that fulfills the at least one execution condition;
a first determining unit 63, configured to, in a case that there is at least one target candidate cell, determine a target cell and/or determine the target beam of the target cell;
wherein the at least one execution condition is at least one beam-level execution condition configured based on layer 1 measurements.

The cell management apparatus provided in this embodiment obtains the execution condition; evaluates whether there is at least one target candidate cell that fulfills the at least one execution condition; in a case that there is the at least one target candidate cell that fulfills the at least one execution condition, determines the target cell and/or determines the target beam of the target cell; wherein the at least one execution condition is at least one beam-level execution condition configured based on layer 1 measurements; it can support the UE to clearly identify the target cell and/or target beam (that fulfills the at least one execution condition), and then determine whether to perform cell change, or determine whether the target cell's TA can be obtained or through which beam the target cell's TA can be obtained, thereby supporting the implementation of a scheme enabling the UE to decide whether to perform cell management.

The evaluation of whether there is at least one target candidate cell that fulfills the at least one execution condition includes: determining a candidate cell as a target candidate cell that fulfills the at least one execution condition if a first evaluation condition is fulfilled; wherein the first evaluation condition includes at least one of the following: (1) the beam signal quality of the serving cell is less than a first preset threshold and the first preset condition is fulfilled; or, the beam signal quality of the serving cell is less than or equal to the first preset threshold and the first preset condition is fulfilled; (2) the beam signal quality of the candidate cell is greater than a second preset threshold and the second preset condition is fulfilled; or, the beam signal quality of the candidate cell is greater than or equal to the second preset threshold and the second preset condition is fulfilled; (3) the beam signal quality of the candidate cell is better than the beam signal quality of the serving cell and a difference between the beam signal quality of the candidate cell and the beam signal quality of the serving cell is at least greater than the third preset threshold and the third preset condition is fulfilled; or, the beam signal quality of the candidate cell is better than the beam signal quality of the serving cell and the difference between the beam signal quality of the candidate cell and the beam signal quality of the serving cell is at least greater than or equal to the third preset threshold and the third preset condition is fulfilled; (4) the beam signal quality of the serving cell is greater than the fourth preset threshold and the fourth preset condition is fulfilled; or, the beam signal quality of the serving cell is greater than or equal to the fourth preset threshold and the fourth preset condition is fulfilled; (5) the beam signal quality of the candidate cell is less than the fifth preset threshold and the fifth preset condition is fulfilled; or, the beam signal quality of the candidate cell is less than or equal to the fifth preset threshold and the fifth preset condition is fulfilled.

In the embodiment of this disclosure, the evaluation of whether there is at least one target candidate cell that fulfills the at least one execution condition includes: determining that the candidate cell does not fulfill the at least one execution condition if the second evaluation condition is fulfilled; wherein the second evaluation condition includes at least one of the following: (1) the beam signal quality of the serving cell is greater than a sixth preset threshold and the sixth preset condition is fulfilled; (2) the beam signal quality of the candidate cell is less than a seventh preset threshold and the seventh preset condition is fulfilled; (3) the beam signal quality of the candidate cell is better than the beam signal quality of the serving cell and the difference between the beam signal quality of the candidate cell and the beam signal quality of the serving cell is at least less than an eighth preset threshold and the eighth preset condition is fulfilled; (4) the beam signal quality of the serving cell is less than a ninth preset threshold and the ninth preset condition is fulfilled; (5) the beam signal quality of the candidate cell is greater than a tenth preset threshold and the tenth preset condition is fulfilled.

Furthermore, the cell management apparatus further includes: a second obtaining unit, configured to obtain configuration information; wherein the configuration information includes at least one of the following: preset time duration; preset offset value; preset threshold; preset number of beams; preset count; preset probability; count of statistics; or cell measurement configuration information.

A cell beam signal quality is the beam signal quality of the serving cell or the beam signal quality of the candidate cell; wherein, the beam signal quality of the cell includes at least one of the following: (1) a signal quality of a beam with the best signal quality within a cell; (2) a beam signal quality resulting from filtering signal qualities of n beams of the cell according to a first preset rule; the n beams are the highest-ranked n beams in signal quality; (3) a beam signal quality resulting from filtering, according to a second preset rule, signal qualities of beams of the cell that are higher than an eleventh preset threshold; (4) a beam signal quality resulting from filtering signal qualities of a first number of first beams of the cell according to a third preset rule; the first number is less than or equal to m, and the first beam has a signal quality higher than a twelfth preset threshold; (5) a signal quality of any beam of the cell; (6) a beam signal quality resulting from filtering, according to a seventh preset rule, signal qualities of all beams of the cell that are measured by the terminal; (7) a signal quality of a beam with the worst signal quality among second beams of the cell; the second beam has a signal quality higher than a thirteenth preset threshold.

In the embodiment of this disclosure, determining the target cell includes: determining the target cell from the at least one target candidate cell according to a first manner; wherein the first manner includes at least one of the following: selecting the target cell based on implementation of the terminal; selecting a cell where a beam with the highest signal quality is located as the target cell; selecting a cell with the most beams that fulfill the at least one execution condition as the target cell; selecting a cell with the highest signal quality resulting from filtering beam signal qualities according to a fourth preset rule as the target cell; selecting at least one of the target candidate cells as the target cell; or selecting the cell with the best cell-level measurement result based on layer 3 measurement as the target cell.

Determination of the target beam of the target cell includes determining the target beam of the target cell according to a second manner; wherein the second manner includes at least one of the following: selecting a beam with the best signal quality of the target cell as the target beam; selecting, among beams of the target cell, a beam with the best signal quality as the target beam, wherein a signal quality of a beam is obtained by filtering, according to a fifth preset rule, signal qualities of the beam within a first preset time duration; selecting, among beams of the target cell, a beam with the best signal quality as the target beam, wherein a signal quality of a beam is obtained by filtering, according to a sixth preset rule, signal qualities of the beam within a first preset count; selecting, among beams of the target cell, a beam that fulfills the at least one execution condition and is the first to arrive at the terminal as the target beam; selecting, among beams of the target cell, a target beam based on implementation of the terminal; selecting, among beams of the target cell, a beam that fulfills the at least one execution condition and is associated with a pre-configured uplink resource as the target beam; selecting, among beams of the target cell, a beam that fulfills the at least one execution condition, is associated with a pre-configured uplink resource and is the first to arrive at the terminal as the target beam; or selecting, among beams of the target cell, at least one beam that fulfills the at least one execution condition as the target beam.

Furthermore, the cell management apparatus further includes: a second processing unit, configured to manage the target cell in a third manner; wherein the third manner includes at least one of the following: (1) triggering a random access procedure to the target cell; (2) transmitting uplink data on a pre-configured uplink resource; (3) monitoring the physical downlink control channel (PDCCH) in the target cell; (4) transmitting uplink data on a pre-configured uplink resource when a valid timing advance (TA) value of the target cell is obtained; (5) monitoring the PDCCH according to the target transmission configuration indicator (TCI) or target beam index when a valid TA value of the target cell is obtained; (6) triggering a random access procedure to the target cell when a valid TA value of the target cell is not obtained; (7) transmitting a first indication to the network device before accessing the target cell, the first indication being used for indicating information of the target cell and/or target beam; (8) transmitting a second indication to the network device before accessing the target cell when a valid TA value of the target cell is obtained, the second indication being used for indicating information of the target cell and/or target beam; (9) determining the TA value of the target cell.

The execution condition is configured separately for each cell, or is configured for all cells, or is configured per cell group.

In the embodiment of this disclosure, the evaluation of whether there is at least one target candidate cell that fulfills the at least one execution condition includes: determining at least one to-be-evaluated candidate cell; determining from the at least one to-be-evaluated candidate cell whether there is at least one target candidate cell that fulfills the at least one execution condition; wherein, the to-be-evaluated candidate cell includes at least one of the following: a candidate cell in which the terminal has obtained a valid TA; a candidate cell configured with a pre-configured uplink resource for the terminal to transmit first uplink data; a candidate cell to be evaluated indicated by the network configuration indication; all candidate cells configured by network; or all candidate cells associated with the at least one execution condition.

The evaluation of whether there is at least one target candidate cell that fulfills the at least one execution condition includes: evaluating whether there is at least one target candidate cell that fulfills the execution condition according to a fourth manner; wherein the fourth manner includes at least one of the following: the terminal's Media Access Control (MAC) entity performs the evaluation based on information reported by the terminal's physical layer; the terminal's physical layer performs the evaluation; the terminal's Radio Resource Control (RRC) layer performs the evaluation based on information reported by the terminal's lower layer.

It should be noted that the apparatus provided in this embodiment can implement all the method steps implemented in the above terminal-side method embodiment and achieve the same technical effect. Therefore, the parts and beneficial effects that are the same as those in the method embodiment will not be described in detail here.

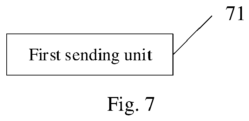

An embodiment of this disclosure further provides a cell management apparatus, which is applied to a network device, and as shown in Fig. 7, includes:
a first transmitting unit 71, configured to send at least one execution condition;
wherein the at least one execution condition is at least one beam-level execution condition configured based on layer 1 measurements.

The cell management apparatus provided in this embodiment transmits the execution condition; wherein the at least one execution condition is at least one beam-level execution condition configured based on layer 1 measurements; it can support the UE to clearly identify the target cell and/or target beam (that fulfills the at least one execution condition), and then determine whether to perform cell change, or determine whether the target cell's TA can be obtained or through which beam the target cell's TA can be obtained, thereby supporting the implementation of a scheme enabling the UE to determine whether to perform cell management.

Furthermore, the cell management apparatus further includes: a second transmitting unit, configured to transmit a first evaluation condition to the terminal; wherein the first evaluation condition is used by the terminal to determine at least one target candidate cell that fulfills the execution condition; wherein the first evaluation condition includes at least one of the following: (1) the beam signal quality of the serving cell is less than a first preset threshold and the first preset condition is fulfilled; or, the beam signal quality of the serving cell is less than or equal to the first preset threshold and the first preset condition is fulfilled; (2) the beam signal quality of the candidate cell is greater than a second preset threshold and the second preset condition is fulfilled; or, the beam signal quality of the candidate cell is greater than or equal to the second preset threshold and the second preset condition is fulfilled; (3) the beam signal quality of the candidate cell is better than the beam signal quality of the serving cell and a difference between the beam signal quality of the candidate cell and the beam signal quality of the serving cell is at least greater than the third preset threshold and the third preset condition is fulfilled; or, the beam signal quality of the candidate cell is better than the beam signal quality of the serving cell and the difference between the beam signal quality of the candidate cell and the beam signal quality of the serving cell is at least greater than or equal to the third preset threshold and the third preset condition is fulfilled; (4) the beam signal quality of the serving cell is greater than the fourth preset threshold and the fourth preset condition is fulfilled; or, the beam signal quality of the serving cell is greater than or equal to the fourth preset threshold and the fourth preset condition is fulfilled; (5) The beam signal quality of the candidate cell is less than the fifth preset threshold and the fifth preset condition is fulfilled; or, the beam signal quality of the candidate cell is less than or equal to the fifth preset threshold and the fifth preset condition is fulfilled.

In the embodiment of this disclosure, the cell management apparatus further includes: a third transmitting unit, configured to transmit a second evaluation condition to the terminal; wherein the second evaluation condition is used by the terminal to determine at least one target candidate cell that does not fulfill the execution condition; wherein, the second evaluation condition includes at least one of the following: (1) the beam signal quality of the serving cell is greater than a sixth preset threshold and the sixth preset condition is fulfilled; (2) the beam signal quality of the candidate cell is less than a seventh preset threshold and the seventh preset condition is fulfilled; (3) the beam signal quality of the candidate cell is better than the beam signal quality of the serving cell and the difference between the beam signal quality of the candidate cell and the beam signal quality of the serving cell is at least less than an eighth preset threshold and the eighth preset condition is fulfilled; (4) the beam signal quality of the serving cell is less than a ninth preset threshold and the ninth preset condition is fulfilled; (5) the beam signal quality of the candidate cell is greater than a tenth preset threshold and the tenth preset condition is fulfilled.

The cell management apparatus further includes a fourth transmitting unit configured to transmit configuration information; wherein the configuration information includes at least one of the following: preset time duration; preset offset value; preset threshold; preset number of beams; preset count; preset probability; count of statistics; or cell measurement configuration information.

In the embodiment of this disclosure, beam signal quality of a cell is the beam signal quality of the serving cell or the beam signal quality of the candidate cell; wherein, the beam signal quality of the cell includes at least one of the following: (1) the signal quality of the beam with the best signal quality contained in the cell; (2) the beam signal quality obtained by filtering the n beams contained in the cell according to a first preset rule; the n beams are the highest-ranked n beams in signal quality; (3) the beam signal quality obtained by filtering the beams contained in the cell whose signal quality is higher than the eleventh preset threshold according to a second preset rule; (4) the beam signal quality obtained by filtering the first number of first beams contained in the cell according to a third preset rule; the first number is less than or equal to m, and the first beam has a signal quality higher than a twelfth preset threshold; (5) a signal quality of any beam of the cell; (6) the beam signal quality obtained by filtering all beams of the cell measured by the terminal according to a seventh preset rule; (7) the signal quality of the beam with the worst signal quality among the second beams contained in the cell; the second beam has a signal quality higher than a thirteenth preset threshold.

Furthermore, the cell management apparatus further includes a first receiving unit, configured to perform at least one of the following: (1) receiving a first indication transmitted by the terminal before accessing the target cell, the first indication being used for indicating information of the target cell and/or target beam; (2) receiving a second indication transmitted by the terminal before accessing the target cell after obtaining a valid TA value of the target cell, the second indication being used for indicating information of the target cell and/or target beam.

The execution condition is configured separately for each cell, or is configured for all cells, or is configured per cell group.

Furthermore, the cell management apparatus further includes a fifth transmitting unit, configured to perform at least one of the following: (1) transmitting network configuration indication to the terminal, the network configuration indication being used for indicating a candidate cell needing to be evaluated; (2) configuring candidate cells to the terminal; or (3) transmitting a candidate cell configuration associated with the at least one execution condition to the terminal.

It should be noted that the apparatus provided in this embodiment can implement all the method steps implemented in the above network device side method embodiment and can achieve the same technical effect. Therefore, the parts and beneficial effects that are the same as those in the method embodiment will not be described in detail here.

It should be noted that the division of units in the embodiments of this disclosure is illustrative and only represents one logical functional division. In actual implementation, other division methods may be used. Furthermore, the functional units in the various embodiments of this disclosure can be integrated into one processing unit, or each unit can exist physically separately, or two or more units can be integrated into one unit. The integrated units described above can be implemented in hardware or as software functional units.

If the integrated unit is implemented as a software functional unit and sold or used as an independent product, it can be stored in a processor-readable storage medium. Based on this understanding, the technical solution of this disclosure, in essence, or the part that contributes to related technologies, or all or part of the technical solution, can be embodied in the form of a software product. This computer software product is stored in a storage medium and includes several instructions to cause a computer device (which may be a personal computer, server, or network device, etc.) or processor to execute all or part of the steps of the methods described in the various embodiments of this disclosure. The aforementioned storage medium includes various media capable of storing program code, such as USB flash drives, portable hard drives, read-only memory (ROM), random access memory (RAM), magnetic disks, or optical discs.

An embodiment of this disclosure further provides a non-transitory readable storage medium storing a computer program for causing a processor to execute the methods described above on the terminal side or network device side.

The non-transitory readable storage medium can be any available medium or data storage device that the processor can access, including but not limited to magnetic memory (such as floppy disks, hard disks, magnetic tapes, magneto-optical disks (MO), etc.), optical memory (such as compact discs (CDs), digital video discs (DVDs), Blu-ray discs (BD), high-definition versatile discs (HVD), etc.), and semiconductor memory (such as ROMs, erasable programmable read-only memory (EPROM), electrically erasable programmable read-only memory (EEPROM), non-volatile memory (NAND (Non-volatile Memory Device) FLASH), solid state drives (SSDs), etc.).

The embodiments of the methods on the terminal side or network device side described above are all applicable to the embodiments of the non-transitory readable storage medium and can achieve the same technical effect.

Those skilled in the art will understand that embodiments of this disclosure can be provided as methods, systems, or computer program products. Therefore, this disclosure can take the form of a completely hardware embodiment, a completely software embodiment, or an embodiment combining software and hardware aspects. Furthermore, this disclosure can take the form of a computer program product embodied on one or more computer-usable storage media (including, but not limited to, disk storage and optical storage) containing computer-usable program code.

This disclosure is described with reference to flowchart illustrations and/or block diagrams of methods, devices (systems), and computer program products according to embodiments of this disclosure. It will be understood that each block of the flowchart illustrations and/or block diagrams, and combinations of blocks in the flowchart illustrations and/or block diagrams, can be implemented by computer-executable instructions. These computer-executable instructions can be provided to a processor of a general-purpose computer, special-purpose computer, embedded processor, or other programmable data processing device to produce a machine, such that the instructions, which are executed by the processor of the computer or other programmable data processing device, create means for implementing the functions specified in one or more flowchart illustrations and/or one or more block diagrams.

These processor-executable instructions may also be stored in a processor-readable memory that can instruct a computer or other programmable data processing device to operate in a particular manner, such that the instructions stored in the processor-readable memory produce an article of manufacture including instruction means that implement the functions specified in one or more flowcharts and/or one or more block diagrams.

These processor-executable instructions can also be loaded onto a computer or other programmable data processing device to cause a series of operational steps to be performed on the computer or other programmable device to produce a computer-implemented process, such that the instructions, which are executed on the computer or other programmable device, provide steps for implementing the functions specified in one or more flowcharts and/or one or more block diagrams.

It should be noted that the above division of modules is merely a logical functional division. In actual implementation, they can be fully or partially integrated into a single physical entity, or they can be physically separated. Furthermore, these modules can be implemented entirely in software via processing element calls; they can be fully implemented in hardware; or some modules can be implemented by processing element calling software, while others are implemented in hardware. For example, a determination module can be a separate processing element, or it can be integrated into a chip in the aforementioned device. Alternatively, it can be stored as program code in the memory of the aforementioned device, and its function can be called and executed by a processing element of the device. The implementation of other modules is similar. Moreover, these modules can be fully or partially integrated together, or they can be implemented independently. The processing element mentioned here can be an integrated circuit with signal processing capabilities. In the implementation process, each step of the above method or each of the above modules can be completed through integrated logic circuits in the hardware of the processor element or through software instructions.

For example, each module, unit, subunit, or submodule can be one or more integrated circuits configured to implement the above methods, such as one or more application-specific integrated circuits (ASICs), one or more digital signal processors (DSPs), or one or more field-programmable gate arrays (FPGAs). As another example, when a module is implemented using processing element scheduler code, the processing element can be a general-purpose processor, such as a central processing unit (CPU) or other processor capable of calling program codes. Furthermore, these modules can be integrated together to implement a system-on-a-chip (SOC).

Terms "first", "second", etc., used in this disclosure and in the claims are used to distinguish similar objects and are not necessarily used to describe a specific order or sequence. It should be understood that such use of data can be interchanged where appropriate so that embodiments of this disclosure described herein may be implemented in orders other than those illustrated or described herein. Furthermore, the terms "including" and "having", and any variations thereof, are intended to cover non-exclusive inclusion; for example, a process, method, system, product, or device that includes a series of steps or units is not necessarily limited to those steps or units explicitly listed, but may include other steps or units not explicitly listed or inherent to such processes, methods, products, or device. Additionally, the use of "and/or" in the specification and claims indicates at least one of the connected objects, for example, A and/or B and/or C indicates seven possibilities: A alone, B alone, C alone, A and B both present, B and C both present, A and C both present, and A, B, and C all present. Similarly, the phrase "at least one of A or B" used in this specification and claims should be understood as "A alone, B alone, or both A and B are present".

Obviously, those skilled in the art can make various modifications and variations to this disclosure without departing from its spirit and scope. Therefore, if such modifications and variations fall within the scope of the claims of this disclosure and their equivalents, this disclosure is also intended to include such modifications and variations.

## Claims

1. A cell management method, performed by a terminal, comprising:
obtaining at least one execution condition;
evaluating whether there is at least one target candidate cell that fulfills the at least one execution condition; and
in a case that there is the at least one target candidate cell that fulfills the at least one execution condition, determining a target cell, and/or determining a target beam of the target cell;
wherein the at least one execution condition is at least one beam-level execution condition configured based on layer 1 measurements.

2. The cell management method according to claim 1, wherein the evaluating whether there is at least one target candidate cell that fulfills the at least one execution condition comprises:
determining that a candidate cell is the target candidate cell that fulfills the execution condition in a case that a first evaluation condition is fulfilled;
wherein the first evaluation condition comprises at least one of the following:
beam signal quality of a serving cell is less than a first preset threshold and a first preset condition is fulfilled; or, the beam signal quality of the serving cell is less than or equal to the first preset threshold and the first preset condition is fulfilled;
beam signal quality of a candidate cell is greater than a second preset threshold and a second preset condition is fulfilled; or, the beam signal quality of the candidate cell is greater than or equal to the second preset threshold and the second preset condition is fulfilled;
the beam signal quality of the candidate cell is better than the beam signal quality of the serving cell and a difference between the beam signal quality of the candidate cell and the beam signal quality of the serving cell is at least greater than a third preset threshold and a third preset condition is fulfilled; or, the beam signal quality of the candidate cell is better than the beam signal quality of the serving cell and the difference between the beam signal quality of the candidate cell and the beam signal quality of the serving cell is at least greater than or equal to the third preset threshold and the third preset condition is fulfilled;
the beam signal quality of the serving cell is greater than a fourth preset threshold and a fourth preset condition is fulfilled; or, the beam signal quality of the serving cell is greater than or equal to the fourth preset threshold and the fourth preset condition is fulfilled; or
the beam signal quality of the candidate cell is less than a fifth preset threshold and a fifth preset condition is fulfilled; or, the beam signal quality of the candidate cell is less than or equal to the fifth preset threshold and the fifth preset condition is fulfilled.

3. The cell management method according to claim 1, wherein the evaluating whether there is at least one target candidate cell that fulfills the at least one execution condition comprises:
determining that a candidate cell does not fulfill the execution condition in a case that a second evaluation condition is fulfilled;
wherein the second evaluation condition comprises at least one of the following:
beam signal quality of a serving cell is greater than a sixth preset threshold and a sixth preset condition is fulfilled;
beam signal quality of a candidate cell is less than a seventh preset threshold and a seventh preset condition is fulfilled;
the beam signal quality of the candidate cell is better than the beam signal quality of the serving cell and a difference between the beam signal quality of the candidate cell and the beam signal quality of the serving cell is at least less than an eighth preset threshold and an eighth preset condition is fulfilled;
the beam signal quality of the serving cell is less than a ninth preset threshold and a ninth preset condition is fulfilled; or
the beam signal quality of the candidate cell is greater than a tenth preset threshold and a tenth preset condition is fulfilled.

4. The cell management method according to any one of claims 1 to 3, further comprising:
obtaining configuration information;
wherein the configuration information comprises at least one of the following:
preset time duration;
preset offset value;
preset threshold;
preset number of beams;
preset count;
preset probability;
count of statistics; or
cell measurement configuration information.

5. The cell management method according to claim 2 or 3, wherein beam signal quality of a cell is the beam signal quality of the serving cell or the beam signal quality of the candidate cell;
the beam signal quality of the cell comprises at least one of the following:
a signal quality of a beam with the best signal quality within a cell;
a beam signal quality resulting from filtering signal qualities of n beams of the cell according to a first preset rule; the n beams are the highest-ranked n beams in signal quality;
a beam signal quality resulting from filtering, according to a second preset rule, signal qualities of beams of the cell that are higher than an eleventh preset threshold;
a beam signal quality resulting from filtering signal qualities of a first number of first beams of the cell according to a third preset rule; the first number is less than or equal to m, and the first beam has a signal quality higher than a twelfth preset threshold;
a signal quality of any beam of the cell;
a beam signal quality resulting from filtering, according to a seventh preset rule, signal qualities of all beams of the cell that are measured by the terminal; or
a signal quality of a beam with the worst signal quality among second beams of the cell; the second beam has a signal quality higher than a thirteenth preset threshold.

6. The cell management method according to claim 2, wherein the determining the target cell comprises:
determining the target cell from the at least one target candidate cell according to a first manner;
wherein the first manner comprises at least one of the following:
selecting the target cell up to the terminal implementation;
selecting a cell where a beam with the highest signal quality is located as the target cell;
selecting a cell with the most beams that fulfill the at least one execution condition as the target cell;
selecting a cell with the highest signal quality resulting from filtering beam signal qualities according to a fourth preset rule as the target cell;
selecting at least one of the target candidate cells as the target cell; or
selecting a cell with the best cell-level measurement result based on Layer 3 measurement as the target cell.

7. The cell management method according to claim 2, wherein the determining the target beam of the target cell comprises:
determining the target beam of the target cell according to a second manner;
wherein the second manner comprises at least one of the following:
selecting a beam with the best signal quality of the target cell as the target beam;
selecting, among beams of the target cell, a beam with the best signal quality as the target beam, wherein a signal quality of a beam is obtained by filtering, according to a fifth preset rule, signal qualities of the beam within a first preset time duration;
selecting, among beams of the target cell, a beam with the best signal quality as the target beam, wherein a signal quality of a beam is obtained by filtering, according to a sixth preset rule, signal qualities of the beam of a first preset count;
selecting, among beams of the target cell, a beam that fulfills the at least one execution condition and is the first to arrive at the terminal as the target beam;
selecting, among beams of the target cell, a target beam up to the terminal implementation;
selecting, among beams of the target cell, a beam that fulfills the at least one execution condition and is associated with a pre-configured uplink resource as the target beam;
selecting, among beams of the target cell, a beam that fulfills the at least one execution condition, is associated with a pre-configured uplink resource and is the first to arrive at the terminal as the target beam; or
selecting, among beams of the target cell, at least one beam that fulfills the at least one execution condition as the target beam.

8. The cell management method according to claim 1, further comprising:
managing the target cell in a third manner;
wherein the third manner comprises at least one of the following:
triggering a random access procedure to the target cell;
transmitting uplink data on a pre-configured uplink resource;
monitoring a physical downlink control channel (PDCCH) in the target cell;
transmitting uplink data on a pre-configured uplink resource in case of a valid timing advance (TA) value of the target cell is obtained;
monitoring a PDCCH according to a target transmission configuration indicator (TCI) or a target beam index in case of a valid TA value of the target cell is obtained;
triggering a random access procedure to the target cell in case of a valid TA value of the target cell is not obtained;
sending first indication to a network device before accessing the target cell, the first indication being used for indicating information of the target cell and/or target beam;
sending second indication to a network device before accessing the target cell in case of a valid TA value of the target cell is obtained, the second indication being used for indicating information of the target cell and/or target beam; or
determining to obtain a TA value of the target cell.

9. The cell management method according to claim 1, wherein the at least one execution condition is configured per cell, or is configured for all cells, or is configured per cell group.

10. The cell management method according to claim 1, wherein the evaluating whether there is at least one target candidate cell that fulfills the at least one execution condition comprises:
determining at least one to-be-evaluated candidate cell;
determining whether there is at least one target candidate cell that fulfills the at least one execution condition in the at least one to-be-evaluated candidate cell;
wherein the to-be-evaluated candidate cell comprises at least one of the following:
candidate cell for which a valid TA value is obtained by the terminal;
candidate cell configured with a pre-configured uplink resource for the terminal to transmit first uplink data;
candidate cell to be evaluated indicated by the network configuration indication;
all candidate cells configured by network; or
all candidate cells associated with the at least one execution condition.

11. The cell management method according to claim 1, wherein the evaluating whether there is at least one target candidate cell that fulfills the at least one execution condition comprises:
evaluating whether there is at least one target candidate cell that fulfills the execution condition according to a fourth manner;
wherein the fourth manner comprises at least one of the following:
media access control (MAC) entity of the terminal performs the evaluation based on information reported by physical layer of the terminal;
the physical layer of the terminal performs the evaluation; or
radio resource control (RRC) layer of the terminal performs the evaluation based on information reported by lower layer of the terminal.

12. A cell management method, performed by a network device, comprising:
sending at least one execution condition;
wherein the at least one execution condition is at least one beam-level execution condition configured based on layer 1 measurements.

13. The cell management method according to claim 12, further comprising:
transmitting a first evaluation condition to a terminal; wherein the first evaluation condition is used by the terminal to determine at least one target candidate cell that fulfills the execution condition;
wherein the first evaluation condition comprises at least one of the following:
beam signal quality of a serving cell is less than a first preset threshold and a first preset condition is fulfilled; or, the beam signal quality of the serving cell is less than or equal to the first preset threshold and the first preset condition is fulfilled;
beam signal quality of a candidate cell is greater than a second preset threshold and a second preset condition is fulfilled; or, the beam signal quality of the candidate cell is greater than or equal to the second preset threshold and the second preset condition is fulfilled;
the beam signal quality of the candidate cell is better than the beam signal quality of the serving cell and a difference between the beam signal quality of the candidate cell and the beam signal quality of the serving cell is at least greater than a third preset threshold and a third preset condition is fulfilled; or, the beam signal quality of the candidate cell is better than the beam signal quality of the serving cell and the difference between the beam signal quality of the candidate cell and the beam signal quality of the serving cell is at least greater than or equal to the third preset threshold and the third preset condition is fulfilled;
the beam signal quality of the serving cell is greater than a fourth preset threshold and a fourth preset condition is fulfilled; or, the beam signal quality of the serving cell is greater than or equal to the fourth preset threshold and the fourth preset condition is fulfilled; or
the beam signal quality of the candidate cell is less than a fifth preset threshold and a fifth preset condition is fulfilled; or, the beam signal quality of the candidate cell is less than or equal to the fifth preset threshold and the fifth preset condition is fulfilled.

14. The cell management method according to claim 12, further comprising:
transmitting a second evaluation condition to a terminal; wherein the second evaluation condition is used by the terminal to determine at least one target candidate cell that does not fulfill the execution condition;
wherein the second evaluation condition comprises at least one of the following:
beam signal quality of a serving cell is greater than a sixth preset threshold and a sixth preset condition is fulfilled;
beam signal quality of a candidate cell is less than a seventh preset threshold and a seventh preset condition is fulfilled;
the beam signal quality of the candidate cell is better than the beam signal quality of the serving cell and a difference between the beam signal quality of the candidate cell and the beam signal quality of the serving cell is at least less than an eighth preset threshold and an eighth preset condition is fulfilled;
the beam signal quality of the serving cell is less than a ninth preset threshold and a ninth preset condition is fulfilled; or
the beam signal quality of the candidate cell is greater than a tenth preset threshold and a tenth preset condition is fulfilled.

15. The cell management method according to any one of claims 12 to 14, further comprising:
transmitting configuration information;
wherein the configuration information comprises at least one of the following:
preset time duration;
preset offset value;
preset threshold;
preset number of beams;
preset count;
preset probability;
count of statistics; or
cell measurement configuration information.

16. The cell management method according to claim 13 or 14, wherein beam signal quality of a cell is the beam signal quality of the serving cell or the beam signal quality of the candidate cell;
the beam signal quality of the cell comprises at least one of the following:
a signal quality of a beam with the best signal quality within a cell;
a beam signal quality resulting from filtering signal qualities of n beams of the cell according to a first preset rule; the n beams are the highest-ranked n beams in signal quality;
a beam signal quality resulting from filtering, according to a second preset rule, signal qualities of beams of the cell that are higher than an eleventh preset threshold;
a beam signal quality resulting from filtering signal qualities of a first number of first beams of the cell according to a third preset rule; the first number is less than or equal to m, and the first beam has a signal quality higher than a twelfth preset threshold;
a signal quality of any beam of the cell;
a beam signal quality resulting from filtering, according to a seventh preset rule, signal qualities of all beams of the cell that are measured by the terminal; or
a signal quality of a beam with the worst signal quality among second beams of the cell; the second beam has a signal quality higher than a thirteenth preset threshold.

17. The cell management method according to claim 12, further comprising at least one of the following:
receiving first indication transmitted by a terminal before accessing a target cell, the first indication being used for indicating information of the target cell and/or target beam; or
receiving second indication transmitted by a terminal before accessing a target cell in case of a valid TA value of the target cell is obtained by the terminal, the second indication being used for indicating information of the target cell and/or target beam.

18. The cell management method according to claim 12, wherein the at least one execution condition is configured per cell, or is configured for all cells, or is configured per cell group.

19. The cell management method according to claim 12, further comprising at least one of the following:
transmitting network configuration indication to a terminal, the network configuration indication being used for indicating a candidate cell needing to be evaluated;
configuring candidate cells for the terminal; or
transmitting a candidate cell configuration associated with the at least one execution condition to the terminal.

20. A cell management device, wherein the cell management device is a terminal, and comprises a memory, a transceiver, and a processor;
the memory is used for storing a computer program; the transceiver is used for transmitting and receiving data under the control of the processor; and the processor is used for reading the computer program from the memory and performing the following steps:
obtaining at least one execution condition;
evaluating whether there is at least one target candidate cell that fulfills the at least one execution condition; and
in a case that there is the at least one target candidate cell that fulfills the at least one execution condition, determining a target cell, and/or determining a target beam of the target cell;
wherein the at least one execution condition is at least one beam-level execution condition configured based on layer 1 measurements.

21. The cell management device according to claim 20, wherein the evaluating whether there is at least one target candidate cell that fulfills the at least one execution condition comprises:
determining that a candidate cell is the target candidate cell that fulfills the execution condition in a case that a first evaluation condition is fulfilled;
wherein the first evaluation condition comprises at least one of the following:
beam signal quality of a serving cell is less than a first preset threshold and a first preset condition is fulfilled; or, the beam signal quality of the serving cell is less than or equal to the first preset threshold and the first preset condition is fulfilled;
beam signal quality of a candidate cell is greater than a second preset threshold and a second preset condition is fulfilled; or, the beam signal quality of the candidate cell is greater than or equal to the second preset threshold and the second preset condition is fulfilled;
the beam signal quality of the candidate cell is better than the beam signal quality of the serving cell and a difference between the beam signal quality of the candidate cell and the beam signal quality of the serving cell is at least greater than a third preset threshold and a third preset condition is fulfilled; or, the beam signal quality of the candidate cell is better than the beam signal quality of the serving cell and the difference between the beam signal quality of the candidate cell and the beam signal quality of the serving cell is at least greater than or equal to the third preset threshold and the third preset condition is fulfilled;
the beam signal quality of the serving cell is greater than a fourth preset threshold and a fourth preset condition is fulfilled; or, the beam signal quality of the serving cell is greater than or equal to the fourth preset threshold and the fourth preset condition is fulfilled; or
the beam signal quality of the candidate cell is less than a fifth preset threshold and a fifth preset condition is fulfilled; or, the beam signal quality of the candidate cell is less than or equal to the fifth preset threshold and the fifth preset condition is fulfilled.

22. The cell management device according to claim 20, wherein the evaluating whether there is at least one target candidate cell that fulfills the at least one execution condition comprises:
determining that a candidate cell does not fulfill the execution condition in a case that a second evaluation condition is fulfilled;
wherein the second evaluation condition comprises at least one of the following:
beam signal quality of a serving cell is greater than a sixth preset threshold and a sixth preset condition is fulfilled;
beam signal quality of a candidate cell is less than a seventh preset threshold and a seventh preset condition is fulfilled;
the beam signal quality of the candidate cell is better than the beam signal quality of the serving cell and a difference between the beam signal quality of the candidate cell and the beam signal quality of the serving cell is at least less than an eighth preset threshold and an eighth preset condition is fulfilled;
the beam signal quality of the serving cell is less than a ninth preset threshold and a ninth preset condition is fulfilled; or
the beam signal quality of the candidate cell is greater than a tenth preset threshold and a tenth preset condition is fulfilled.

23. The cell management device according to any one of claims 20 to 22, wherein the steps further comprise:
obtaining configuration information;
wherein the configuration information comprises at least one of the following:
preset time duration;
preset offset value;
preset threshold;
preset number of beams;
preset count;
preset probability;
count of statistics; or
cell measurement configuration information.

24. The cell management device according to claim 21 or 22, wherein beam signal quality of a cell is the beam signal quality of the serving cell or the beam signal quality of the candidate cell;
the beam signal quality of the cell comprises at least one of the following:
a signal quality of a beam with the best signal quality within a cell;
a beam signal quality resulting from filtering signal qualities of n beams of the cell according to a first preset rule; the n beams are the highest-ranked n beams in signal quality;
a beam signal quality resulting from filtering, according to a second preset rule, signal qualities of beams of the cell that are higher than an eleventh preset threshold;
a beam signal quality resulting from filtering signal qualities of a first number of first beams of the cell according to a third preset rule; the first number is less than or equal to m, and the first beam has a signal quality higher than a twelfth preset threshold;
a signal quality of any beam of the cell;
a beam signal quality resulting from filtering, according to a seventh preset rule, signal qualities of all beams of the cell that are measured by the terminal; or
a signal quality of a beam with the worst signal quality among second beams of the cell; the second beam has a signal quality higher than a thirteenth preset threshold.

25. The cell management device according to claim 21, wherein the determining the target cell comprises:
determining the target cell from the at least one target candidate cell according to a first manner;
wherein the first manner comprises at least one of the following:
selecting the target cell up to the terminal implementation;
selecting a cell where a beam with the highest signal quality is located as the target cell;
selecting a cell with the most beams that fulfill the at least one execution condition as the target cell;
selecting a cell with the highest signal quality resulting from filtering beam signal qualities according to a fourth preset rule as the target cell;
selecting at least one of the target candidate cells as the target cell; or
selecting a cell with the best cell-level measurement result based on Layer 3 measurement as the target cell.

26. The cell management device according to claim 21, wherein the determining the target beam of the target cell comprises:
determining the target beam of the target cell according to a second manner;
wherein the second manner comprises at least one of the following:
selecting a beam with the best signal quality of the target cell as the target beam;
selecting, among beams of the target cell, a beam with the best signal quality as the target beam, wherein a signal quality of a beam is obtained by filtering, according to a fifth preset rule, signal qualities of the beam within a first preset time duration;
selecting, among beams of the target cell, a beam with the best signal quality as the target beam, wherein a signal quality of a beam is obtained by filtering, according to a sixth preset rule, signal qualities of the beam of a first preset count;
selecting, among beams of the target cell, a beam that fulfills the at least one execution condition and is the first to arrive at the terminal as the target beam;
selecting, among beams of the target cell, a target beam up to the terminal implementation;
selecting, among beams of the target cell, a beam that fulfills the at least one execution condition and is associated with a pre-configured uplink resource as the target beam;
selecting, among beams of the target cell, a beam that fulfills the at least one execution condition, is associated with a pre-configured uplink resource and is the first to arrive at the terminal as the target beam; or
selecting, among beams of the target cell, at least one beam that fulfills the at least one execution condition as the target beam.

27. The cell management device according to claim 20, wherein the steps further comprise:
managing the target cell in a third manner;
wherein the third manner comprises at least one of the following:
triggering a random access procedure to the target cell;
transmitting uplink data on a pre-configured uplink resource via the transceiver;
monitoring a physical downlink control channel (PDCCH) in the target cell;
transmitting uplink data on a pre-configured uplink resource via the transceiver in case of a valid timing advance (TA) value of the target cell is obtained;
monitoring a PDCCH according to a target transmission configuration indicator (TCI) or a target beam index in case of a valid TA value of the target cell is obtained;
triggering a random access procedure to the target cell in case of a valid TA value of the target cell is not obtained;
sending first indication to a network device via the transceiver before accessing the target cell, the first indication being used for indicating information of the target cell and/or target beam;
sending second indication to a network device via the transceiver before accessing the target cell in case of a valid TA value of the target cell is obtained, the second indication being used for indicating information of the target cell and/or target beam; or
determining to obtain a TA value of the target cell.

28. The cell management device according to claim 20, wherein the at least one execution condition is configured per cell, or is configured for all cells, or is configured per cell group.

29. The cell management device according to claim 20, wherein the evaluating whether there is at least one target candidate cell that fulfills the at least one execution condition comprises:
determining at least one to-be-evaluated candidate cell;
determining whether there is at least one target candidate cell that fulfills the at least one execution condition in the at least one to-be-evaluated candidate cell;
wherein the to-be-evaluated candidate cell comprises at least one of the following:
candidate cell for which a valid TA value is obtained by the terminal;
candidate cell configured with a pre-configured uplink resource for the terminal to transmit first uplink data;
candidate cell to be evaluated indicated by the network configuration indication;
all candidate cells configured by network; or
all candidate cells associated with the at least one execution condition.

30. The cell management device according to claim 20, wherein the evaluating whether there is at least one target candidate cell that fulfills the at least one execution condition comprises:
evaluating whether there is at least one target candidate cell that fulfills the execution condition according to a fourth manner;
wherein the fourth manner comprises at least one of the following:
media access control (MAC) entity of the terminal performs the evaluation based on information reported by physical layer of the terminal;
the physical layer of the terminal performs the evaluation; or
radio resource control (RRC) layer of the terminal performs the evaluation based on information reported by lower layer of the terminal.

31. A cell management device, wherein the cell management device is a network device, and comprises a memory, a transceiver, and a processor;
the memory is used for storing a computer program; the transceiver is used for transmitting and receiving data under the control of the processor; and the processor is used for reading the computer program from the memory and performing the following step:
sending at least one execution condition via the transceiver;
wherein the at least one execution condition is at least one beam-level execution condition configured based on layer 1 measurements.

32. The cell management device according to claim 31, wherein the step further comprises:
transmitting a first evaluation condition to a terminal via the transceiver; wherein the first evaluation condition is used by the terminal to determine at least one target candidate cell that fulfills the execution condition;
wherein the first evaluation condition comprises at least one of the following:
beam signal quality of a serving cell is less than a first preset threshold and a first preset condition is fulfilled; or, the beam signal quality of the serving cell is less than or equal to the first preset threshold and the first preset condition is fulfilled;
beam signal quality of a candidate cell is greater than a second preset threshold and a second preset condition is fulfilled; or, the beam signal quality of the candidate cell is greater than or equal to the second preset threshold and the second preset condition is fulfilled;
the beam signal quality of the candidate cell is better than the beam signal quality of the serving cell and a difference between the beam signal quality of the candidate cell and the beam signal quality of the serving cell is at least greater than a third preset threshold and a third preset condition is fulfilled; or, the beam signal quality of the candidate cell is better than the beam signal quality of the serving cell and the difference between the beam signal quality of the candidate cell and the beam signal quality of the serving cell is at least greater than or equal to the third preset threshold and the third preset condition is fulfilled;
the beam signal quality of the serving cell is greater than a fourth preset threshold and a fourth preset condition is fulfilled; or, the beam signal quality of the serving cell is greater than or equal to the fourth preset threshold and the fourth preset condition is fulfilled; or
the beam signal quality of the candidate cell is less than a fifth preset threshold and a fifth preset condition is fulfilled; or, the beam signal quality of the candidate cell is less than or equal to the fifth preset threshold and the fifth preset condition is fulfilled.

33. The cell management device according to claim 31, wherein the step further comprises:
transmitting a second evaluation condition to a terminal via the transceiver; wherein the second evaluation condition is used by the terminal to determine at least one target candidate cell that does not fulfill the execution condition;
wherein the second evaluation condition comprises at least one of the following:
beam signal quality of a serving cell is greater than a sixth preset threshold and a sixth preset condition is fulfilled;
beam signal quality of a candidate cell is less than a seventh preset threshold and a seventh preset condition is fulfilled;
the beam signal quality of the candidate cell is better than the beam signal quality of the serving cell and a difference between the beam signal quality of the candidate cell and the beam signal quality of the serving cell is at least less than an eighth preset threshold and an eighth preset condition is fulfilled;
the beam signal quality of the serving cell is less than a ninth preset threshold and a ninth preset condition is fulfilled; or
the beam signal quality of the candidate cell is greater than a tenth preset threshold and a tenth preset condition is fulfilled.

34. The cell management device according to any one of claims 31 to 33, wherein the step further comprises:
transmitting configuration information via the transceiver;
wherein the configuration information comprises at least one of the following:
preset time duration;
preset offset value;
preset threshold;
preset number of beams;
preset count;
preset probability;
count of statistics; or
cell measurement configuration information.

35. The cell management device according to claim 32 or 33, wherein beam signal quality of a cell is the beam signal quality of the serving cell or the beam signal quality of the candidate cell;
the beam signal quality of the cell comprises at least one of the following:
a signal quality of a beam with the best signal quality within a cell;
a beam signal quality resulting from filtering signal qualities of n beams of the cell according to a first preset rule; the n beams are the highest-ranked n beams in signal quality;
a beam signal quality resulting from filtering, according to a second preset rule, signal qualities of beams of the cell that are higher than an eleventh preset threshold;
a beam signal quality resulting from filtering signal qualities of a first number of first beams of the cell according to a third preset rule; the first number is less than or equal to m, and the first beam has a signal quality higher than a twelfth preset threshold;
a signal quality of any beam of the cell;
a beam signal quality resulting from filtering, according to a seventh preset rule, signal qualities of all beams of the cell that are measured by the terminal; or
a signal quality of a beam with the worst signal quality among second beams of the cell; the second beam has a signal quality higher than a thirteenth preset threshold.

36. The cell management device according to claim 31, wherein the step further comprises at least one of the following:
receiving, via the transceiver, first indication transmitted by a terminal before accessing a target cell, the first indication being used for indicating information of the target cell and/or target beam; or
receiving, via the transceiver, second indication transmitted by a terminal before accessing a target cell in case of a valid TA value of the target cell is obtained by the terminal, the second indication being used for indicating target cell and/or target beam cell and/or target beam information.

37. The cell management device according to claim 31, wherein the at least one execution condition is configured per cell, or is configured for all cells, or is configured per cell group.

38. The cell management device according to claim 31, wherein the step further comprises at least one of the following:
transmitting network configuration indication to a terminal via the transceiver, the network configuration indication being used for indicating a candidate cell needing to be evaluated;
configuring candidate cells for the terminal via the transceiver; or
transmitting a candidate cell configuration associated with the at least one execution condition to the terminal via the transceiver.

39. A cell management apparatus, applied to a terminal, comprising:
a first obtaining unit, configured to obtain at least one execution condition;
a first processing unit, configured to evaluate whether there is at least one target candidate cell that fulfills the at least one execution condition;
a first determining unit, configured to, in a case that there is the at least one target candidate cell that fulfills the at least one execution condition, determine a target cell, and/or determine a target beam of the target cell;
wherein the at least one execution condition is at least one beam-level execution condition configured based on layer 1 measurements.

40. The cell management apparatus according to claim 39, wherein it is determined that a candidate cell is the target candidate cell that fulfills the at least one execution condition in a case that a first evaluation condition is fulfilled;
wherein the first evaluation condition comprises at least one of the following:
beam signal quality of a serving cell is less than a first preset threshold and a first preset condition is fulfilled; or, the beam signal quality of the serving cell is less than or equal to the first preset threshold and the first preset condition is fulfilled;
beam signal quality of a candidate cell is greater than a second preset threshold and a second preset condition is fulfilled; or, the beam signal quality of the candidate cell is greater than or equal to the second preset threshold and the second preset condition is fulfilled;
the beam signal quality of the candidate cell is better than the beam signal quality of the serving cell and a difference between the beam signal quality of the candidate cell and the beam signal quality of the serving cell is at least greater than a third preset threshold and a third preset condition is fulfilled; or, the beam signal quality of the candidate cell is better than the beam signal quality of the serving cell and the difference between the beam signal quality of the candidate cell and the beam signal quality of the serving cell is at least greater than or equal to the third preset threshold and the third preset condition is fulfilled;
the beam signal quality of the serving cell is greater than a fourth preset threshold and a fourth preset condition is fulfilled; or, the beam signal quality of the serving cell is greater than or equal to the fourth preset threshold and the fourth preset condition is fulfilled; or
the beam signal quality of the candidate cell is less than a fifth preset threshold and a fifth preset condition is fulfilled; or, the beam signal quality of the candidate cell is less than or equal to the fifth preset threshold and the fifth preset condition is fulfilled.

41. The cell management apparatus according to claim 39, wherein it is determined that a candidate cell does not fulfill the at least one execution condition in a case that a second evaluation condition is fulfilled;
wherein the second evaluation condition comprises at least one of the following:
beam signal quality of a serving cell is greater than a sixth preset threshold and a sixth preset condition is fulfilled;
beam signal quality of a candidate cell is less than a seventh preset threshold and a seventh preset condition is fulfilled;
the beam signal quality of the candidate cell is better than the beam signal quality of the serving cell and a difference between the beam signal quality of the candidate cell and the beam signal quality of the serving cell is at least less than an eighth preset threshold and an eighth preset condition is fulfilled;
the beam signal quality of the serving cell is less than a ninth preset threshold and a ninth preset condition is fulfilled; or
the beam signal quality of the candidate cell is greater than a tenth preset threshold and a tenth preset condition is fulfilled.

42. The cell management apparatus according to any one of claims 39 to 41, further comprising: a second obtaining unit, configured to obtain configuration information; wherein the configuration information comprises at least one of the following: preset time duration; preset offset value; preset threshold; preset number of beams; preset count; preset probability; count of statistics; or cell measurement configuration information.

43. The cell management apparatus according to claim 40 or 41, wherein beam signal quality of a cell is the beam signal quality of the serving cell or the beam signal quality of the candidate cell;
the beam signal quality of the cell comprises at least one of the following:
a signal quality of a beam with the best signal quality within a cell;
a beam signal quality resulting from filtering signal qualities of n beams of the cell according to a first preset rule; the n beams are the highest-ranked n beams in signal quality;
a beam signal quality resulting from filtering, according to a second preset rule, signal qualities of beams of the cell that are higher than an eleventh preset threshold;
a beam signal quality resulting from filtering signal qualities of a first number of first beams of the cell according to a third preset rule; the first number is less than or equal to m, and the first beam has a signal quality higher than a twelfth preset threshold;
a signal quality of any beam of the cell;
a beam signal quality resulting from filtering, according to a seventh preset rule, signal qualities of all beams of the cell that are measured by the terminal; or
a signal quality of a beam with the worst signal quality among second beams of the cell; the second beam has a signal quality higher than a thirteenth preset threshold.

44. The cell management apparatus according to claim 40, wherein the determining the target cell comprises:
determining the target cell from the at least one target candidate cell according to a first manner;
wherein the first manner comprises at least one of the following:
selecting the target cell up to the terminal implementation;
selecting a cell where a beam with the highest signal quality is located as the target cell;
selecting a cell with the most beams that fulfill the at least one execution condition as the target cell;
selecting a cell with the highest signal quality resulting from filtering beam signal qualities according to a fourth preset rule as the target cell;
selecting at least one of the target candidate cells as the target cell; or
selecting a cell with the best cell-level measurement result based on Layer 3 measurement as the target cell.

45. The cell management apparatus according to claim 40, wherein the determining the target beam of the target cell comprises:
determining the target beam of the target cell according to a second manner;
wherein the second manner comprises at least one of the following:
selecting a beam with the best signal quality of the target cell as the target beam;
selecting, among beams of the target cell, a beam with the best signal quality as the target beam, wherein a signal quality of a beam is obtained by filtering, according to a fifth preset rule, signal qualities of the beam within a first preset time duration;
selecting, among beams of the target cell, a beam with the best signal quality as the target beam, wherein a signal quality of a beam is obtained by filtering, according to a sixth preset rule, signal qualities of the beam of a first preset count;
selecting, among beams of the target cell, a beam that fulfills the at least one execution condition and is the first to arrive at the terminal as the target beam;
selecting, among beams of the target cell, a target beam up to the terminal implementation;
selecting, among beams of the target cell, a beam that fulfills the at least one execution condition and is associated with a pre-configured uplink resource as the target beam;
selecting, among beams of the target cell, a beam that fulfills the at least one execution condition, is associated with a pre-configured uplink resource and is the first to arrive at the terminal as the target beam; or
selecting, among beams of the target cell, at least one beam that fulfills the at least one execution condition as the target beam.

46. The cell management apparatus according to claim 39, further comprising: a second processing unit, configured to manage the target cell in a third manner;
wherein the third manner comprises at least one of the following:
triggering a random access procedure to the target cell;
transmitting uplink data on a pre-configured uplink resource;
monitoring a physical downlink control channel (PDCCH) in the target cell;
transmitting uplink data on a pre-configured uplink resource in case of a valid timing advance (TA) value of the target cell is obtained;
monitoring a PDCCH according to a target transmission configuration indicator (TCI) or a target beam index in case of a valid TA value of the target cell is obtained;
triggering a random access procedure to the target cell in case of a valid TA value of the target cell is not obtained;
sending first indication to a network device before accessing the target cell, the first indication being used for indicating information of the target cell and/or target beam;
sending second indication to a network device before accessing the target cell in case of a valid TA value of the target cell is obtained, the second indication being used for indicating information of the target cell and/or target beam; or
determining to obtain a TA value of the target cell.

47. The cell management apparatus according to claim 39, wherein the at least one execution condition is configured per cell, or is configured for all cells, or is configured per cell group.

48. The cell management apparatus according to claim 39, wherein the evaluating whether there is at least one target candidate cell that fulfills the at least one execution condition comprises:
determining at least one to-be-evaluated candidate cell;
determining whether there is at least one target candidate cell that fulfills the at least one execution condition in the at least one to-be-evaluated candidate cell;
wherein the to-be-evaluated candidate cell comprises at least one of the following:
candidate cell for which a valid TA value is obtained by the terminal;
candidate cell configured with a pre-configured uplink resource for the terminal to transmit first uplink data;
candidate cell to be evaluated indicated by the network configuration indication;
all candidate cells configured by network; or
all candidate cells associated with the at least one execution condition.

49. The cell management apparatus according to claim 39, wherein the evaluating whether there is at least one target candidate cell that fulfills the at least one execution condition comprises:
evaluating whether there is at least one target candidate cell that fulfills the execution condition according to a fourth manner;
wherein the fourth manner comprises at least one of the following:
media access control (MAC) entity of the terminal performs the evaluation based on information reported by physical layer of the terminal;
the physical layer of the terminal performs the evaluation; or
radio resource control (RRC) layer of the terminal performs the evaluation based on information reported by lower layer of the terminal.

50. A cell management apparatus, applied to a network device, comprising:
a first transmitting unit, configured to send at least one execution condition;
wherein the at least one execution condition is at least one beam-level execution condition configured based on layer 1 measurements.

51. The cell management apparatus according to claim 50, further comprising: a second transmitting unit, configured to transmit a first evaluation condition to a terminal; the first evaluation condition being used by the terminal to determine at least one target candidate cell that fulfills the execution condition;
wherein the first evaluation condition comprises at least one of the following:
beam signal quality of a serving cell is less than a first preset threshold and a first preset condition is fulfilled; or, the beam signal quality of the serving cell is less than or equal to the first preset threshold and the first preset condition is fulfilled;
beam signal quality of a candidate cell is greater than a second preset threshold and a second preset condition is fulfilled; or, the beam signal quality of the candidate cell is greater than or equal to the second preset threshold and the second preset condition is fulfilled;
the beam signal quality of the candidate cell is better than the beam signal quality of the serving cell and a difference between the beam signal quality of the candidate cell and the beam signal quality of the serving cell is at least greater than a third preset threshold and a third preset condition is fulfilled; or, the beam signal quality of the candidate cell is better than the beam signal quality of the serving cell and the difference between the beam signal quality of the candidate cell and the beam signal quality of the serving cell is at least greater than or equal to the third preset threshold and the third preset condition is fulfilled;
the beam signal quality of the serving cell is greater than a fourth preset threshold and a fourth preset condition is fulfilled; or, the beam signal quality of the serving cell is greater than or equal to the fourth preset threshold and the fourth preset condition is fulfilled; or
the beam signal quality of the candidate cell is less than a fifth preset threshold and a fifth preset condition is fulfilled; or, the beam signal quality of the candidate cell is less than or equal to the fifth preset threshold and the fifth preset condition is fulfilled.

52. The cell management apparatus according to claim 50, further comprising: a third transmitting unit, configured to transmit a second evaluation condition to a terminal; the second evaluation condition being used by the terminal to determine at least one target candidate cell that does not fulfill the execution condition;
wherein the second evaluation condition comprises at least one of the following:
beam signal quality of a serving cell is greater than a sixth preset threshold and a sixth preset condition is fulfilled;
beam signal quality of a candidate cell is less than a seventh preset threshold and a seventh preset condition is fulfilled;
the beam signal quality of the candidate cell is better than the beam signal quality of the serving cell and a difference between the beam signal quality of the candidate cell and the beam signal quality of the serving cell is at least less than an eighth preset threshold and an eighth preset condition is fulfilled;
the beam signal quality of the serving cell is less than a ninth preset threshold and a ninth preset condition is fulfilled; or
the beam signal quality of the candidate cell is greater than a tenth preset threshold and a tenth preset condition is fulfilled.

53. The cell management apparatus according to any one of claims 50 to 52, further comprising: a fourth transmitting unit, configured to transmit configuration information;
wherein the configuration information comprises at least one of the following:
preset time duration;
preset offset value;
preset threshold;
preset number of beams;
preset count;
preset probability;
count of statistics; or
cell measurement configuration information.

54. The cell management apparatus according to claim 51 or 52, wherein beam signal quality of a cell is the beam signal quality of the serving cell or the beam signal quality of the candidate cell;
the beam signal quality of the cell comprises at least one of the following:
a signal quality of a beam with the best signal quality within a cell;
a beam signal quality resulting from filtering signal qualities of n beams of the cell according to a first preset rule; the n beams are the highest-ranked n beams in signal quality;
a beam signal quality resulting from filtering, according to a second preset rule, signal qualities of beams of the cell that are higher than an eleventh preset threshold;
a beam signal quality resulting from filtering signal qualities of a first number of first beams of the cell according to a third preset rule; the first number is less than or equal to m, and the first beam has a signal quality higher than a twelfth preset threshold;
a signal quality of any beam of the cell;
a beam signal quality resulting from filtering, according to a seventh preset rule, signal qualities of all beams of the cell that are measured by the terminal; or
a signal quality of a beam with the worst signal quality among second beams of the cell; the second beam has a signal quality higher than a thirteenth preset threshold.

55. The cell management apparatus according to claim 50, further comprising: a first receiving unit, configured to perform at least one of the following:
receiving first indication transmitted by a terminal before accessing a target cell, the first indication being used for indicating information of the target cell and/or target beam; or
receiving second indication transmitted by a terminal before accessing a target cell in case of a valid TA value of the target cell is obtained by the terminal, the second indication being used for indicating information of the target cell and/or target beam.

56. The cell management apparatus according to claim 50, wherein the at least one execution condition is configured per cell, or is configured for all cells, or is configured per cell group.

57. The cell management apparatus according to claim 50, further comprising: a fifth transmitting unit, configured to perform at least one of the following:
transmitting network configuration indication to a terminal, the network configuration indication being used for indicating a candidate cell needing to be evaluated;
configuring candidate cells for the terminal; or
transmitting a candidate cell configuration associated with the at least one execution condition to the terminal.

58. A non-transitory readable storage medium, wherein the non-transitory readable storage medium stores a computer program for causing a processor to perform the method according to any one of claims 1 to 19.
